# EUROPEAN PATENT SPECIFICATION

(11) **EP 4 462 756 B1**
(45) Date of publication and mention of the grant of the patent: **09.09.2026**
(21) Application number: 22925696.1
(22) Date of filing: 24.11.2022
(51) Int. Cl.: H04L 67/56, H04L 45/24, H04L 65/40, H04W 76/15, H04L 67/141, H04L 67/562, H04L 69/14, H04L 65/1069

(54) **COMMUNICATION METHOD, COMMUNICATION APPARATUS AND COMMUNICATION SYSTEM**
KOMMUNIKATIONSVERFAHREN, KOMMUNIKATIONSVORRICHTUNG UND KOMMUNIKATIONSSYSTEM
PROCÉDÉ DE COMMUNICATION, APPAREIL DE COMMUNICATION ET SYSTÈME DE COMMUNICATION

(30) Priority: 08.02.2022 CN 202210119427; 16.06.2022 CN 202210689595
(43) Date of publication of application: 13.11.2024
(73) Proprietor: Huawei Technologies Co., Ltd., Shenzhen, Guangdong 518129 (CN)
(72) Inventor: WANG, Yaxin, Shenzhen, Guangdong 518129 (CN); LI, Yan, Shenzhen, Guangdong 518129 (CN)
(74) Representative: Körber, Martin Hans
(86) International application number: PCT/CN2022/134068
(87) International publication number: WO 2023/151345

(56) References cited:
- CN-A- 103 297 309
- US-A1- 2019 327 735
- US-A1- 2021 258 111
- US-A1- 2021 345 181
- "3rd Generation Partnership Project; Technical Specification Group Services and System Aspects; Study on SEAL data delivery enabler for vertical applications; (Release 18)", no. V0.2.0, 15 December 2021 (2021-12-15), pages 1 - 13, XP052083124, Retrieved from the Internet <URL:https://ftp.3gpp.org/Specs/archive/23_series/23.700-34/23700-34-020.zip 23700-34-020-rm.doc> [retrieved on 20211215]
- "3rd Generation Partnership Project; Technical Specification Group Services and System Aspects; Study on SEAL data delivery enabler for vertical applications; (Release 18)", 3GPP STANDARD; TECHNICAL REPORT; 3GPP TR 23.700-34, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.6.0, 4 July 2022 (2022-07-04), Mobile Competence Centre ; 650, route des Lucioles ; F-06921 Sophia-Antipolis Cedex ; France, pages 1 - 34, XP052183609

## Description

### TECHNICAL FIELD

Embodiments of this application relate to the field of communication technologies, and in particular, to a communication method, and a communication apparatus.

### BACKGROUND

With development of communication technologies, an amount of data that needs to be exchanged between a terminal device and the outside increases, and a user has an increasingly high requirement on service experience when accessing an application. Therefore, a problem of how to ensure correctness and reliability of data transmission needs to be resolved, so as to improve user experience.

Document "3rd Generation Partnership Project; Technical Specification Group Services and System Aspects; Study on SEAL data delivery enabler for vertical applications; (Release 18)", 3GPP STANDARD; TECHNICAL REPORT; 3GPP TR 23.700-34, 3RD GENERATION PARTNERSHIP PROJECT (3GPP), MOBILE COMPETENCE CENTRE; FRANCE, no. V0.2.0, pages 1-13, discloses the application enabling layer platform architecture, capabilities and services to efficiently support distribution, storage and delivery for the application content/data for vertical applications.

### SUMMARY

Embodiments of this application provide a communication method, and a communication apparatus, to ensure correctness and reliability of data transmission, so as to improve user experience. The invention is defined in the appended claims. In the following, parts of the description and drawings referring to embodiments which are not covered by the claims are not embodiments of the invention, but are examples useful for understanding the invention.

### BRIEF DESCRIPTION OF DRAWINGS

FIG. 1 is a schematic diagram of a 5G network architecture based on a service-based architecture;
FIG. 2 is a schematic diagram of an end-to-end redundant transmission architecture;
FIG. 3 is a schematic diagram of a service architecture of SEALDD;
FIG. 4 is a schematic diagram of interfaces in a service architecture of SEALDD;
FIG. 5 is a schematic diagram of a SEALDD service-based end-to-end redundant transmission architecture according to an embodiment of this application;
FIG. 6(a) is a schematic flowchart of a communication method according to an embodiment of this application;
FIG. 6(b) is a schematic flowchart of a communication method according to an embodiment of this application;
FIG. 6(c) is a schematic flowchart of a communication method according to an embodiment of this application;
FIG. 6(d) is a schematic flowchart of a communication method according to an embodiment of this application;
FIG. 6(e) is a schematic flowchart of a communication method according to an embodiment of this application;
FIG. 6(f) is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9A and FIG. 9B are a schematic flowchart of a communication method according to an embodiment of this application;
FIG. 10A and FIG. 10B are a schematic flowchart of a communication method according to an embodiment of this application;
FIG. 11 is a schematic flowchart of a communication method according to an embodiment of this application;
FIG. 12 is a schematic flowchart of a communication method according to an embodiment of this application;
FIG. 13A and FIG. 13B are a schematic flowchart of a communication method according to an embodiment of this application;
FIG. 14A and FIG. 14B are a schematic flowchart of a communication method according to an embodiment of this application;
FIG. 15 is a schematic diagram of a communication apparatus according to an embodiment of this application; and
FIG. 16 is a schematic diagram of a communication apparatus according to an embodiment of this application.

### DESCRIPTION OF EMBODIMENTS

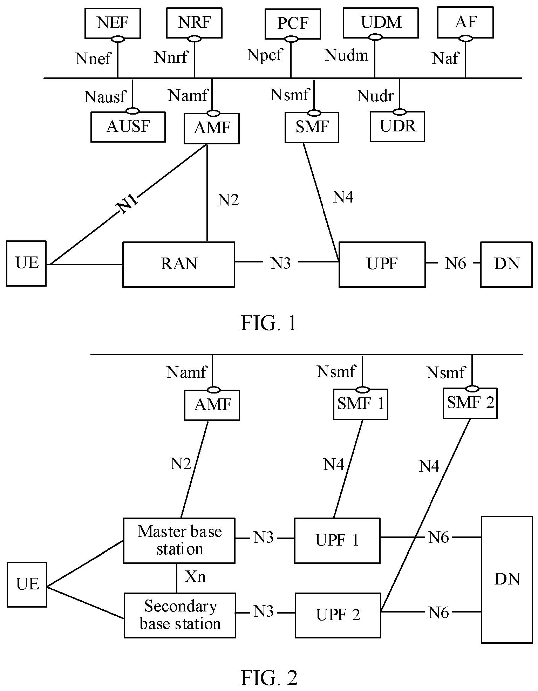

FIG. 1 is a schematic diagram of a 5G network architecture based on a service-based architecture. The 5G network architecture shown in FIG. 1 may include an access network and a core network. A terminal device accesses a data network (data network, DN) through the access network and the core network.

The terminal device may be user equipment (user equipment, UE), a mobile station, a mobile terminal, or the like. The terminal device may be widely applied to various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable device, smart transportation, and a smart city. The terminal device may be a mobile phone, a tablet computer, a computer with a wireless transceiver function, a wearable device, a vehicle, an urban air transportation vehicle (such as an unmanned aerial vehicle or a helicopter), a ship, a robot, a robot arm, a smart home device, or the like. The following uses UE as an example of a terminal device for description. UE that appears in any subsequent place may also be replaced with a terminal device or another example of the terminal device.

The access network is configured to implement an access-related function, may provide a network access function for an authorized user in a specific area, and can determine transmission tunnels of different quality based on a user level, a service requirement, and the like, to transmit user data. The access network forwards control signals and user data between the UE and the core network. The access network may include an access network device. The access network device may be a device that provides access for the UE, and may include a radio access network (radio access network, RAN) device and a wired access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

The access network device and the UE may be located at fixed positions, or may be mobile. The access network device and the UE may be deployed on land, including being deployed indoor or outdoor, or being handheld or vehicle-mounted; may be deployed on water; or may be deployed on an airplane, a balloon, and a satellite in the air. An application scenario of the access network device and the UE is not limited in embodiments of this application.

The core network is responsible for maintaining subscription data of a mobile network, and providing functions such as session management, mobility management, policy management, and security authentication for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, and a user plane function (user plane function, UPF) network element.

The AMF network element is mainly responsible for mobility management in a mobile network, such as user location update, registration of a user with a network, and user switching.

The SMF network element is mainly responsible for session management in the mobile network, such as session establishment, modification, and release. A specific function is, for example, allocating an internet protocol (internet protocol, IP) address to the user, or selecting the UPF that provides a packet forwarding function.

The UPF network element is mainly responsible for forwarding and receiving user data. The UPF network element may receive the user data from the data network, and transmit the user data to the UE through the access network device; or may receive the user data from the UE through the access network device, and forward the user data to the data network.

The UDM network element includes functions such as subscription data management and user access authorization.

The UDR network element includes a function of accessing data of types such as subscription data, policy data, and application data.

The NEF network element is mainly configured to support capability and event exposure.

The AF network element transfers a requirement of an application side for a network side, for example, a QoS requirement or user status event subscription. The AF may be a third-party functional entity, or may be an application service deployed by a carrier, for example, an IP multimedia subsystem (IP Multimedia Subsystem, IMS) voice call service.

The PCF network element mainly supports providing a unified policy framework to control network behavior, and providing a policy rule for a control layer network function, and is responsible for obtaining policy decision-related user subscription information. The PCF network element may provide a policy, such as a QoS policy or a slice selection policy, for the AMF network element and the SMF network element.

The NRF network element may be configured to provide a network element discovery function, and provide network element information corresponding to a network element type based on a request from another network element. The NRF further provides a network element management service, for example, registration, update, and deregistration of a network element, and network element status subscription and push.

The AUSF network element is responsible for performing authentication on the UE and verifying validity of the UE.

A plurality of services may be deployed on the DN, and a service such as data and/or a voice may be provided for the UE. For example, the DN is a private network of a smart factory, a sensor installed in a workshop of the smart factory may be UE, a control server of the sensor is deployed on the DN, and the control server may serve the sensor. The sensor may communicate with the control server, to obtain instructions of the control server, transfer collected sensor data to the control server according to the instructions, and the like. For another example, the DN is an internal office network of a company, a mobile phone or a computer of an employee of the company may be UE, and the mobile phone or the computer of the employee may access information, data resources, and the like on the internal office network of the company.

The AF network element, the UDM network element, the UDR network element, the PCF network element, the SMF network element, the AMF network element, the NRF network element, the AUSF network element, the NEF network element, and the UPF network element may also be respectively referred to as an AF, a UDM, a UDR, a PCF, an SMF, an AMF, an NRF, an AUSF, an NEF and a UPF for short.

In FIG. 1, Nausf, Nnef, Nnrf, Namf, Npcf, Nsmf, Nudm, Nudr and Naf are service-based interfaces respectively provided by the AUSF, NEF, NRF, AMF, PCF, SMF, UDM, UDR and AF, and are used for invoking corresponding service-based operations. N1, N2, N3, N4, and N6 are interface sequence numbers. Meanings of the interface sequence numbers are as follows:
(1) N1 represents an interface between the AMF and the UE, where the interface may be configured to transfer non-access stratum (non-access stratum, NAS) signaling (for example, including a QoS rule from the AMF) to the UE, and the like.
(2) N2 represents an interface between the AMF and the access network device, where the interface may be configured to transfer radio bearer control information and the like from a core network side to the access network device.
(3) N3 represents an interface between the access network device and the UPF, where the interface is mainly configured to transfer uplink and downlink user plane data between the access network device and the UPF.
(4) N4 represents an interface between the SMF and the UPF, where the interface may be configured to transfer information between a control plane and a user plane, including delivery of forwarding rules, QoS rules, traffic statistics rules, and the like from the control plane to the user plane, and reporting of user plane information.
(5) N6 represents an interface between the UPF and the DN, where the interface is configured to transfer uplink and downlink user data traffic between the UPF and the DN.

It may be understood that the network elements or the functions may be network elements in a hardware device, may be software functions running on dedicated hardware, or may be virtualized functions instantiated on a platform (for example, a cloud platform). In a possible implementation method, the network elements or the functions may be implemented by one device, may be jointly implemented by a plurality of devices, or may be one functional module in one device. This is not specifically limited in embodiments of this application.

A session management network element and a policy control network element in embodiments of this application may be respectively an SMF network element and a PCF network element in a 5G system, or may be network elements that have functions of the SMF network element and the PCF network element in a future communication network, for example, a 6G network. This is not limited in this application. In embodiments of this application, an example in which the SMF network element and the PCF network element are respectively a session management network element and a policy control network element is used for description. In addition, the SMF network element and the PCF network element are respectively referred to as an SMF and a PCF for short.

The access network device in embodiments of this application may be a radio access network device (for example, a base station) or a wired access network device in 5G or future communication. For ease of description, in embodiments of this application, an example in which a base station is used as an access network device is used for description.

FIG. 2 is a schematic diagram of an end-to-end redundant transmission architecture. UE communicates with a DN by establishing two mutually associated sessions and sending two data packets that are redundant for each other. In this scenario, two different UPF network elements (UPFs for short below) are used for transmitting data of each session, and a dual connectivity technology is further used for simultaneously connecting to two base stations. Data of the two sessions is transmitted from different base stations and UPFs. Refer to FIG. 2. There are two user plane paths between the UE and the DN: a path 1: the UE <-> a master base station <-> a UPF 1 <-> the DN, and a path 2: the UE <-> a secondary base station <-> a UPF 2 <-> the DN. The two user plane paths are used for transmitting same data, to implement data redundant transmission and improve reliability of data transmission. On a control plane, two sessions may be managed by two different SMFs, or may be managed by a same SMF. This is not limited.

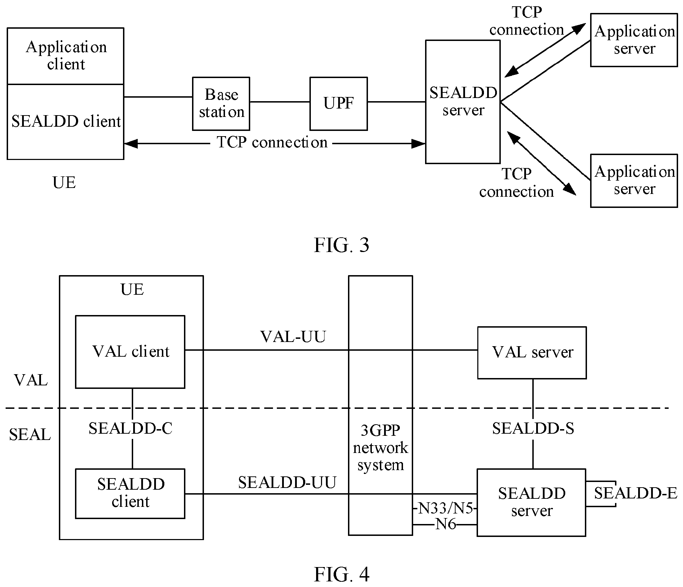

FIG. 3 is a schematic diagram of a service architecture of service enabler architecture layer data delivery (Service Enabler Architecture Layer Data Delivery, SEALDD). A SEALDD function is implemented by a SEALDD client (SEALDD client) and a SEALDD server (SEALDD server). The SEALDD client is used as a part of UE, and runs on the UE in a form of software or a system component. The SEALDD server is deployed between a UPF and an application server (Application Server, AS) in a form of an independent or integrated server, and a plurality of SEALDD servers may be deployed in a distributed manner based on deployment statuses of the UPF and the AS.

FIG. 4 is a schematic diagram of interfaces in a service architecture of SEALDD. In the schematic diagram, an example in which an application server is a vertical application layer (vertical application layer, VAL) server and an application client on UE is a VAL client is used for description. The VAL client is, for example, the Tencent video APP or the iQIYI video APP, and the VAL server is, for example, a Tencent video server or an iQIYI video server. The VAL client communicates with a SEALDD client through a SEALDD-C interface, the VAL server communicates with a SEALDD server through a SEALDD-S interface, the SEALDD client and the SEALDD server transmit user plane data through a SEALDD-UU interface, and the SEALDD-UU interface is carried on a user plane session constructed by a 3rd generation partnership project (3rd generation partnership project, 3GPP) network system. The VAL client and the VAL server transmit user plane data through a VAL-UU interface. The VAL-UU interface is carried on user plane data transmission of the SEALDD-UU interface. In other words, the data between the VAL client and the VAL server is transmitted through the SEALDD client and the SEALDD server. The SEALDD server is an example of an AF. Therefore, the SEALDD server may communicate a control plane message with a PCF through an N5 interface. The N5 interface is an interface between the AF and the PCF. The SEALDD server may also communicate a control plane message with the PCF through an NEF. An N33 interface is an interface between the AF and the NEF. The SEALDD server may transmit user plane data with the UPF through an N6 interface. The N6 interface is an interface between the AF and the UPF. SEALDD servers interact with each other, including control plane context transmission and user plane data forwarding, through a SEALDD-E interface.

In the architecture shown in FIG. 3 or FIG. 4, data may be transmitted between the SEALDD client and the SEALDD server through the 3GPP network system, and the application client and the application server use a data transmission service provided by the SEALDD to obtain a better data transmission service (for example, higher reliability and reduced delay jitter). Therefore, when the application client and the application server on the UE need to exchange data through the 3GPP network, user plane data is transmitted between the application client and the application server through the SEALDD client and the SEALDD server. It may be understood that the SEALDD client is used as a proxy device of the application client, and the SEALDD server is used as a proxy device of the application server. In an uplink direction, the application client sends a data packet to the SEALDD client. The SEALDD client encapsulates the data packet, and then sends an encapsulated data packet to the SEALDD server. After receiving the encapsulated data packet, the SEALDD server decapsulates the data packet to obtain the data packet, and sends the data packet to the application server. In a downlink direction, the application server sends a data packet to the SEALDD server, the SEALDD server encapsulates the data packet, and then sends an encapsulated data packet to the SEALDD client. After receiving the encapsulated data packet, the SEALDD client decapsulates the data packet to obtain the data packet, and sends the data packet to the application client.

Based on the foregoing descriptions, currently, establishment of redundant sessions of two base stations and two UPFs is supported, to implement data redundant transmission between an application client and an application server. However, currently, there is no specific solution for specifically implementing redundant session establishment triggered based on an application layer and data transmission by using two redundant sessions.

Therefore, embodiments of this application provide a solution, in which a proxy layer replaces an application layer to trigger redundant session establishment, and provide a data packet duplication and deduplication service for the application layer. The proxy layer corresponds to a proxy client and a proxy server. In embodiments of this application, the proxy client is a client that supports a vertical industry application in distributing, storing, and transmitting application layer content or data, and the proxy server is a server that supports a vertical industry application in distributing, storing, and transmitting application layer content or data. For example, the proxy layer may be a SEALDD protocol layer (also referred to as a SEALDD enhancement layer), the proxy client may be a SEALDD client, and the proxy server may be a SEALDD server. Certainly, specific implementation forms of the proxy client and the proxy server are not limited in this application. Any client that supports a vertical industry application in distributing, storing, and transmitting application layer content or data may be used as the proxy client, and any server that supports a vertical industry application in distributing, storing, and transmitting application layer content or data may be used as the proxy server.

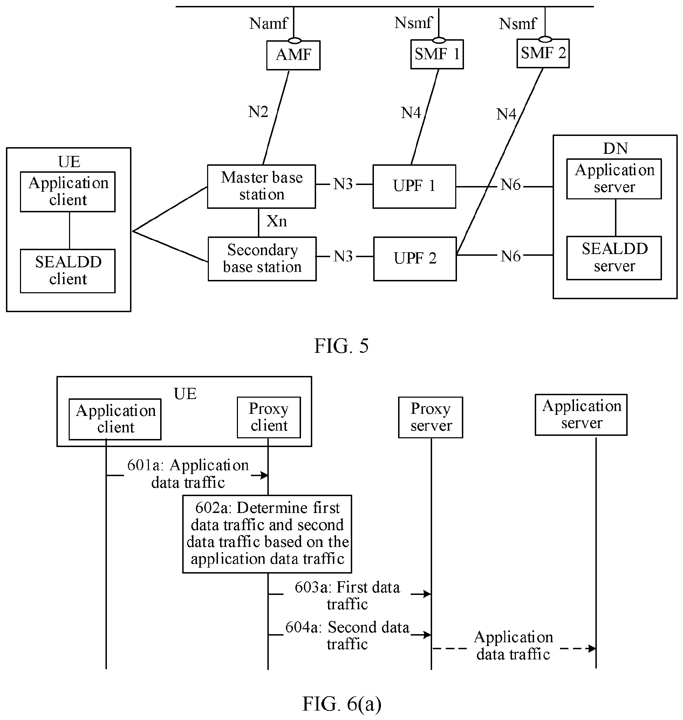

An example in which a SEALDD client and a SEALDD server provide a data packet duplication and deduplication service for an application layer is used. FIG. 5 is a schematic diagram of a SEALDD service-based end-to-end redundant transmission architecture according to an embodiment of this application. Based on this architecture, an end-to-end redundant session based on a SEALDD transport protocol may be established, so that an application (APP) may establish and use an end-to-end redundant transmission service by using a service provided by a SEALDD protocol layer.

FIG. 6(a) is a schematic flowchart of a communication method according to an embodiment of this application. The method includes the following steps.

Step 601a: An application client of UE sends application data traffic to a proxy client of the UE.

The application data traffic includes a destination address. The destination address is an address of an application server or website address information of the application server. The address of the application server may be, for example, an IP address, a media access control (media access control, MAC) address, or an Ethernet (Ethernet) address. The website address information is, for example, a full qualified domain name (full qualified domain name, FQDN), a uniform resource identifier (uniform resource identifier, URI), or a uniform resource locator (uniform resource locator, URL). That is, the application data traffic needs to be sent to the application server; in other words, the application data traffic is data traffic transmitted between the application client and the application server.

Step 602a: The proxy client determines first data traffic and second data traffic based on the application data traffic.

The first data traffic and the second data traffic are data traffic transmitted between the proxy client and a proxy server, the first data traffic and the second data traffic are redundant data traffic for each other, and the first data traffic, the second data traffic, and the application data traffic include same data.

Step 603a: The proxy client sends the first data traffic to the proxy server by using a first session.

Step 604a: The proxy client sends the second data traffic to the proxy server by using a second session.

The first session and the second session are redundant sessions for each other.

A sequence of step 603a and step 604a is not limited.

In the foregoing solution, the proxy client and the proxy server can implement redundant transmission of the application data traffic, to ensure correctness and reliability of data transmission, and help improve user experience.

The following describes specific implementations of the foregoing solution.

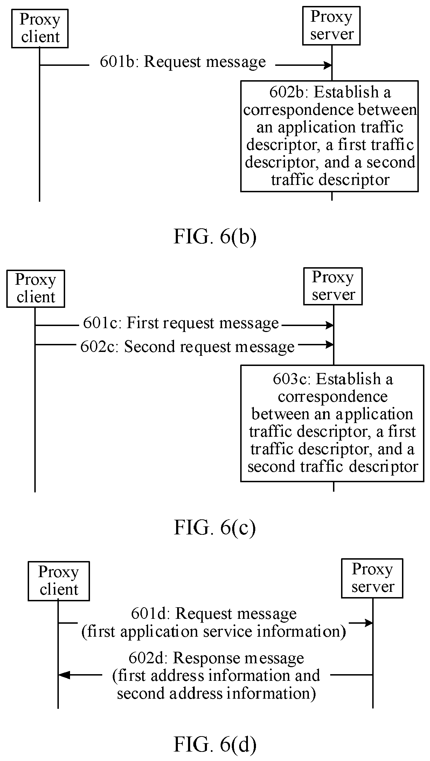

In an implementation method, before step 601a, a connection between the proxy client and the proxy server is established. The following describes the implementation method for establishing the connection between the proxy client and the proxy server. The implementation method is specifically shown in FIG. 6(b) or FIG. 6(c).

FIG. 6(b) is a schematic flowchart of a communication method according to an embodiment of this application. The method is used for establishing a connection between a proxy client and a proxy server. The method includes the following steps.

Step 601b: The proxy client sends a request message to the proxy server.

The request message includes an application traffic descriptor, the application traffic descriptor includes address information of an application server, the application server is configured to receive application data traffic, and the application traffic descriptor indicates a data feature of the application data traffic.

Step 602b: The proxy server establishes a correspondence between the application traffic descriptor, a first traffic descriptor, and a second traffic descriptor.

The first traffic descriptor indicates a data feature of first data traffic, the second traffic descriptor indicates a data feature of second data traffic, the first data traffic and the second data traffic are redundant data traffic for each other, and the first data traffic, the second data traffic, and the application data traffic include same data.

In the foregoing solution, the proxy client sends the request message to the proxy server, where the request message carries the application traffic descriptor corresponding to the application data traffic, and then the proxy server establishes the correspondence between the application traffic descriptor, the first traffic descriptor, and the second traffic descriptor, to establish the connection between the proxy client and the proxy server.

In an implementation method, the request message in step 601b further includes the first traffic descriptor and the second traffic descriptor, so that the proxy server receives the first traffic descriptor and the second traffic descriptor, and establishes the correspondence between the application traffic descriptor, the first traffic descriptor, and the second traffic descriptor. In the method, the proxy client determines the first traffic descriptor and the second traffic descriptor, and sends the first traffic descriptor and the second traffic descriptor to the proxy server.

In another implementation method, the proxy server determines the first traffic descriptor and the second traffic descriptor, and includes the first traffic descriptor and the second traffic descriptor in a response message corresponding to the request message in step 601b.

In an implementation method, the proxy server sends a request message to a PCF, where the request message includes the first traffic descriptor and the second traffic descriptor, and the request message requests the PCF to generate a user equipment route selection policy (UE route selection policy, URSP) rule corresponding to the first traffic descriptor and a URSP rule corresponding to the second traffic descriptor.

In an implementation method, the proxy server sends a request message to the PCF, where the request message includes the first traffic descriptor, the second traffic descriptor, and indication information, and the indication information indicates that the first data traffic corresponding to the first traffic descriptor and the second data traffic corresponding to the second traffic descriptor are redundant data traffic for each other. Therefore, the PCF determines, based on the request message, that the first data traffic and the second data traffic are redundant data traffic for each other. Optionally, the request message further includes a first (DNN, S-NSSAI) combination corresponding to the first traffic descriptor and a second (DNN, S-NSSAI) combination corresponding to the second traffic descriptor, where the first (DNN, S-NSSAI) combination is different from the second (DNN, S-NSSAI) combination. DNN is short for data network name (data network name), and S-NSSAI is short for single network slice selection assistance information (single network slice selection assistance information).

In an implementation method, the request message in step 601b further includes identification information of the proxy client; includes identification information of the first data traffic and identification information of the second data traffic; or includes identification information of the proxy client, identification information of the first data traffic, and identification information of the second data traffic.

In an implementation method, after a first session used for transmitting the first data traffic and a second session used for transmitting the second data traffic are established, the proxy client may further send the identification information of the proxy client and/or the identification information of the first data traffic to the proxy server by using the first session, and send the identification information of the proxy client and/or the identification information of the second data traffic to the proxy server by using the second session.

FIG. 6(c) is a schematic flowchart of a communication method according to an embodiment of this application. The method is used for establishing a connection between a proxy client and a proxy server. The method includes the following steps.

Step 601c: The proxy client sends a first request message to the proxy server.

The first request message includes an application traffic descriptor and address information of a first session of UE, the application traffic descriptor includes address information of an application server, the application server is configured to receive application data traffic, and the application traffic descriptor indicates a data feature of the application data traffic.

The first request message is sent by using a second session on a second subscriber identity module (Subscriber Identity Module, SIM) card of the UE, so that the proxy server can obtain address information of the second session of the UE. In addition, because the first request message further carries the address information of the first session, the proxy server can also obtain the address information of the first session.

Step 602c: The proxy client sends a second request message to the proxy server.

The second request message includes an application traffic descriptor and the address information of the second session of the UE, and the application traffic descriptor is the same as the application traffic descriptor in the first request message. The first session and the second session belong to different public land mobile networks (public land mobile networks, PLMNs).

The second request message is sent by using the first session on a first SIM card of the UE, so that the proxy server can obtain the address information of the first session of the UE. In addition, because the second request message further carries the address information of the second session, the proxy server can also obtain the address information of the second session.

A sequence of step 601c and step 602c is not limited.

Step 603c: The proxy server establishes a correspondence between the application traffic descriptor, a first traffic descriptor, and a second traffic descriptor.

First data traffic and second data traffic are redundant data traffic for each other, and the first data traffic, the second data traffic, and the application data traffic include same data.

The first traffic descriptor indicates a data feature of the first data traffic, and the first traffic descriptor includes the address information of the second session and first address information of the proxy server. The first address information of the proxy server includes a destination address; or includes a destination address and a destination port. The address information of the second session in the first traffic descriptor includes a source address, or includes a source address and a source port.

The second traffic descriptor indicates a data feature of the second data traffic, and the second traffic descriptor includes the address information of the first session and second address information of the proxy server. The second address information of the proxy server includes a destination address; or includes a destination address and a destination port. The address information of the first session in the second traffic descriptor includes a source address, or includes a source address and a source port.

In the foregoing solution, the proxy client sends the request message to the proxy server, where the request message carries the application traffic descriptor corresponding to the application data traffic, and then the proxy server establishes the correspondence between the application traffic descriptor, the first traffic descriptor, and the second traffic descriptor, to establish the connection between the proxy client and the proxy server.

In an implementation method, the first request message in step 601c further includes the first traffic descriptor, and the second request message includes the second traffic descriptor, so that the proxy server receives the first traffic descriptor and the second traffic descriptor. In this method, the proxy client determines the first traffic descriptor and the second traffic descriptor, and sends the first traffic descriptor and the second traffic descriptor to the proxy server.

In another implementation method, the proxy server determines the first traffic descriptor and the second traffic descriptor, includes the first traffic descriptor in a response message corresponding to the first request message in step 601c, and includes the second traffic descriptor in a response message corresponding to the second request message in step 602c.

In an implementation method, the first request message in step 601c further includes identification information of the proxy client and/or identification information of the first data traffic. The second request message in step 602c further includes the identification information of the proxy client and/or identification information of the second data traffic.

In an implementation method, after the first session used for transmitting the first data traffic and the second session used for transmitting the second data traffic are established, the proxy client may further send the identification information of the proxy client and/or the identification information of the first data traffic to the proxy server by using the first session, and send the identification information of the proxy client and/or the identification information of the second data traffic to the proxy server by using the second session.

After the connection between the proxy client and the proxy server is established by using the method in the embodiment of FIG. 6(b), the method in the embodiment of FIG. 6(c), or another method, the embodiment of FIG. 6(a) may be implemented. The following describes a specific implementation method in the embodiment of FIG. 6(a).

After step 604a, the proxy server deduplicates, based on the correspondence between the first traffic descriptor and the second traffic descriptor, the first data traffic that matches the first traffic descriptor and the second data traffic that matches the second traffic descriptor, to obtain deduplicated data traffic. Then, the proxy server determines the application data traffic based on the deduplicated data traffic and the correspondence between the application traffic descriptor, the first traffic descriptor, and the second traffic descriptor. The proxy server sends the application data traffic to the application server corresponding to the application traffic descriptor.

**In** an implementation method, step 602a may be: The proxy client determines the first data traffic based on the first traffic descriptor and the application data traffic, where the first traffic descriptor includes the first address information of the proxy server, and a destination address of the first data traffic matches the first address information of the proxy server. Specifically, if the first address information of the proxy server includes a first IP address of the proxy server, the destination address of the first data traffic is the first IP address; or if the first address information includes a first IP address and a first destination port of the proxy server, the destination address of the first data traffic is the first IP address and the first destination port. In addition, the proxy client determines the second data traffic based on the second traffic descriptor and the application data traffic, where the second traffic descriptor includes the second address information of the proxy server, and a destination address of the second data traffic matches the second address information of the proxy server. Specifically, if the second address information of the proxy server includes a second IP address of the proxy server, the destination address of the second data traffic is the second IP address; or if the second address information includes a second IP address and a second destination port of the proxy server, the destination address of the second data traffic is the second IP address and the second destination port. The first address information of the proxy server is different from the second address information of the proxy server.

The following describes an implementation method for establishing the first session used for transmitting the first data traffic and the second session used for transmitting the second data traffic. Before step 603a, the proxy client sends the first data traffic and the second data traffic to an operating system (Operating System, OS) or a network adapter of the UE; and the UE OS or network adapter sends a first session establishment request message to a first SMF, where the first session establishment request message is for requesting to establish the first session used for transmitting the first data traffic, and the first SMF establishes the first session. The UE OS or network adapter sends a second session establishment request message to a second SMF, where the second session establishment request message is for requesting to establish the second session used for transmitting the second data traffic, and the second SMF establishes the second session. The first SMF and the second SMF may be a same SMF, or may be different SMFs corresponding to different PLMNs.

In an implementation method, the UE OS or network adapter further receives a first URSP and a second URSP from the PCF, where the first URSP includes the first traffic descriptor and a first (DNN, S-NSSAI) combination, the first traffic descriptor identifies the first data traffic, the second URSP includes the second traffic descriptor and a second (DNN, S-NSSAI) combination, and the second traffic descriptor identifies the second data traffic. If determining that the first URSP matches the first data traffic, the UE OS or network adapter sends the first session establishment request message to the first SMF, where the first session establishment request message includes the first (DNN, S-NSSAI) combination. If determining that the second URSP matches the second data traffic, the UE OS or network adapter sends the second session establishment request message to the second SMF, where the second session establishment request message includes the second (DNN, S-NSSAI) combination.

It should be noted that, in the foregoing embodiments of FIG. 6(a), FIG. 6(b), and FIG. 6(c), redundant transmission of an uplink application data traffic is used as an example for description. Embodiments of this application may also be applied to redundant transmission of a downlink application data traffic. An implementation principle of redundant transmission of a downlink application data traffic is similar to that of redundant transmission of an uplink application data traffic, and details are not described again.

FIG. 6(d) is a schematic flowchart of a communication method according to an embodiment of this application. The method is used for establishing a connection between a proxy client and a proxy server. The method includes the following steps.

Step 601d: The proxy client sends a request message to the proxy server, where the request message includes first application service information, and includes identification information of an application client or identification information of the proxy client.

The first application service information includes one or more of identification information of an application server, address information of the application server, or identification information of an application service provided by the application server. The application server is configured to send and receive data traffic of the application service, and the request message is for requesting to establish, for the application client, a redundant transmission connection from the proxy client to the proxy server.

Optionally, the request message further includes a traffic identifier (traffic ID), and the traffic identifier identifies data traffic of a specific application on the proxy client. For example, a traffic identifier 1 identifies data traffic of the Tencent APP, and a traffic identifier 2 identifies data traffic of the iQIYI APP. In other words, a same proxy client may send redundant data traffic of different applications to a proxy server, and then the data traffic of the different applications need to be distinguished by using traffic identifiers.

Step 602d: The proxy server sends a response message to the proxy client, where the response message includes first address information of the proxy server and second address information of the proxy server, and the first address information and the second address information are used for providing redundant transmission for the data traffic of the application service.

In the foregoing solution, the proxy client sends the request message to the proxy server, where the request message includes the first application service information and the identification information of the application client or the identification information of the proxy client, and then the proxy server sends the response message to the proxy client, where the response message includes the first address information of the proxy server and the second address information of the proxy server, to establish the connection between the proxy client and the proxy server.

In a possible implementation method, the proxy server receives second application service information from the application server, where the second application service information includes one or more of the identification information of the application server, the address information of the application server, or the identification information of the application service provided by the application server; and the proxy server allocates the first address information and the second address information based on the second application service information.

In a possible implementation method, the request message further includes identification information of first data traffic and identification information of second data traffic, the first data traffic and the second data traffic are redundant data traffic for each other, and the first data traffic, the second data traffic, and the data traffic of the application service include same data. The first address information matches the first data traffic, and the second address information matches the second data traffic. Optionally, the identification information of the first data traffic, the identification information of the second data traffic, and the foregoing described traffic identifier (traffic ID) may be a same identifier.

In a possible implementation method, that the response message includes first address information of the proxy server and second address information of the proxy server is specifically: The response message includes a first traffic descriptor and a second traffic descriptor, the first traffic descriptor includes the first address information, and the second traffic descriptor includes the second address information. Optionally, the first traffic descriptor further includes a data transport protocol of the first data traffic, the second traffic descriptor further includes a data transport protocol of the second data traffic, and the data transport protocol of the first data traffic is the same as the data transport protocol of the second data traffic.

In a possible implementation method, a terminal device triggers establishment of a first session based on the first traffic descriptor, where the first session is used for transmitting the first data traffic, and triggers establishment of a second session based on the second traffic descriptor, where the second session is used for transmitting the second data traffic, and the first session and the second session are redundant sessions for each other.

In another possible implementation method, a terminal device triggers establishment of a first session based on the first address information, where the first session is used for transmitting the first data traffic; and triggers establishment of a second session based on the second address information, where the second session is used for transmitting the second data traffic, and the first session and the second session are redundant sessions for each other.

In a possible implementation method, the proxy client further sends a first message to the proxy server, where the first message includes address information of the first session and address information of the second session.

In a possible implementation method, that the first message includes address information of the first session and address information of the second session is specifically: The first message includes a third traffic descriptor and a fourth traffic descriptor, the third traffic descriptor includes the address information of the first session, and the fourth traffic descriptor includes the address information of the second session.

In a possible implementation method, the first message further includes the identification information of the application client and/or the identification information of the proxy client, where both the first session and the second session are associated with the application client and/or the proxy client.

Optionally, the first message further includes a traffic identifier (traffic ID), and the traffic identifier identifies data traffic of a specific application on the proxy client. For example, a traffic identifier 1 identifies data traffic of the Tencent APP, and a traffic identifier 2 identifies data traffic of the iQIYI APP.

In a possible implementation method, the first message further includes the identification information of the first data traffic and the identification information of the second data traffic; the first data traffic and the second data traffic are redundant data traffic for each other; and the first data traffic, the second data traffic, and the data traffic of the application service include same data, where the first session is associated with the first data traffic, and the second session is associated with the second data traffic. Optionally, the identification information of the first data traffic, the identification information of the second data traffic, and the foregoing described traffic identifier (traffic ID) may be a same identifier.

In a possible implementation method, the proxy server establishes a connection or a path between the proxy server and the application server, where the connection or the path is associated with the application client and/or the proxy client, or the connection or the path is associated with the first data traffic and the second data traffic.

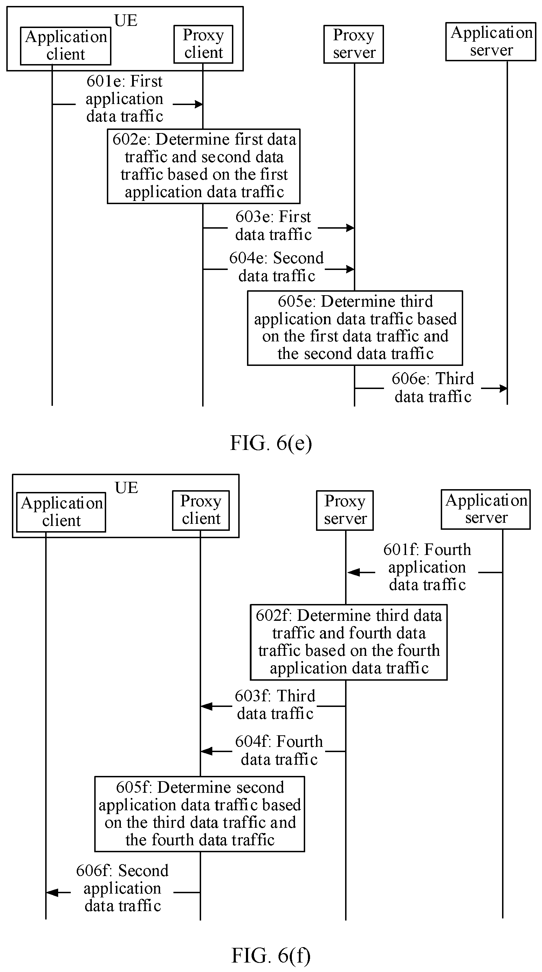

FIG. 6(e) is a schematic flowchart of a communication method according to an embodiment of this application. The method includes the following steps.

Step 601e: An application client sends first application data traffic to a proxy client.

Step 602e: The proxy client determines first data traffic and second data traffic based on the first application data traffic, where the first data traffic and the second data traffic are redundant data traffic for each other, and the first data traffic, the second data traffic, and the first application data traffic include same data.

Step 603e: The proxy client sends the first data traffic to a proxy server by using a first session.

The first data traffic and the first session correspond to first address information of the proxy server.

Step 604e: The proxy client sends the second data traffic to the proxy server by using a second session.

The second data traffic and the second session correspond to second address information of the proxy server, and the first session and the second session are redundant sessions for each other.

Step 605e: The proxy server determines third application data traffic based on the first data traffic and the second data traffic, where the third application data traffic and the first application data traffic include same data.

Step 606e: The proxy server sends the third application data traffic to an application server.

In the foregoing solution, the proxy client and the proxy server can implement redundant transmission of the application data traffic, to ensure correctness and reliability of data transmission, and help improve user experience.

In an implementation method, step 602e is specifically as follows: The proxy client determines the first data traffic based on the first address information and the first application data traffic, and determines the second data traffic based on the second address information and the first application data traffic.

In an implementation method, step 602e is specifically as follows: The proxy client determines the first data traffic based on a fifth traffic descriptor and the first application data traffic, and determines the second data traffic based on a sixth traffic descriptor and the first application data traffic, where the fifth traffic descriptor includes the first address information and address information of the first session, the fifth traffic descriptor indicates a data feature of the first data traffic, the sixth traffic descriptor includes the second address information and address information of the second session, and the sixth traffic descriptor indicates a data feature of the second data traffic. Optionally, the proxy client generates the fifth traffic descriptor based on the first address information and the address information of the first session, and generates the sixth traffic descriptor based on the second address information and the address information of the second session.

In an implementation method, step 605e is specifically as follows: The proxy server deduplicates and reorders the first data traffic and the second data traffic to obtain the third application data traffic.

In an implementation method, step 605e is specifically as follows: The proxy server determines the third application data traffic based on the first address information of the proxy server, the second address information of the proxy server, the first data traffic, and the second data traffic, where the first data traffic corresponds to the first address information, and the second data traffic corresponds to the second address information. Specifically, the proxy server may determine the third application data traffic based on the first address, the second address information, the first data traffic, the second data traffic, a traffic identifier, and identification information of the application client (or identification information of the proxy client). Optionally, the traffic identifier (traffic ID), identification information of the first data traffic, and identification information of the second data traffic may be a same identifier.

In an implementation method, step 605e is specifically as follows: The proxy server determines the third application data traffic based on the fifth traffic descriptor, the sixth traffic descriptor, the first data traffic, and the second data traffic. Specifically, the proxy server may determine the third application data traffic based on the fifth traffic descriptor, the sixth traffic descriptor, the first data traffic, the second data traffic, a traffic identifier, and identification information of the application client (or identification information of the proxy client). Optionally, the traffic identifier (traffic ID), identification information of the first data traffic, and identification information of the second data traffic may be a same identifier. The fifth traffic descriptor includes the first address information of the proxy server and the address information of the first session of a terminal device, the fifth traffic descriptor indicates the data feature of the first data traffic, the sixth traffic descriptor includes the second address information of the proxy server and the address information of the second session of the terminal device, the sixth traffic descriptor indicates the data feature of the second data traffic, the first session and the second session are redundant sessions for each other, the first session corresponds to the first data traffic, and the second session corresponds to the second data traffic. Optionally, the proxy server generates the fifth traffic descriptor based on the first address information and the address information of the first session, and the proxy server generates the sixth traffic descriptor based on the second address information and the address information of the second session. Alternatively, the proxy server receives the fifth traffic descriptor and the sixth traffic descriptor from the proxy client.

In an implementation method, step 606e is specifically as follows: The proxy server determines a target connection between the proxy server and the application server, where the target connection is associated with the proxy client, or is associated with the first data traffic and the second data traffic. The proxy server sends, for the application client, the third application data traffic to the application server on the target connection. Specifically, when establishing the target connection, the proxy server establishes the target connection based on the identification information of the application client (or the identification information of the proxy client). Optionally, the proxy server establishes the target connection based on the identification information of the application client and the traffic identifier, or establishes the target connection based on the identification information of the proxy client and the traffic identifier. In addition, both the request message and the first message carry the identification information of the application client (or the identification information of the proxy client) and the traffic identifier, so that after receiving the first data traffic and the second data traffic, the proxy server determines the identification information of the associated application client and the identification information of the proxy client based on at least one of the fifth traffic descriptor, the first address information, and the address information of the first session that correspond to the first data traffic, and at least one of the sixth traffic descriptor, the second address information, and the address information of the second session that correspond to the second data traffic, optionally further determines the associated traffic identifier, and then determines the target connection between the proxy server and the application server based on the identification information of the application client (or the identification information of the proxy client), or determines the target connection between the proxy server and the application server based on the identification information of the application client and the traffic identifier, or determines the target connection between the proxy server and the application server based on the identification information of the proxy client and the traffic identifier. Optionally, the traffic identifier (traffic ID), the identification information of the first data traffic, and the identification information of the second data traffic may be a same identifier.

FIG. 6(f) is a schematic flowchart of a communication method according to an embodiment of this application. The method includes the following steps.

Step 601f: An application server sends fourth application data traffic to a proxy server.

Step 602f: The proxy server determines third data traffic and fourth data traffic based on the fourth application data traffic, where the third data traffic and the fourth data traffic are redundant data traffic for each other, and the third data traffic, the fourth data traffic, and the fourth application data traffic include same data.

Step 603f: The proxy server sends the third data traffic to a proxy client, and correspondingly, the proxy client receives the third data traffic by using a first session.

The third data traffic corresponds to first address information of the proxy server and address information of the first session of a terminal device.

Step 604f: The proxy server sends the fourth data traffic to the proxy client, and correspondingly, the proxy client receives the fourth data traffic by using a second session.

The fourth data traffic corresponds to second address information of the proxy server and address information of the second session of the terminal device, and the first session and the second session are redundant sessions for each other.

Step 605f: The proxy client determines second application data traffic based on the third data traffic and the fourth data traffic, where the third data traffic, the fourth data traffic, and the second application data traffic include same data.

Step 606f: The proxy client sends the second application data traffic to an application client.

In the foregoing solution, the proxy client and the proxy server can implement redundant transmission of the application data traffic, to ensure correctness and reliability of data transmission, and help improve user experience.

In an implementation method, step 601f is specifically as follows: The application server sends, on a target connection, the fourth application data traffic to the proxy server, where the target connection is associated with the proxy client, or is associated with the third data traffic and the fourth data traffic.

In an implementation method, step 602f is specifically as follows: The proxy server determines the third data traffic based on the first address information, the address information of the first session, and the fourth application data traffic, and determines the fourth data traffic based on the second address information, the address information of the second session, and the fourth application data traffic. Specifically, the proxy server determines the third data traffic based on the first address information, the address information of the first session, the fourth application data traffic, a traffic identifier, and identification information of the application client (or identification information of the proxy client). The proxy server determines the fourth data traffic based on the second address information, the address information of the second session, the fourth application data traffic, the traffic identifier, and the identification information of the application client (or the identification information of the proxy client). Optionally, the traffic identifier (traffic ID), identification information of the third data traffic, and identification information of the fourth data traffic may be a same identifier. The traffic identifier identifies data traffic of a specific application on the proxy client.

In an implementation method, step 602f is specifically as follows: The proxy server determines the third data traffic based on a fifth traffic descriptor and the fourth application data traffic, and determines the fourth data traffic based on a sixth traffic descriptor and the fourth application data traffic. Specifically, the proxy server determines the third data traffic based on the fifth traffic descriptor, the fourth application data traffic, the traffic identifier, and the identification information of the application client (or the identification information of the proxy client). The proxy server determines the fourth data traffic based on the sixth traffic descriptor, the traffic identifier, and the identification information of the application client (or the identification information of the proxy client). The fifth traffic descriptor includes the first address information and the address information of the first session, and the fifth traffic descriptor indicates a data feature of the third data traffic. The sixth traffic descriptor includes the second address information and the address information of the second session, and the sixth traffic descriptor indicates a data feature of the fourth data traffic. Optionally, the proxy server generates the fifth traffic descriptor based on the first address information and the address information of the first session, and generates the sixth traffic descriptor based on the second address information and the address information of the second session. Alternatively, the proxy server receives the fifth traffic descriptor and the sixth traffic descriptor from the proxy client. Optionally, the traffic identifier (traffic ID), the identification information of the third data traffic, and the identification information of the fourth data traffic may be a same identifier. The traffic identifier identifies data traffic of a specific application on the proxy client.

In an implementation method, step 605f is specifically as follows: The proxy client deduplicates and reorders the third data traffic and the fourth data traffic, to obtain the second application data traffic.

In an implementation method, step 605f is specifically as follows: The proxy client determines the second application data traffic based on the first address information, the second address information, the third data traffic, and the fourth data traffic.

In an implementation method, step 605f is specifically as follows: The proxy client determines the second application data traffic based on the fifth traffic descriptor, the sixth traffic descriptor, the third data traffic, and the fourth data traffic. The fifth traffic descriptor includes the first address information and the address information of the first session, the fifth traffic descriptor indicates the data feature of the first data traffic, the sixth traffic descriptor includes the second address information and the address information of the second session, and the sixth traffic descriptor indicates the data feature of the second data traffic. Optionally, the proxy client generates the fifth traffic descriptor based on the first address information and the address information of the first session, and generates the sixth traffic descriptor based on the second address information and the address information of the second session.

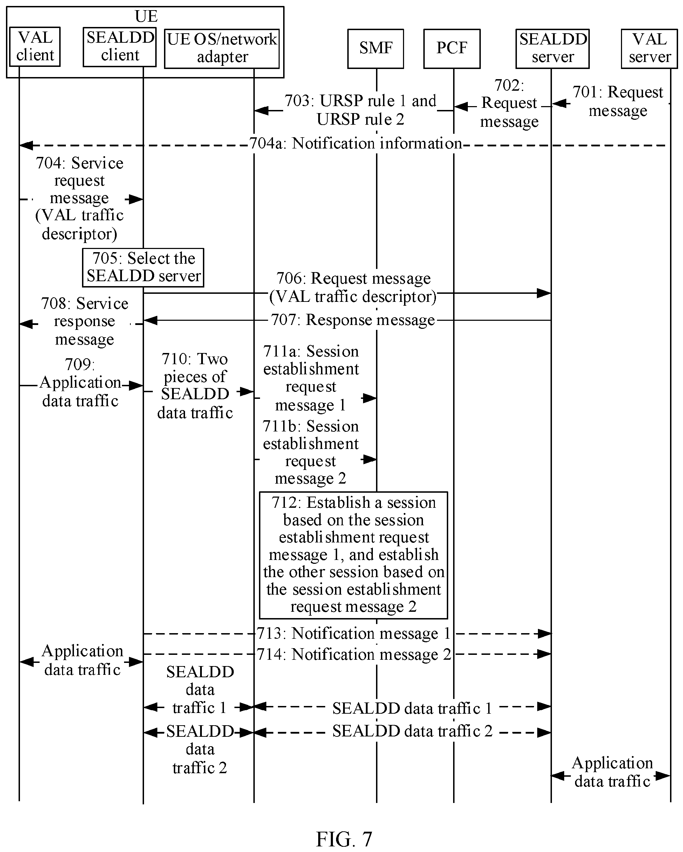

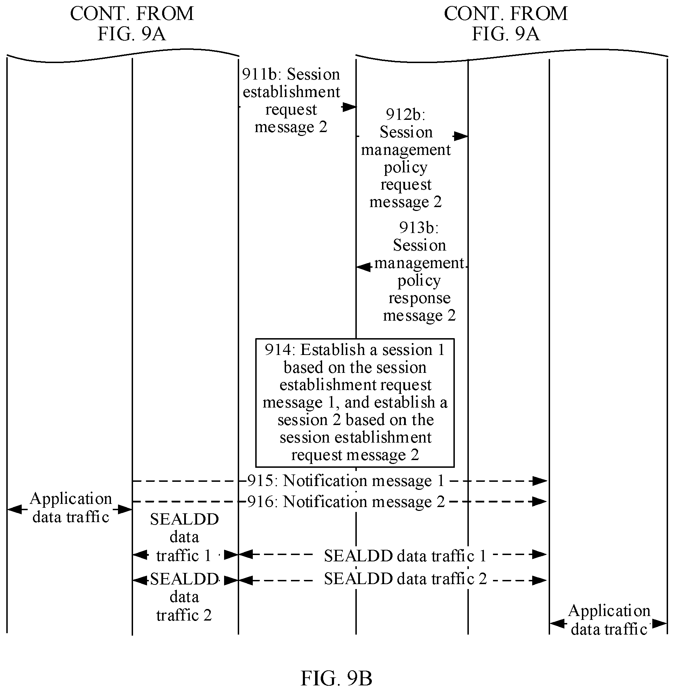

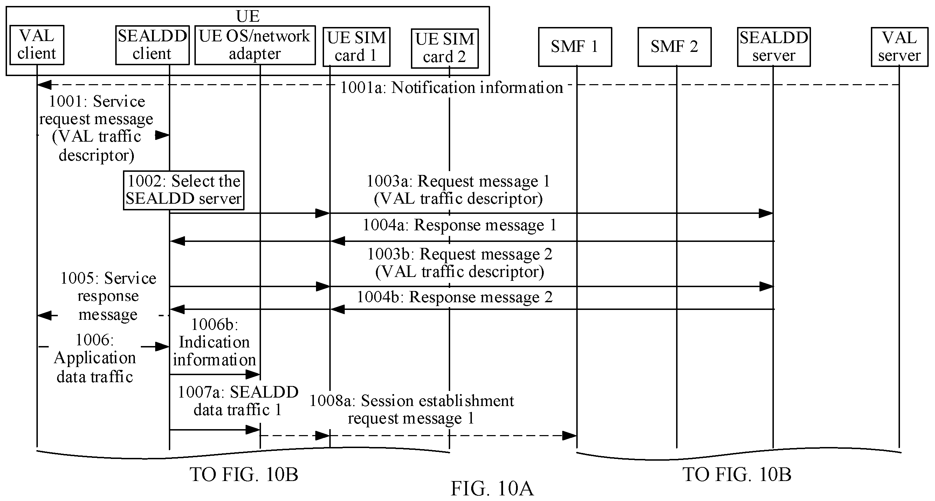

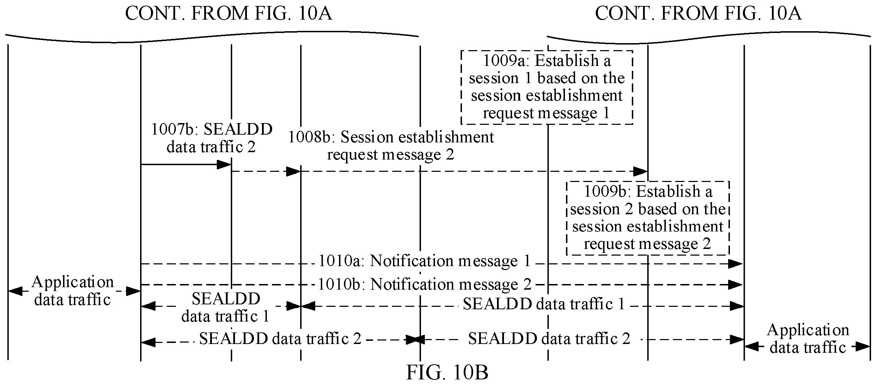

The following describes the embodiments of FIG. 6(a) to FIG. 6(c) with reference to specific embodiments of FIG. 7 to FIG. 10A and FIG. 10B. The following embodiments of FIG. 7 to FIG. 9A and FIG. 9B are all specific examples of embodiments in which FIG. 6(a) and FIG. 6(b) are combined, and the embodiment of FIG. 10A and FIG. 10B is a specific example of an embodiment in which FIG. 6(a) and FIG. 6(c) are combined. In the following embodiments of FIG. 7 to FIG. 10A and FIG. 10B, a specific example in which a VAL client, a VAL server, a SEALDD client, and a SEALDD server are respectively used as an application client, an application server, a proxy client, and a proxy server is used for description.

FIG. 7 is a schematic flowchart of a communication method according to an embodiment of this application. The method includes the following steps.

Step 701: A VAL server sends a request message to a SEALDD server.

The VAL server requests, from the SEALDD server by using this message, to use a SEALDD service. Optionally, the request message may be a request message requesting redundant transmission, and the request message may include information such as a QoS requirement of application data traffic, such as a packet loss rate and a delay.

In an implementation method, the request message includes identification information of UE. In another implementation method, the request message includes an external group identifier, and the external group identifier corresponds to one group of UEs.

Optionally, the request message further includes a data feature of an application that uses the SEALDD service, for example, an address of the VAL server and a VAL application identifier (for example, a combination of an operating system identifier and an application identifier).

Step 701 is an optional step.

Step 702: The SEALDD server sends a request message to a PCF through an NEF/UDR.

The request message may also be referred to as an AF influence (AF influence) request message, or an AF influence URSP request message. URSP is short for user equipment route selection policy (UE route selection policy).

The request message includes the identification information of the UE or an internal group identifier, and further includes a SEALDD traffic descriptor 1, a (DNN, S-NSSAI) combination 1 corresponding to the SEALDD traffic descriptor 1, a SEALDD traffic descriptor 2, and a (DNN, S-NSSAI) combination 2 corresponding to the SEALDD traffic descriptor 2. Optionally, the request message further includes indication information, where the indication information indicates that SEALDD data traffic respectively corresponding to the SEALDD traffic descriptor 1 and the SEALDD traffic descriptor 2 are redundant data traffic for each other. Optionally, the request message further includes a pair identifier (pair ID), and the pair identifier is used for associating two sessions that are redundant transmission for each other, or is used for associating two pieces of SEALDD data traffic that are redundant transmission for each other.

A SEALDD traffic descriptor may also be referred to as feature information of SEALDD data traffic. The SEALDD traffic descriptor 1 includes address information 1 of the SEALDD server and a SEALDD transport protocol, the SEALDD traffic descriptor 2 includes address information 2 of the SEALDD server and a SEALDD transport protocol, and the address information 1 of the SEALDD server is different from the address information 2 of the SEALDD server. In an implementation method, the address information 1 of the SEALDD server and the address information 2 of the SEALDD server include different IP addresses. In another implementation method, the address information 1 of the SEALDD server and the address information 2 of the SEALDD server include a same IP address, but include different port numbers. In another implementation method, the address information 1 of the SEALDD server and the address information 2 of the SEALDD server are different DNNs. In another implementation method, the address information 1 of the SEALDD server and the address information 2 of the SEALDD server are different website information, and the website information is, for example, an FQDN, a URI, or a URL.

The (DNN, S-NSSAI) combination 1 is different from the (DNN, S-NSSAI) combination 2. For example, the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

In an implementation method, if step 701 is performed, and the request message in step 701 requests redundant transmission, the SEALDD server may determine, based on the request message sent by the VAL server, to configure a redundant transmission path for the UE. In another implementation method, if step 701 is performed, and the request message in step 701 carries the QoS requirement of the application data traffic, the SEALDD server may determine, based on the QoS requirement, to configure a redundant transmission path for the UE. In this implementation method, the SEALDD server may further send, to the VAL server, a feedback notification message for the request message in step 701, to notify the VAL server that redundant transmission needs to be performed for the UE.

In an implementation method, if step 701 is performed and the request message in step 701 carries the identification information of the UE, the request message in step 702 carries the identification information of the UE, where the identification information of the UE is the identification information of the UE in the request message in step 701, and step 702 is triggered by step 701 for execution.

In another implementation method, if step 701 is performed and the request message in step 701 carries the external group identifier, the request message in step 702 carries the internal group identifier, where the internal group identifier corresponds to a group of UEs. For example, the SEALDD server may request the NEF to convert the external group identifier into the internal group identifier, and step 702 is triggered by step 701 for execution.

In another implementation method, if step 701 is not performed, the request message in step 702 carries the identification information of the UE or the internal group identifier, where the internal group identifier corresponds to a group of UEs, and step 702 may be triggered based on configuration information in the SEALDD server for execution. For example, the configuration information in the SEALDD server includes identification information of subscribed UE or a subscribed internal group identifier, indicating that the subscribed UE or a group of UEs corresponding to the subscribed internal group identifier is allowed to perform redundant transmission.

Step 703: The PCF sends a URSP rule 1 and a URSP rule 2 to the UE.

The UE herein may be one UE or a plurality of UEs corresponding to the internal group identifier. When the PCF sends the URSP rule 1 and the URSP rule 2 to a plurality of UEs in one group, in one implementation method, the PCF sends the same URSP rule 1 and the same URSP rule 2 to the plurality of UEs in the group; or in another implementation method, the PCF separately sends URSP rules 1 and URSP rules 2 to the plurality of UEs in the group, that is, the URSP rules received by different UEs are irrelevant.

Optionally, an operating system (Operating System, OS) or a network adapter of the UE may obtain the URSP rule 1 and the URSP rule 2.

The URSP rule 1 includes the SEALDD traffic descriptor 1, the pair identifier, an RSN 1, and the (DNN, S-NSSAI) combination 1, and the URSP rule 2 includes the SEALDD traffic descriptor 2, the pair identifier, an RSN 2, and the (DNN, S-NSSAI) combination 2. RSN is short for redundancy sequence number (Redundancy Sequence Number).

The SEALDD traffic descriptor 1 in the URSP rule 1 and the SEALDD traffic descriptor 2 in the URSP rule 2 are from the request message in step 702.

The pair identifier in the URSP rule 1 is the same as the pair identifier in the URSP rule 2. If the request message in step 702 carries the pair identifier, the pair identifier in the URSP rule 1 and the URSP rule 2 is from the request message in step 702. If the request message in step 702 does not carry the pair identifier, the pair identifier in the URSP rule 1 and the URSP rule 2 may be generated by the PCF.

The RSN 1 in the URSP rule 1 is different from the RSN 2 in the URSP rule 2, and both are generated by the PCF. The RSN 1 and the RSN 2 are used for distinguishing between two different sessions in a same pair, and the two sessions are redundant for each other. In other words, the pair identifier and the RSN 1 indicate one session in the redundant sessions for each other, and the pair identifier and the RSN 2 indicate the other session in the redundant sessions for each other. The two sessions form a pair of redundant sessions, and are used for transmitting same data.

Step 704a: The VAL server sends notification information to a VAL client of the UE, where the notification information notifies the VAL client to use the SEALDD service.

In another implementation method, the VAL server determines, according to a local policy, to use a redundant transmission service provided by SEALDD; or the VAL server may learn, as notified by the SEALDD server, that a redundant transmission service needs to be used, so that the VAL server sends a notification message to the VAL client, where the notification message specifically notifies the VAL client to perform end-to-end redundant transmission by using the SEALDD service. Step 704a is an optional step.

Step 704: The VAL client sends a service request message to a SEALDD client of the UE, where the service request message includes a VAL traffic descriptor (VAL traffic descriptor), and the service request message is for requesting to perform end-to-end redundant transmission on application data traffic (also referred to as VAL data traffic) corresponding to the VAL traffic descriptor.

The service request message may also be referred to as a request message, a SEALDD service request message, a SEALDD redundant transmission request message, or the like.

For example, the VAL client may send the service request message to the SEALDD client through an application programming interface (Application Programming Interface, API) opened by the SEALDD client.

The VAL traffic descriptor may also be referred to as feature information of the VAL data traffic. The VAL traffic descriptor includes address information of the VAL server and a VAL transport protocol. Optionally, the VAL traffic descriptor further includes address information of the VAL client.

Step 704 is an optional step.

When step 704 is not performed, the following may be performed: The SEALDD client detects application data traffic from the VAL client, and determines that end-to-end redundant transmission needs to be performed on the application data traffic, so that the SEALDD client obtains a VAL traffic descriptor from a data packet of the application data traffic, where the VAL traffic descriptor includes address information of the VAL server and a VAL transport protocol, and optionally, the VAL traffic descriptor further includes address information of the VAL client.

Step 705: The SEALDD client selects the SEALDD server.

Address information (including an IP address; or including an IP address and a port number) of the SEALDD server may be pre-configured on the SEALDD client, or may be configured on the VAL client and provided by the VAL client to the SEALDD client, or may be obtained by the SEALDD client or the VAL client by querying another network element. This is not limited herein.

Step 706: The SEALDD client sends a request message to the SEALDD server, where the request message includes the VAL traffic descriptor.

The request message is for requesting to initiate end-to-end redundant transmission.

The VAL traffic descriptor in the request message is the VAL traffic descriptor obtained in the foregoing step 704, and the VAL traffic descriptor is used for describing a data feature of the application data traffic that requires redundant transmission.

Optionally, the request message further includes a SEALDD traffic descriptor 1 and a SEALDD traffic descriptor 2. The SEALDD traffic descriptor 1 includes a SEALDD transport protocol and address information 1 of the SEALDD server, and the address information 1 of the SEALDD server in the SEALDD traffic descriptor 1 is the same as the address information 1 of the SEALDD server in the SEALDD traffic descriptor 1 of the URSP rule 1. The SEALDD traffic descriptor 2 includes a SEALDD transport protocol and address information 2 of the SEALDD server, and the address information 2 of the SEALDD server in the SEALDD traffic descriptor 2 is the same as the address information 2 of the SEALDD server in the SEALDD traffic descriptor 2 of the URSP rule 2.

Optionally, the request message further includes identification information of the SEALDD client, and/or identification information of SEALDD data traffic 1 and identification information of SEALDD data traffic 2. In other words, the request message further includes the identification information of the SEALDD client, or further includes the identification information of the SEALDD data traffic 1 and the identification information of the SEALDD data traffic 2, or further includes the identification information of the SEALDD client, the identification information of the SEALDD data traffic 1, and the identification information of the SEALDD data traffic 2. The identification information of the SEALDD client identifies the SEALDD client, the identification information of the SEALDD data traffic 1 identifies SEALDD data traffic corresponding to the SEALDD traffic descriptor 1, and the identification information of the SEALDD data traffic 2 identifies SEALDD data traffic corresponding to the SEALDD traffic descriptor 2.

Step 707: The SEALDD server sends a response message to the SEALDD client. Optionally, the response message includes the SEALDD traffic descriptor 1 and the SEALDD traffic descriptor 2.

The response message may be a redundant transmission response message.

For specific content of the SEALDD traffic descriptor 1 and the SEALDD traffic descriptor 2, refer to the descriptions of step 706.

In an implementation method, if the request message in step 706 carries the SEALDD traffic descriptor 1 and the SEALDD traffic descriptor 2, the response message in step 707 does not carry the SEALDD traffic descriptor 1 or the SEALDD traffic descriptor 2.

In another implementation method, if the request message in step 706 does not carry the SEALDD traffic descriptor 1 or the SEALDD traffic descriptor 2, the response message in step 707 carries the SEALDD traffic descriptor 1 and the SEALDD traffic descriptor 2.

Step 708: The SEALDD client sends a service response message to the VAL client.

Step 708 is an optional step.

Step 709: The VAL client sends application data traffic to the SEALDD client.

The application data traffic includes one or more data packets. Each data packet includes a packet header and data. The packet header includes a destination address (namely, an IP address of the VAL server), a destination port number (namely, a port number of the VAL server), and a VAL transport protocol.

Step 710: The SEALDD client sends two pieces of SEALDD data traffic to the UE OS or network adapter.

Specifically, the SEALDD client matches the application data traffic from the VAL client based on the VAL traffic descriptor, maps the application data traffic to two pieces of SEALDD data traffic based on a SEALDD traffic descriptor corresponding to the VAL traffic descriptor, and sends the two pieces of SEALDD data traffic to the UE OS or network adapter. The two pieces of SEALDD data traffic are redundant data traffic for each other.

In an implementation method, the SEALDD client separately adds different packet headers to the data packet of the application data traffic, to obtain the two pieces of SEALDD data traffic. For example, the newly added packet header in the data packet of the application data traffic carries the address information 1 of the SEALDD server, the SEALDD transport protocol, a sequence number of the data packet, and further carries the identification information of the SEALDD client and/or the identification information of the SEALDD data traffic 1, to obtain the SEALDD data traffic 1. The address information 1 of the SEALDD server in the newly added packet header is used as a destination address; or is used as a destination address and a destination port number. The sequence number in the newly added packet header indicates a sending sequence of the data packet in the SEALDD data traffic 1, and different data packets in the SEALDD data traffic 1 have different sequence numbers. The identification information of the SEALDD client in the newly added packet header identifies that the SEALDD data traffic 1 is sent through the SEALDD client indicated by the identification information of the SEALDD client. The identification information of the SEALDD data traffic 1 in the newly added packet header indicates the SEALDD data traffic 1. Similarly, the newly added packet header in the data packet of the application data traffic carries the address information 2 of the SEALDD server, the SEALDD transport protocol, a sequence number of the data packet, and further carries the identification information of the SEALDD client and/or the identification information of the SEALDD data traffic 2, to obtain the SEALDD data traffic 2. The address information 2 of the SEALDD server in the newly added packet header is used as a destination address; or is used as a destination address and a destination port number. The sequence number in the newly added packet header indicates a sending sequence of the data packet in the SEALDD data traffic 2, and different data packets in the SEALDD data traffic 2 have different sequence numbers. The identification information of the SEALDD client in the newly added packet header identifies that the SEALDD data traffic 2 is sent through the SEALDD client indicated by the identification information of the SEALDD client. The identification information of the SEALDD data traffic 2 in the newly added packet header indicates the SEALDD data traffic 2.

In another implementation method, the SEALDD client makes two different modifications on the packet header of the data packet of the application data traffic, to obtain the two pieces of SEALDD data traffic. For example, a destination address (or a destination address and a destination port number) in the packet header of the data packet of the application data traffic is replaced from the address information of the VAL server to the address information 1 of the SEALDD server, a transport protocol in the packet header of the data packet of the application data traffic is replaced from the VAL transport protocol to the SEALDD transport protocol, and optionally, a sequence number in the packet header is further replaced with a newly generated sequence number, so as to obtain the SEALDD data traffic 1. If the sequence number in the data packet is not replaced with the new sequence number, the original sequence number in the data packet may be used. Similarly, optionally, the destination address (or the destination address and the destination port number) in the packet header of the data packet of the application data traffic is replaced from the address information of the VAL server to the address information 2 of the SEALDD server, the transport protocol in the packet header of the data packet of the application data traffic is replaced from the VAL transport protocol to the SEALDD transport protocol, the identification information of the SEALDD client and/or the identification information of the SEALDD data traffic 2 are/is added to the packet header, and optionally, the sequence number in the packet header is further replaced with a newly generated sequence number, so as to obtain the SEALDD data traffic 2. If no new sequence number is added to the data packet, the original sequence number in the data packet may be used.

Step 711a: The UE OS or network adapter sends a session establishment request message 1 to an SMF according to the URSP rule 1, where the session establishment request message 1 includes the pair identifier, the RSN 1, and the (DNN, S-NSSAI) combination 1.

The UE OS or network adapter performs matching on the received SEALDD data traffic according to the URSP rules (including the URSP rule 1 and the URSP rule 2). Because the SEALDD traffic descriptor 1 in the URSP rule 1 can match the SEALDD data traffic 1, the UE OS or network adapter queries whether a session corresponding to the pair identifier, the RSN 1, and the (DNN, S-NSSAI) combination 1 in the URSP rule 1 has been established. If the session has been established, the UE OS or network adapter maps the SEALDD data traffic 1 to the established session. If the session has not been established, the UE OS or network adapter initiates the session establishment request message 1 requesting to establish the session. Step 711a is described by using an example in which the session is not established.

Step 711b: The UE OS sends a session establishment request message 2 to the SMF according to the URSP rule 2, where the session establishment request message 2 includes the pair identifier, the RSN 2, and the (DNN, S-NSSAI) combination 2.

A specific implementation of step 711b is similar to the specific implementation of step 711a. For details, refer to the foregoing descriptions.

Step 712: The SMF establishes a session based on the session establishment request message 1, and establishes the other session based on the session establishment request message 2, where the two sessions are redundant sessions for each other.

Step 713: The SEALDD client sends a notification message 1 to the SEALDD server, where the notification message 1 includes the identification information of the SEALDD client and/or the identification information of the SEALDD data traffic 1.

Because the SEALDD client sends the notification message 1 to the SEALDD server by using a session 1, the SEALDD server may learn of address information of the session 1. In addition, because the notification message 1 includes the identification information of the SEALDD client and/or the identification information of the SEALDD data traffic 1, the SEALDD server may learn of a correspondence between the SEALDD data traffic 1 and identification information of the session 1, and/or learn of a correspondence between the identification information of the SEALDD data traffic 1 and the address information of the session 1.

Step 714: The SEALDD client sends a notification message 2 to the SEALDD server by using a session 2, where the notification message 2 includes the identification information of the SEALDD client and/or the identification information of the SEALDD data traffic 2.

Because the SEALDD client sends the notification message 2 to the SEALDD server by using the session 2, the SEALDD server may learn of address information of the session 2. In addition, because the notification message 2 includes the identification information of the SEALDD client and/or the identification information of the SEALDD data traffic 2, the SEALDD server may learn of a correspondence between the SEALDD data traffic 2 and identification information of the session 2, and/or learn of a correspondence between the identification information of the SEALDD data traffic 2 and the address information of the session 2.

It should be noted that, the foregoing step 713 and step 714 are optional steps. When the SEALDD data traffic 1 and the SEALDD data traffic 2 are obtained by modifying the packet header of the data packet of the application data traffic in step 710, step 713 and step 714 are performed. A reason is as follows: Because the packet header does not carry the identification information of the SEALDD client, the identification information of the SEALDD data traffic 1, or the identification information of the SEALDD data traffic 2, the SEALDD server cannot learn of a specific SEALDD client or specific UE from which a data packet of the SEALDD data traffic 1 and a data packet of the SEALDD data traffic 2 come. Therefore, step 713 and step 714 may be performed. In this way, the SEALDD server senses identification information of a session corresponding to the data packet of the SEALDD data traffic 1 and identification information of a session corresponding to the SEALDD data traffic 2, so that the SEALDD server senses the specific SEALDD client or UE from which the SEALDD data traffic 1 and the SEALDD data traffic 2 come.

Subsequently, redundant transmission of the application data traffic between the VAL client and the VAL server may be implemented through the SEALDD client and the SEALDD server. For example, in an uplink direction, the VAL client sends application data traffic to the SEALDD client, the SEALDD client matches the application data traffic from the VAL client based on a VAL traffic descriptor, duplicates the application data traffic, maps the application data traffic to two pieces of SEALDD data traffic based on a SEALDD traffic descriptor corresponding to the VAL traffic descriptor, and sends the two pieces of SEALDD data traffic to the UE OS or network adapter, where the two pieces of SEALDD data traffic are redundant data traffic for each other. Then, the UE OS or network adapter sends the SEALDD data traffic 1 to the SEALDD server by using the session 1, and sends the SEALDD data traffic 2 to the SEALDD server by using the session 2. The session 1 and the session 2 are redundant sessions for each other. Then, the SEALDD server matches the SEALDD data traffic 1 based on the SEALDD traffic descriptor 1, matches the SEALDD data traffic 2 based on the SEALDD traffic descriptor 2, and deduplicates and reorders the data packets based on a sequence number in the data packet of the SEALDD data traffic 1 and a sequence number in the data packet of the SEALDD data traffic 2, to obtain a deduplicated SEALDD data traffic. Then, the SEALDD server restores the deduplicated SEALDD data traffic to the application data traffic based on the VAL traffic descriptor corresponding to the SEALDD traffic descriptor 1 (or the SEALDD traffic descriptor 2), and sends the application data traffic to the VAL server corresponding to the VAL traffic descriptor. In an implementation method, that the SEALDD server restores the SEALDD data traffic to the application data traffic may be: deleting a packet header added by the SEALDD client to the data packet of the SEALDD data traffic, where the packet header includes information such as the address information 1 of the SEALDD server (or the address information 2 of the SEALDD server), the SEALDD transport protocol, and the sequence number of the data packet. In another implementation method, that the SEALDD server restores the SEALDD data traffic to the application data traffic may be: The SEALDD server replaces a destination address (or a destination address and a destination port number) in the data packet of the SEALDD data traffic from the address information 1 of the SEALDD server (or the address information 2 of the SEALDD server) to the address information of the VAL server. Processing in a downlink direction is opposite to that in the uplink direction, and is not described herein again.

In the foregoing solution, the SEALDD server initiates a request, and allocates a URSP rule used for establishing a redundant session to specified UE or a specified UE group. After determining to use an end-to-end redundant transmission function, the SEALDD client of the UE establishes a connection to the SEALDD server, and negotiates configuration information of SEALDD data traffic. The UE establishes two redundant sessions according to the URSP rule to transmit redundant data between the SEALDD client and the SEALDD server. This solution defines behavior of the SEALDD server and the SEALDD client, so that an end-to-end redundant session may be established in a manner of establishing the redundant sessions by using the URSP rule.

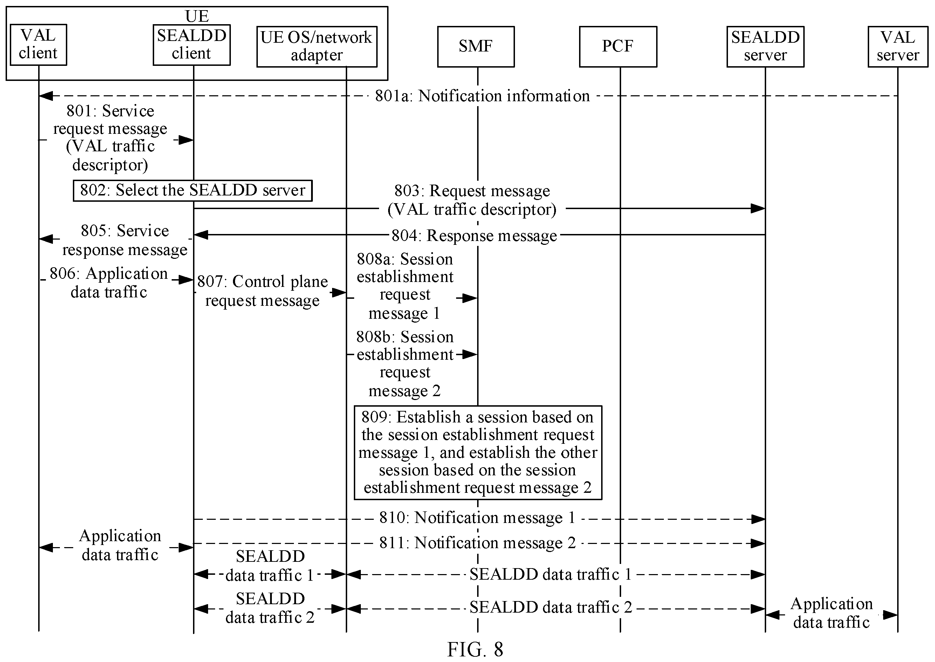

FIG. 8 is a schematic flowchart of a communication method according to an embodiment of this application. The method includes the following steps.

Step 801a is the same as step 704a.

Step 801 to step 806 are the same as step 704 to step 709.

Step 801 and step 805 are optional steps.

Step 807: The SEALDD client sends a control plane request message to the UE OS or network adapter.

The control plane request message includes a SEALDD traffic descriptor 1, a (DNN, S-NSSAI) combination 1 corresponding to the SEALDD traffic descriptor 1, a SEALDD traffic descriptor 2, and a (DNN, S-NSSAI) combination 2 corresponding to the SEALDD traffic descriptor 2. Specifically, the SEALDD client matches application data traffic from the VAL client based on a VAL traffic descriptor, so as to determine the SEALDD traffic descriptor 1 and the SEALDD traffic descriptor 2 that correspond to the VAL traffic descriptor, and further determine the (DNN, S-NSSAI) combination 1 corresponding to the SEALDD traffic descriptor 1 and the (DNN, S-NSSAI) combination 2 corresponding to the SEALDD traffic descriptor 2.

The (DNN, S-NSSAI) combination 1 and the (DNN, S-NSSAI) combination 2 may be the same or different. "Different" herein means that the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

Optionally, the control plane request message further includes a pair identifier, an RSN 1 corresponding to the SEALDD traffic descriptor 1, and an RSN 2 corresponding to the SEALDD traffic descriptor 2. The RSN 1 is different from the RSN 2.

Optionally, the control plane request further includes indication information, where the indication information indicates that SEALDD data traffic respectively corresponding to the SEALDD traffic descriptor 1 and the SEALDD traffic descriptor 2 are redundant data traffic for each other.

Step 808a: The UE OS or network adapter sends a session establishment request message 1 to an SMF, where the session establishment request message 1 includes the pair identifier, the RSN 1, and the (DNN, S-NSSAI) combination 1.

The UE OS or network adapter performs matching on the received SEALDD data traffic based on the SEALDD traffic descriptor 1 and the SEALDD traffic descriptor 2. Because the SEALDD traffic descriptor 1 can match the SEALDD data traffic 1, the UE OS or network adapter queries whether a session corresponding to the pair identifier, the RSN 1 corresponding to the SEALDD data traffic 1, and the (DNN, S-NSSAI) combination 1 corresponding to the SEALDD data traffic 1 has been established. If the session has been established, the UE OS or network adapter maps the SEALDD data traffic 1 to the established session. If the session is not established, the UE OS or network adapter initiates the session establishment request message 1 requesting to establish the session. Step 808a is described by using an example in which the session is not established. The pair identifier and the RSN 1 may be from the control plane request message, or may be generated by the UE OS or network adapter of the UE.

Step 808b: The UE OS or network adapter sends a session establishment request message 2 to the SMF, where the session establishment request message 2 includes the pair identifier, the RSN 2, and the (DNN, S-NSSAI) combination 2.

A specific implementation of step 808b is similar to the specific implementation of step 808a. For details, refer to the foregoing descriptions.

Step 809: The SMF establishes a session based on the session establishment request message 1, and establishes the other session based on the session establishment request message 2, where the two sessions are redundant sessions for each other.

For a data transmission process after the two sessions that are redundant for each other are established, refer to the descriptions in the embodiment of FIG. 7. Details are not described herein again.

Step 810 and step 811 are the same as step 713 and step 714.

Step 810 and step 811 are optional steps. For details, refer to the descriptions in the embodiment of FIG. 7.

For a specific implementation process of redundant transmission of the application data traffic after step 811, refer to the descriptions in the embodiment of FIG. 7.

In the foregoing solution, after determining to use an end-to-end redundant transmission function, the SEALDD client of the UE establishes a connection to the SEALDD server, and negotiates configuration information of SEALDD data traffic. In addition, functions of the SEALDD client and the UE OS/network adapter are enhanced, so that the UE actively initiates establishment of two redundant sessions, which are used for transmitting redundant data between the SEALDD client and the SEALDD server.

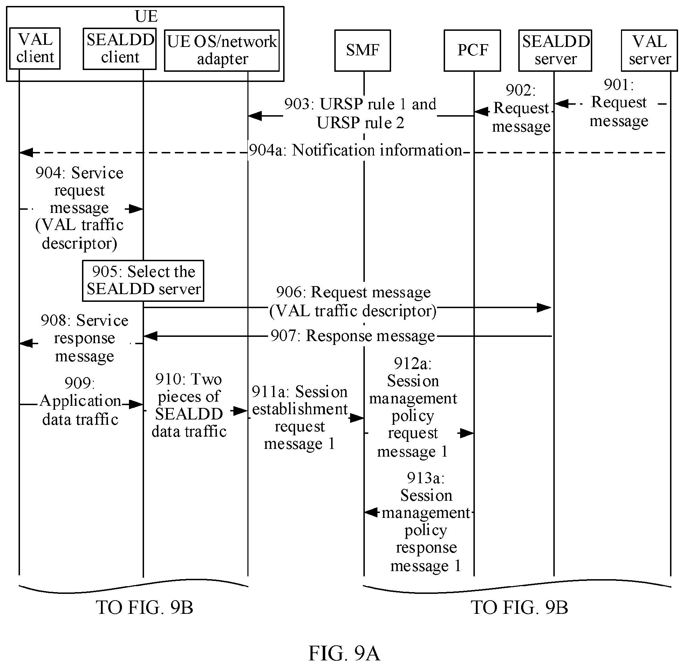

FIG. 9A and FIG. 9B are a schematic flowchart of a communication method according to an embodiment of this application. The method includes the following steps.

Step 901: A VAL server sends a request message to a SEALDD server, where the request message includes identification information of UE, and the request message requests redundant transmission of the UE.

The VAL server requests, from the SEALDD server by using this message, to use a SEALDD service. Optionally, the request message may be a request message requesting redundant transmission, and the request message may include information such as a QoS requirement of application data traffic, such as a packet loss rate and a delay.

Optionally, the request message further includes a data feature of an application that uses the SEALDD service, for example, an address of the VAL server and a VAL application identifier (for example, a combination of an operating system identifier and an application identifier).

Step 901 is an optional step.

Step 902: The SEALDD server sends a request message to a PCF through an NEF/UDR.

The request message may also be referred to as an AF request (AF request) message.

The request message includes the identification information of the UE, a (DNN, S-NSSAI) combination 1, a (DNN, S-NSSAI) combination 2, and indication information, where the indication information indicates that SEALDD data traffic respectively corresponding to the (DNN, S-NSSAI) combination 1 and the (DNN, S-NSSAI) combination 2 are redundant data traffic for each other.

The (DNN, S-NSSAI) combination 1 is different from the (DNN, S-NSSAI) combination 2. For example, the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

In an implementation method, if step 901 is performed, and the request message in step 901 requests redundant transmission, the SEALDD server may determine, based on the request message sent by the VAL server, to configure a redundant transmission path for the UE. In another implementation method, if step 901 is performed, and the request message in step 901 carries the QoS requirement of the application data traffic, the SEALDD server may determine, based on the QoS requirement, to configure a redundant transmission path for the UE. In this implementation method, the SEALDD server may further send, to the VAL server, a feedback notification message for the request message in step 901, to notify the VAL server that redundant transmission needs to be performed for the UE.

Step 903: The PCF sends a URSP rule 1 and a URSP rule 2 to the UE.

Optionally, a UE OS may obtain the URSP rule 1 and the URSP rule 2.

The URSP rule 1 includes the (DNN, S-NSSAI) combination 1, and the URSP rule 2 includes the (DNN, S-NSSAI) combination 2.

Step 904a is the same as step 704a.

Step 904 to step 910 are the same as step 704 to step 710.

Step 911a: The UE OS or a network adapter sends a session establishment request message 1 to an SMF, where the session establishment request message 1 includes the (DNN, S-NSSAI) combination 1.

The UE OS or network adapter of the UE performs matching on the received SEALDD data traffic based on a SEALDD traffic descriptor 1 and a SEALDD traffic descriptor 2. Because the SEALDD traffic descriptor 1 can match SEALDD data traffic 1, the UE OS queries whether a session corresponding to the (DNN, S-NSSAI) combination 1 has been established. If the session has been established, the UE OS maps the SEALDD data traffic 1 to the established session. If the session has not been established, the UE OS initiates the session establishment request message 1 requesting to establish the session. Step 911a is described by using an example in which the session is not established.

Step 912a: The SMF sends a session management policy request (SM policy request) message 1 to the PCF, where the session management policy request message 1 includes the (DNN, S-NSSAI) combination 1.

Step 913a: The PCF sends a session management policy response (SM policy response) message 1 to the SMF, where the session management policy response message 1 includes indication information, and optionally, the session management policy response message 1 further includes a pair identifier.

The indication information (also referred to as a redundant session indication) indicates that the session corresponding to the (DNN, S-NSSAI) combination 1 and a session corresponding to the (DNN, S-NSSAI) combination 2 are redundant sessions for each other.

Step 911b: The UE OS sends a session establishment request message 2 to the SMF, where the session establishment request message 2 includes the (DNN, S-NSSAI) combination 2.

The UE OS (which may alternatively be a SIM card of the UE) performs matching on the received SEALDD data traffic based on the SEALDD traffic descriptor 1 and the SEALDD traffic descriptor 2. Because the SEALDD traffic descriptor 2 can match SEALDD data traffic 2, the UE OS queries whether a session corresponding to the (DNN, S-NSSAI) combination 2 has been established. If the session has been established, the UE OS maps the SEALDD data traffic 2 to the established session. If the session has not been established, the UE OS initiates the session establishment request message 2 requesting to establish the session. Step 911b is described by using an example in which the session is not established.

Step 912b: The SMF sends a session management policy request (SM policy request) message 2 to the PCF, where the session management policy request message 2 includes the (DNN, S-NSSAI) combination 2.

Step 913b: The PCF sends a session management policy response (SM policy response) message 2 to the SMF, where the session management policy response message 2 includes indication information, and optionally, the session management policy response message further includes a pair identifier.

The indication information (also referred to as a redundant session indication) indicates that the session corresponding to the (DNN, S-NSSAI) combination 1 and the session corresponding to the (DNN, S-NSSAI) combination 2 are redundant sessions for each other.

If both step 913a and step 913b carry the pair identifier, the two pair identifiers are the same.

There is no sequence between step 911a to step 913a and step 911b to step 913b.

Step 914: The SMF establishes a session 1 based on the session establishment request message 1, and establishes a session 2 based on the session establishment request message 2.

In addition, the SMF determines, based on the indication information, a pair identifier and an RSN 1 that correspond to the session 1, and a pair identifier and an RSN 2 that correspond to the session 2. The pair identifier may be from the PCF, or may be generated by the SMF. The RSN 1 and the RSN 2 are generated by the SMF.

Step 915 and step 916 are the same as step 713 and step 714.

Step 915 and step 916 are optional steps. For details, refer to the descriptions in the embodiment of FIG. 7.

For a specific implementation process of redundant transmission of the application data traffic after step 916, refer to the descriptions in the embodiment of FIG. 7.

In the foregoing solution, a SEALDD client establishes two different sessions by using two different (DNN S-NSSAI) combinations, and the SEALDD server notifies the PCF of the two sessions that are redundant sessions for each other. In this solution, no special URSP rule needs to be pre-configured, and no enhancement needs to be performed on the UE OS or network adapter. However, different (DNN S-NSSAI) combinations need to be allocated to two data traffic of the SEALDD server. Therefore, a high requirement is imposed on deployment of the SEALDD server, but a small change is made to the UE.

FIG. 10A and FIG. 10B are a schematic flowchart of a communication method according to an embodiment of this application. The method includes the following steps.

Step 1001a: A VAL server sends notification information to a VAL client of UE, where the notification information notifies the VAL client to use a SEALDD service.

For example, if the VAL server determines, according to a local policy, to use the SEALDD service, the VAL server sends the notification information to the VAL client.

Step 1001a is an optional step.

Step 1001: The VAL client of the UE sends a service request message to a SEALDD client of the UE, where the service request message includes a VAL traffic descriptor (VAL traffic descriptor), and the service request message is for requesting to perform end-to-end redundant transmission on application data traffic (also referred to as VAL data traffic) corresponding to the VAL traffic descriptor.

The service request message may also be referred to as a request message, a SEALDD service request message, a SEALDD redundant transmission request message, or the like.

For example, the VAL client may send the service request message to the SEALDD client through an API opened by the SEALDD client.

The VAL traffic descriptor may also be referred to as feature information of the VAL data traffic. The VAL traffic descriptor includes address information of the VAL server and a VAL transport protocol. The address information of the VAL server includes an IP address, or includes an IP address and a port number, and the address information of the VAL server is used as destination address information.

Step 1001 is an optional step.

When step 1001 is not performed, the following may be performed: The SEALDD client detects application data traffic from the VAL client, and determines that end-to-end redundant transmission needs to be performed on the application data traffic, so that the SEALDD client obtains a VAL traffic descriptor from a data packet of the application data traffic, where the VAL traffic descriptor includes address information of the VAL client, the address information of the VAL server, and a VAL transport protocol.

Step 1002: The SEALDD client selects a SEALDD server.

Address information (including an IP address; or including an IP address and a port number) of the SEALDD server may be pre-configured on the SEALDD client, or may be configured on the VAL client and provided by the VAL client to the SEALDD client, or may be obtained by the SEALDD client or the VAL client by querying another network element. This is not limited herein.

Step 1003a: The SEALDD client sends a request message 1 to the SEALDD server by using a session of a SIM card 1 of the UE, where the request message 1 includes the VAL traffic descriptor. The SIM card 1 belongs to a PLMN 1.

The request message 1 is for requesting to initiate end-to-end redundant transmission.

Optionally, the request message 1 further includes a SEALDD traffic descriptor 1. The SEALDD traffic descriptor 1 includes a SEALDD transport protocol and address information 1 of the SEALDD server. Optionally, the SEALDD traffic descriptor 1 further includes address information 1 of the SEALDD client. The address information 1 of the SEALDD client is address information of the session of the SIM card 1 of the UE.

Optionally, the request message 1 further includes address information of a session of a SIM card 2 of the UE.

Optionally, the request message 1 further includes identification information of the SEALDD client and/or identification information of SEALDD data traffic 1. The identification information of the SEALDD client identifies the SEALDD client, and the identification information of the SEALDD data traffic 1 identifies SEALDD data traffic corresponding to the SEALDD traffic descriptor 1.

Step 1004a: The SEALDD server sends a response message 1 to the SEALDD client.

Optionally, the response message 1 includes the SEALDD traffic descriptor 1. The SEALDD traffic descriptor 1 in the response message 1 is the same as the SEALDD traffic descriptor 1 in the request message 1 in step 1003a. Refer to the foregoing descriptions.

In an implementation method, if the request message 1 in step 1003a carries the SEALDD traffic descriptor 1, the response message 1 in step 1004a does not carry the SEALDD traffic descriptor 1.

In another implementation method, if the request message 1 in step 1003a does not carry the SEALDD traffic descriptor 1, the response message 1 in step 1004a carries the SEALDD traffic descriptor 1.

Step 1003b: The SEALDD client sends a request message 2 to the SEALDD server by using the session of the SIM card 2 of the UE, where the request message 2 includes the VAL traffic descriptor. The SIM card 2 belongs to a PLMN 2.

The request message 2 is for requesting to initiate end-to-end redundant transmission. The VAL traffic descriptor in the request message 2 is the same as the VAL traffic descriptor in the request message 1.

Optionally, the request message 2 further includes a SEALDD traffic descriptor 2. The SEALDD traffic descriptor 2 includes a SEALDD transport protocol and address information 2 of the SEALDD server. Optionally, the SEALDD traffic descriptor 2 further includes address information 2 of the SEALDD client. The address information 2 of the SEALDD client is the address information of the session of the SIM card 2 of the UE.

Optionally, the request message 2 further includes the address information of the session of the SIM card 1 of the UE.

Optionally, the request message 2 further includes the identification information of the SEALDD client and/or identification information of SEALDD data traffic 2. The identification information of the SEALDD client identifies the SEALDD client, and the identification information of the SEALDD data traffic 2 identifies SEALDD data traffic corresponding to the SEALDD traffic descriptor 2.

Step 1004b: The SEALDD server sends a response message 2 to the SEALDD client.

Optionally, the response message 2 includes the SEALDD traffic descriptor 2. The SEALDD traffic descriptor 2 in the response message 2 is the same as the SEALDD traffic descriptor 2 in the request message 2 in step 1003b. Refer to the foregoing descriptions.

In an implementation method, if the request message 2 in step 1003b carries the SEALDD traffic descriptor 2, the response message 2 in step 1004b does not carry the SEALDD traffic descriptor 2.

In another implementation method, if the request message 2 in step 1003b does not carry the SEALDD traffic descriptor 2, the response message 2 in step 1004b carries the SEALDD traffic descriptor 2.

There is no sequence between step 1003a and step 1004a and step 1003b and step 1004b.

Step 1005: The SEALDD client sends a service response message to the VAL client.

Step 1005 is an optional step.

Step 1006: The VAL client sends application data traffic to the SEALDD client.

The application data traffic includes one or more data packets. Each data packet includes a packet header and data. The packet header includes a source address (namely, an IP address of the VAL client), a source port number (namely, a port number of the VAL client), a destination address (namely, the IP address of the VAL server), a destination port number (namely, the port number of the VAL server), and the VAL transport protocol.

The IP address of the VAL client may be an IP address of the SIM card 1 of the UE, an IP address of the SIM card 2 of the UE, or another IP address. The port number of the VAL client may be a port number of the SIM card 1 of the UE, a port number of the SIM card 2 of the UE, or another port number.

Step 1006b: The SEALDD client sends indication information to a UE OS or a network adapter, where the indication information indicates that the SEALDD data traffic 1 and the SEALDD data traffic 2 are respectively sent through the SIM card 1 and the SIM card 2.

The SIM card 1 and the SIM card 2 correspond to different PLMNs, that is, the PLMN 1 is different from the PLMN 2.

Step 1007a: The SEALDD client sends the SEALDD data traffic 1 to the UE OS.

Specifically, the SEALDD client matches the application data traffic from the VAL client based on the VAL traffic descriptor, maps the application data traffic to the SEALDD data traffic 1 based on the SEALDD traffic descriptor 1 corresponding to the VAL traffic descriptor, and sends the SEALDD data traffic 1 to the UE OS.

In an implementation method, the SEALDD client adds a packet header to the data packet of the application data traffic, to obtain the SEALDD data traffic 1. For example, the newly added packet header in the data packet of the application data traffic carries the address information 1 of the SEALDD server, the SEALDD transport protocol, a sequence number of the data packet, and further carries the identification information of the SEALDD client and/or the identification information of the SEALDD data traffic 1, to obtain the SEALDD data traffic 1. The address information 1 of the SEALDD server in the newly added packet header is used as a destination address; or is used as a destination address and a destination port number. The sequence number in the newly added packet header indicates a sending sequence of the data packet in the SEALDD data traffic 1, and different data packets in the SEALDD data traffic 1 have different sequence numbers. The identification information of the SEALDD client in the newly added packet header identifies that the SEALDD data traffic 1 is sent through the SEALDD client indicated by the identification information of the SEALDD client. The identification information of the SEALDD data traffic 1 in the newly added packet header indicates the SEALDD data traffic 1.

In another implementation method, the SEALDD client modifies the packet header of the data packet of the application data traffic, to obtain the SEALDD data traffic 1. For example, the destination address (or the destination address and the destination port number) in the packet header of the data packet of the application data traffic is replaced from the address information of the VAL server to the address information 1 of the SEALDD server, a transport protocol in the packet header of the data packet of the application data traffic is replaced from the VAL transport protocol to the SEALDD transport protocol, the identification information of the SEALDD client and/or the identification information of the SEALDD data traffic 1 are/is added to the packet header, and optionally, a sequence number is further newly added to the packet header, so as to obtain the SEALDD data traffic 1.

Step 1008a: The UE OS sends a session establishment request message 1 to an SMF 1 through the SIM card 1 of the UE, where the session establishment request message 1 includes a (DNN, S-NSSAI) combination 1.

The UE OS performs matching on the received SEALDD data traffic. Because the SEALDD traffic descriptor 1 can match the SEALDD data traffic 1, the SIM card 1 of the UE queries whether a session corresponding to the (DNN, S-NSSAI) combination 1 in a URSP rule 1 has been established. If the session has been established, the SIM card 1 of the UE maps the SEALDD data traffic 1 to the established session. If the session has not been established, the SIM card 1 of the UE initiates the session establishment request message 1 requesting to establish the session. Step 1008a is described by using an example in which the session is not established. The URSP rule 1 is from a PCF.

Step 1009a: The SMF 1 establishes a session 1 based on the session establishment request message 1.

Step 1007b: The SEALDD client sends the SEALDD data traffic 2 to the UE OS.

Specifically, the SEALDD client matches the application data traffic from the VAL client based on the VAL traffic descriptor, maps the application data traffic to the SEALDD data traffic 2 based on the SEALDD traffic descriptor 2 corresponding to the VAL traffic descriptor, and sends the SEALDD data traffic 2 to the UE OS.

In an implementation method, the SEALDD client adds a packet header to the data packet of the application data traffic, to obtain the SEALDD data traffic 2. For example, the newly added packet header in the data packet of the application data traffic carries the address information 2 of the SEALDD server, the SEALDD transport protocol, a sequence number of the data packet, and further carries the identification information of the SEALDD client and/or the identification information of the SEALDD data traffic 2, to obtain the SEALDD data traffic 2. The address information 2 of the SEALDD server in the newly added packet header is used as a destination address; or is used as a destination address and a destination port number. The sequence number in the newly added packet header indicates a sending sequence of the data packet in the SEALDD data traffic 2, and different data packets in the SEALDD data traffic 2 have different sequence numbers. The identification information of the SEALDD client in the newly added packet header identifies that the SEALDD data traffic 2 is sent through the SEALDD client indicated by the identification information of the SEALDD client. The identification information of the SEALDD data traffic 2 in the newly added packet header indicates the SEALDD data traffic 2.

In another implementation method, the SEALDD client modifies the packet header of the data packet of the application data traffic, to obtain the SEALDD data traffic 2. For example, the destination address (or the destination address and the destination port number) in the packet header of the data packet of the application data traffic is replaced from the address information of the VAL server to the address information 2 of the SEALDD server, the transport protocol in the packet header of the data packet of the application data traffic is replaced from the VAL transport protocol to the SEALDD transport protocol, the identification information of the SEALDD client and/or the identification information of the SEALDD data traffic 2 are/is added to the packet header, and optionally, a sequence number is further newly added to the packet header, so as to obtain the SEALDD data traffic 2.

Step 1008b: The UE OS sends a session establishment request message 2 to an SMF 2 through the SIM card 2 of the UE, where the session establishment request message 2 includes a (DNN, S-NSSAI) combination 2.

The UE OS performs matching on the received SEALDD data traffic. Because the SEALDD traffic descriptor 2 can match the SEALDD data traffic 2, the SIM card 2 of the UE queries whether a session corresponding to the (DNN, S-NSSAI) combination 2 in a URSP rule 2 has been established. If the session has been established, the SIM card 2 of the UE maps the SEALDD data traffic 2 to the established session. If the session has not been established, the SIM card 2 of the UE initiates the session establishment request message 2 requesting to establish the session. Step 1008b is described by using an example in which the session is not established. The URSP rule 2 is from the PCF.

The (DNN, S-NSSAI) combination 2 in the URSP rule 2 and the (DNN, S-NSSAI) combination 1 in the URSP rule 1 correspond to a same PLMN or different public land mobile networks (public land mobile networks, PLMNs).

Step 1009b: The SMF 2 establishes a session 2 based on the session establishment request message 2.

It should be noted that step 1008a, step 1009a, step 1008b, and step 1009b are all optional steps. For example, the proxy client may transmit the SEALDD data traffic 1 by using the session used in the negotiation process in step 1003a and step 1004a. In this case, a new session may not need to be created for the SEALDD data traffic 1, that is, step 1008a and step 1009a do not need to be performed. Similarly, the proxy client may transmit the SEALDD data traffic 2 by using the session used in the negotiation process in step 1003b and step 1004b. In this case, a new session may not need to be created for the SEALDD data traffic 2, that is, step 1008b and step 1009b do not need to be performed.

Step 1010a is the same as step 713.

Step 1010b is the same as step 714.

It should be noted that, the foregoing step 1010a and step 1010b are optional steps. When the SEALDD data traffic 1 is obtained by modifying the packet header of the data packet of the application data traffic in step 1007a, and step 1008a and step 1009a are further performed, step 1010a is performed. Similarly, when the SEALDD data traffic 2 is obtained by modifying the packet header of the data packet of the application data traffic in step 1007b, and step 1008b and step 1009b are further performed, step 1010b is performed.

Subsequently, redundant transmission of the application data traffic between the VAL client and the VAL server may be implemented through the SEALDD client and the SEALDD server. For example, in an uplink direction, the VAL client sends application data traffic to the SEALDD client, the SEALDD client matches the application data traffic from the VAL client based on a VAL traffic descriptor, and maps the application data traffic to the SEALDD data traffic 1 and the SEALDD data traffic 2 respectively based on the SEALDD traffic descriptor 1 and the SEALDD traffic descriptor 2 that correspond to the VAL traffic descriptor, where the SEALDD data traffic 1 and the SEALDD data traffic 2 are redundant data traffic for each other. The SEALDD client sends the SEALDD data traffic 1 and the SEALDD data traffic 2 to the UE OS. Then, the UE OS sends the SEALDD data traffic 1 to the SEALDD server by using the session 1 of the SIM card 1, and the UE OS sends the SEALDD data traffic 2 to the SEALDD server by using the session 2 of the SIM card 2, where the session 1 and the session 2 are redundant sessions for each other. Then, the SEALDD server matches the SEALDD data traffic 1 based on the SEALDD traffic descriptor 1, matches the SEALDD data traffic 2 based on the SEALDD traffic descriptor 2, and deduplicates and reorders data packets based on a sequence number in the data packet of the SEALDD data traffic 1 and a sequence number in the data packet of the SEALDD data traffic 2. Then, the SEALDD server restores the SEALDD data traffic to the application data traffic based on the VAL traffic descriptor, and sends the application data traffic to the VAL server. In an implementation method, that the SEALDD server restores the SEALDD data traffic to the application data traffic may be: deleting a packet header added by the SEALDD client to the data packet of the SEALDD data traffic, where the packet header includes information such as the address information 1 of the SEALDD server (or the address information 2 of the SEALDD server), the SEALDD transport protocol, and the sequence number of the data packet. In another implementation method, that the SEALDD server restores the SEALDD data traffic to the application data traffic may be: The SEALDD server replaces a destination address in the data packet of the SEALDD data traffic from the address information 1 of the SEALDD server (or the address information 2 of the SEALDD server) to the address information of the VAL server. Processing in a downlink direction is opposite to that in the uplink direction, and is not described herein again.

In the foregoing solution, the UE uses the two independent SIM cards to separately establish the sessions, but uses the same SEALDD client and the same SEALDD server. The UE performs dual session transmission through connections of the two PLMNs, and does not need to perform additional modification on a function and a network function of the UE, provided that the SEALDD client and the SEALDD server can maintain an association relationship between the sessions of the two PLMNs.

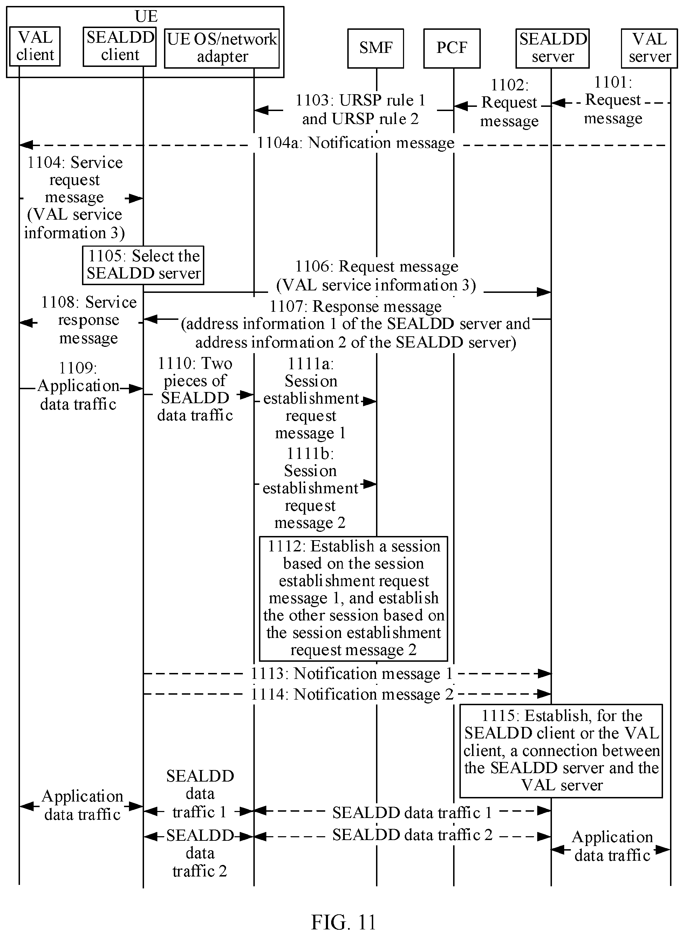

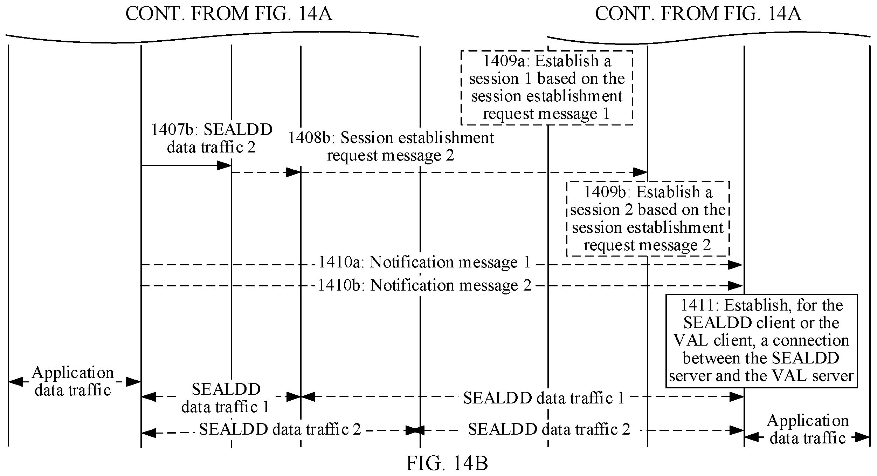

The following describes the embodiments of FIG. 6(d) to FIG. 6(f) with reference to specific embodiments of FIG. 11 to FIG. 14A and FIG. 14B. In the following embodiments of FIG. 11 to FIG. 14A and FIG. 14B, a specific example in which a VAL client, a VAL server, a SEALDD client, and a SEALDD server are respectively used as an application client, an application server, a proxy client, and a proxy server is used for description.

FIG. 11 is a schematic flowchart of a communication method according to an embodiment of this application. The method includes the following steps.

Step 1101: A VAL server sends a request message to a SEALDD server.

The VAL server requests, from the SEALDD server by using this message, to use a SEALDD service. Optionally, the request message may be a request message requesting redundant transmission, and the request message may include information such as a QoS requirement of application data traffic, such as a packet loss rate and a delay.

In an implementation method, the request message includes identification information of UE. In another implementation method, the request message includes an external group identifier, and the external group identifier corresponds to one group of UEs.

Optionally, the request message further includes VAL service information 1. The VAL service information 1 includes one or more of identification information of the VAL server, address information of the VAL server, or identification information of a VAL service provided by the VAL server. The VAL service information 1 may also be referred to as identification information of the application data traffic, configuration information of the application data traffic, or information about the application data traffic.

Step 1102: The SEALDD server sends a request message to a PCF through an NEF/UDR.

The request message may also be referred to as an AF influence (AF influence) request message, or an AF influence URSP request message. URSP is short for user equipment route selection policy (UE route selection policy).

The request message includes the identification information of the UE or an internal group identifier, and further includes a SEALDD traffic descriptor 1, a (DNN, S-NSSAI) combination 1 corresponding to the SEALDD traffic descriptor 1, a SEALDD traffic descriptor 2, and a (DNN, S-NSSAI) combination 2 corresponding to the SEALDD traffic descriptor 2. Optionally, the request message further includes indication information, where the indication information indicates that SEALDD data traffic respectively corresponding to the SEALDD traffic descriptor 1 and the SEALDD traffic descriptor 2 are redundant data traffic for each other. Optionally, the request message further includes a pair identifier (pair ID), and the pair identifier is used for associating two sessions that are redundant transmission for each other, or is used for associating two pieces of SEALDD data traffic that are redundant transmission for each other.

The SEALDD server allocates address information 1 of the SEALDD server and address information 2 of the SEALDD server that are used for redundant transmission to the VAL service indicated by the VAL service information 1. The address information 1 of the SEALDD server is different from the address information 2 of the SEALDD server. In an implementation method, the address information 1 of the SEALDD server and the address information 2 of the SEALDD server include different IP addresses. In another implementation method, the address information 1 of the SEALDD server and the address information 2 of the SEALDD server include a same IP address, but include different port numbers. In another implementation method, the address information 1 of the SEALDD server and the address information 2 of the SEALDD server are different DNNs. In another implementation method, the address information 1 of the SEALDD server and the address information 2 of the SEALDD server are different website information, and the website information is, for example, an FQDN, a URI, or a URL.

A SEALDD traffic descriptor may also be referred to as feature information of SEALDD data traffic. The SEALDD traffic descriptor 1 includes the address information 1 of the SEALDD server, and optionally, the SEALDD traffic descriptor 1 further includes a SEALDD transport protocol. The SEALDD traffic descriptor 2 includes the address information 2 of the SEALDD server, and optionally, the SEALDD traffic descriptor 2 further includes the SEALDD transport protocol.

The (DNN, S-NSSAI) combination 1 is different from the (DNN, S-NSSAI) combination 2. For example, the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

In an implementation method, if the request message in step 1101 requests redundant transmission, the SEALDD server may determine, based on the request message sent by the VAL server, to configure a redundant transmission path for the UE.

In another implementation method, if the request message in step 1101 carries the QoS requirement of the application data traffic, the SEALDD server may determine, based on the QoS requirement, to configure a redundant transmission path for the UE. In this implementation method, the SEALDD server may further send, to the VAL server, a feedback notification message for the request message in step 1101, to notify the VAL server that redundant transmission needs to be performed for the UE.

In an implementation method, if the request message in step 1101 carries the identification information of the UE, the request message in step 1102 carries the identification information of the UE, where the identification information of the UE is the identification information of the UE in the request message in step 1101, and step 1102 is triggered by step 1101 for execution.

In another implementation method, if the request message in step 1101 carries the external group identifier, the request message in step 1102 carries the internal group identifier, where the internal group identifier corresponds to a group of UEs. For example, the SEALDD server may request the NEF to convert the external group identifier into the internal group identifier, and step 1102 is triggered by step 1101 for execution.

Step 1103: The PCF sends a URSP rule 1 and a URSP rule 2 to the UE.

The UE herein may be one UE or a plurality of UEs corresponding to the internal group identifier. When the PCF sends the URSP rule 1 and the URSP rule 2 to a plurality of UEs in one group, in one implementation method, the PCF sends the same URSP rule 1 and the same URSP rule 2 to the plurality of UEs in the group; or in another implementation method, the PCF separately sends URSP rules 1 and URSP rules 2 to the plurality of UEs in the group, that is, the URSP rules received by different UEs are irrelevant.

Optionally, an operating system (Operating System, OS) or a network adapter of the UE may obtain the URSP rule 1 and the URSP rule 2.

The URSP rule 1 includes the SEALDD traffic descriptor 1, the pair identifier, an RSN 1, and the (DNN, S-NSSAI) combination 1, and the URSP rule 2 includes the SEALDD traffic descriptor 2, the pair identifier, an RSN 2, and the (DNN, S-NSSAI) combination 2. RSN is short for redundancy sequence number (Redundancy Sequence Number).

The SEALDD traffic descriptor 1 in the URSP rule 1 and the SEALDD traffic descriptor 2 in the URSP rule 2 are from the request message in step 1102.

The pair identifier in the URSP rule 1 is the same as the pair identifier in the URSP rule 2. If the request message in step 1102 carries the pair identifier, the pair identifier in the URSP rule 1 and the URSP rule 2 is from the request message in step 1102. If the request message in step 1102 does not carry the pair identifier, the pair identifier in the URSP rule 1 and the URSP rule 2 may be generated by the PCF.

The RSN 1 in the URSP rule 1 is different from the RSN 2 in the URSP rule 2, and both are generated by the PCF. The RSN 1 and the RSN 2 are used for distinguishing between two different sessions in a same pair, and the two sessions are redundant for each other. In other words, the pair identifier and the RSN 1 indicate one session in the redundant sessions for each other, and the pair identifier and the RSN 2 indicate the other session in the redundant sessions for each other. The two sessions form a pair of redundant sessions, and are used for transmitting same data.

Step 1104a: The VAL server sends a notification message to a VAL client of the UE.

In an implementation method, the notification message notifies the VAL client to use the SEALDD service. Optionally, the notification message further includes VAL service information 2, and the notification message notifies the VAL client to use the SEALDD service to transmit application data traffic (also referred to as VAL data traffic) corresponding to the VAL service information 2. In another implementation method, the VAL server determines, according to a local policy, to use a redundant transmission service provided by SEALDD; or the VAL server may learn, as notified by the SEALDD server, that a redundant transmission service needs to be used, so that the VAL server sends the notification message to the VAL client, where the notification message specifically notifies the VAL client to perform end-to-end redundant transmission by using the SEALDD service. Optionally, the notification message further includes the VAL service information 2, and the notification message notifies the VAL client to use the SEALDD service to perform end-to-end redundant transmission on the application data traffic (also referred to as the VAL data traffic) corresponding to the VAL service information 2.

The VAL service information 2 includes one or more of the identification information of the VAL server, the address information of the VAL server, or the identification information of the VAL service provided by the VAL server. The VAL service information 2 is a subset of the VAL service information 1, or the VAL service information 2 is the same as the VAL service information 1. The VAL service information 2 may also be referred to as identification information of the application data traffic, configuration information of the application data traffic, or information about the application data traffic.

The VAL service information 2 and the VAL service information 1 correspond to the same VAL service (or an application service).

Step 1104a is an optional step.

Step 1104: The VAL client sends a service request message to a SEALDD client of the UE, where the service request message includes VAL service information 3, and the service request message is for requesting to transmit application data traffic (also referred to as VAL data traffic) corresponding to the VAL service information 3.

The VAL service information 3 includes one or more of the identification information of the VAL server, the address information of the VAL server, or the identification information of the VAL service provided by the VAL server. The VAL service information 3, the VAL service information 1, and the VAL service information 2 all correspond to the same VAL service (or the application service).

The service request message may also be referred to as a request message, a SEALDD service request message, a SEALDD redundant transmission request message, or the like.

For example, the VAL client may send the service request message to the SEALDD client through an API opened by the SEALDD client.

When step 1104a is performed, the VAL client may determine, based on the VAL service information 2, the VAL service that needs to use the SEALDD service. When step 1104a is not performed, the VAL client may determine, based on local configuration information, the VAL service that needs to use the SEALDD service, where the local configuration information indicates that the VAL service corresponding to the VAL service information 3 needs to use the SEALDD service.

Optionally, if step 1104a is performed and the notification message in step 1104a notifies the VAL client to use the SEALDD service to perform end-to-end redundant transmission, the service request message in step 1104 is for requesting to perform end-to-end redundant transmission on the application data traffic (also referred to as the VAL data traffic) corresponding to the VAL service information 3.

Step 1105: The SEALDD client selects the SEALDD server.

Address information (including an IP address; or including an IP address and a port number) of the SEALDD server may be pre-configured on the SEALDD client, or may be configured on the VAL client and provided by the VAL client to the SEALDD client, or may be obtained by the SEALDD client or the VAL client by querying another network element. This is not limited herein.

Step 1106: The SEALDD client sends a request message to the SEALDD server, where the request message includes the VAL service information 3.

The request message is for requesting to establish a SEALDD data transmission connection, and the connection is used for transmitting the VAL service corresponding to the VAL service information 3. Optionally, the request message further requests end-to-end redundant transmission.

The VAL service information 3 in the request message is the VAL service information 3 obtained in step 1104.

Optionally, the request message further includes identification information of the SEALDD client or identification information of the VAL client, and/or identification information of SEALDD data traffic 1 and identification information of SEALDD data traffic 2. In other words, the request message further includes the identification information of the SEALDD client, or further includes the identification information of the VAL client, or further includes the identification information of the SEALDD data traffic 1 and the identification information of the SEALDD data traffic 2, or further includes the identification information of the SEALDD client, the identification information of the SEALDD data traffic 1, and the identification information of the SEALDD data traffic 2. The identification information of the SEALDD client identifies the SEALDD client, the identification information of the SEALDD data traffic 1 identifies SEALDD data traffic corresponding to the VAL service information 3, and the identification information of the SEALDD data traffic 2 identifies SEALDD data traffic corresponding to the VAL service information 3.

When the request message includes the identification information of the SEALDD client, the identification information of the SEALDD client requests, for the SEALDD client, to establish a redundant transmission connection or path to the SEALDD server. The connection or path is used for transmitting application data traffic from the VAL client to the VAL server.

When the request message includes the identification information of the VAL client, the identification information of the VAL client requests, for the VAL client, to establish a redundant transmission connection or path to the SEALDD server. The connection or path is used for transmitting application data traffic from the VAL client to the VAL server.

When the request message includes the identification information of the SEALDD data traffic 1 and the identification information of the SEALDD data traffic 2, the identification information of the SEALDD data traffic 1 and the identification information of the SEALDD data traffic 2 request, for the SEALDD client, to establish a redundant transmission connection or path to the SEALDD server. The connection or path is used for transmitting the SEALDD data traffic 1 and the SEALDD data traffic 2.

Step 1107: The SEALDD server sends a response message to the SEALDD client, where the response message includes the address information 1 of the SEALDD server and the address information 2 of the SEALDD server, and optionally, the response message further includes the VAL service information 3.

The response message may be a connection establishment response message.

In an implementation method, the SEALDD server determines, based on the VAL service information 3 and the VAL service information 1, the address information 1 of the SEALDD server and the address information 2 of the SEALDD server that are allocated to the VAL service. The VAL service information 3 and the VAL service information 1 correspond to the same VAL service.

In an implementation method, the address information 1 of the SEALDD server is included in the SEALDD traffic descriptor 1, and the address information 2 of the SEALDD server is included in the SEALDD traffic descriptor 2; in other words, the response message includes the SEALDD traffic descriptor 1 and the SEALDD traffic descriptor 2, where the SEALDD traffic descriptor 1 includes the address information 1 of the SEALDD server, and the SEALDD traffic descriptor 2 includes the address information 2 of the SEALDD server.

Step 1108: The SEALDD client sends a service response message to the VAL client.

Step 1108 is an optional step.

Step 1109: The VAL client sends application data traffic to the SEALDD client.

The application data traffic includes one or more data packets. Each data packet includes a packet header and data. The packet header includes a destination address (namely, an IP address of the VAL server), a destination port number (namely, a port number of the VAL server), and a VAL transport protocol.

Alternatively, the VAL client sends application data content through an interface provided by the SEALDD client, and the SEALDD client may determine, through the interface, a VAL service corresponding to the application data content.

Step 1110: The SEALDD client sends two pieces of SEALDD data traffic to the UE OS or network adapter.

The SEALDD client determines the VAL service information 3 based on the application data traffic from the VAL client; then determines the SEALDD address information 1 and the SEALDD address information 2 based on the VAL service information 3; then maps the application data traffic to the two pieces of SEALDD data traffic, where destination addresses of the two pieces of SEALDD data traffic respectively correspond to the SEALDD address information 1 and the SEALDD address information 2; and then sends the two pieces of SEALDD data traffic to the UE OS or network adapter. The two pieces of SEALDD data traffic are redundant data traffic for each other.

In an implementation method, the SEALDD client separately adds different packet headers to the data packet of the application data traffic, to obtain the two pieces of SEALDD data traffic. For example, the newly added packet header in the data packet of the application data traffic carries the address information 1 of the SEALDD server, the SEALDD transport protocol, a sequence number of the data packet, and further carries the identification information of the SEALDD client and/or the identification information of the SEALDD data traffic 1, to obtain the SEALDD data traffic 1. The address information 1 of the SEALDD server in the newly added packet header is used as a destination address; or is used as a destination address and a destination port number. The sequence number in the newly added packet header indicates a sending sequence of the data packet in the SEALDD data traffic 1, and different data packets in the SEALDD data traffic 1 have different sequence numbers. The identification information of the SEALDD client in the newly added packet header identifies that the SEALDD data traffic 1 is sent through the SEALDD client indicated by the identification information of the SEALDD client. The identification information of the SEALDD data traffic 1 in the newly added packet header indicates the SEALDD data traffic 1. Similarly, the newly added packet header in the data packet of the application data traffic carries the address information 2 of the SEALDD server, the SEALDD transport protocol, a sequence number of the data packet, and further carries the identification information of the SEALDD client and/or the identification information of the SEALDD data traffic 2, to obtain the SEALDD data traffic 2. The address information 2 of the SEALDD server in the newly added packet header is used as a destination address; or is used as a destination address and a destination port number. The sequence number in the newly added packet header indicates a sending sequence of the data packet in the SEALDD data traffic 2, and different data packets in the SEALDD data traffic 2 have different sequence numbers. The identification information of the SEALDD client in the newly added packet header identifies that the SEALDD data traffic 2 is sent through the SEALDD client indicated by the identification information of the SEALDD client. The identification information of the SEALDD data traffic 2 in the newly added packet header indicates the SEALDD data traffic 2.

In another implementation method, if the VAL client sends the application data content through the interface provided by the SEALDD client, and then the SEALDD client determines, through the interface, the VAL service corresponding to the application data content, the SEALDD client may separately add different packet headers for the application data content, to obtain the two pieces of SEALDD data traffic. For example, the packet header newly added for the application data content carries the address information 1 of the SEALDD server, the SEALDD transport protocol, a sequence number of the data packet, and further carries the identification information of the SEALDD client and/or the identification information of the SEALDD data traffic 1, to obtain the SEALDD data traffic 1. The address information 1 of the SEALDD server in the newly added packet header is used as a destination address; or is used as a destination address and a destination port number. The sequence number in the newly added packet header indicates a sending sequence of the data packet in the SEALDD data traffic 1, and different data packets in the SEALDD data traffic 1 have different sequence numbers. The identification information of the SEALDD client in the newly added packet header identifies that the SEALDD data traffic 1 is sent through the SEALDD client indicated by the identification information of the SEALDD client. The identification information of the SEALDD data traffic 1 in the newly added packet header indicates the SEALDD data traffic 1. Similarly, the packet header newly added for the application data content carries the address information 2 of the SEALDD server, the SEALDD transport protocol, a sequence number of the data packet, and further carries the identification information of the SEALDD client and/or the identification information of the SEALDD data traffic 2, to obtain the SEALDD data traffic 2. The address information 2 of the SEALDD server in the newly added packet header is used as a destination address; or is used as a destination address and a destination port number. The sequence number in the newly added packet header indicates a sending sequence of the data packet in the SEALDD data traffic 2, and different data packets in the SEALDD data traffic 2 have different sequence numbers. The identification information of the SEALDD client in the newly added packet header identifies that the SEALDD data traffic 2 is sent through the SEALDD client indicated by the identification information of the SEALDD client. The identification information of the SEALDD data traffic 2 in the newly added packet header indicates the SEALDD data traffic 2.

In another implementation method, the SEALDD client makes two different modifications on the packet header of the data packet of the application data traffic, to obtain the two pieces of SEALDD data traffic. For example, the destination address (or the destination address and the destination port number) in the packet header of the data packet of the application data traffic is replaced from the address information of the VAL server to the address information 1 of the SEALDD server, a transport protocol in the packet header of the data packet of the application data traffic is replaced from the VAL transport protocol to the SEALDD transport protocol, and optionally, a sequence number in the packet header is further replaced with a newly generated sequence number, so as to obtain the SEALDD data traffic 1. If the sequence number in the data packet is not replaced with the new sequence number, the original sequence number in the data packet may be used. Similarly, optionally, the destination address (or the destination address and the destination port number) in the packet header of the data packet of the application data traffic is replaced from the address information of the VAL server to the address information 2 of the SEALDD server, the transport protocol in the packet header of the data packet of the application data traffic is replaced from the VAL transport protocol to the SEALDD transport protocol, the identification information of the SEALDD client and/or the identification information of the SEALDD data traffic 2 are/is added to the packet header, and optionally, the sequence number in the packet header is further replaced with a newly generated sequence number, so as to obtain the SEALDD data traffic 2. If no new sequence number is added to the data packet, the original sequence number in the data packet may be used.

Step 1111a: The UE OS or network adapter sends a session establishment request message 1 to an SMF according to the URSP rule 1, where the session establishment request message 1 includes the pair identifier, the RSN 1, and the (DNN, S-NSSAI) combination 1.

The UE OS or network adapter performs matching on the received SEALDD data traffic according to the URSP rules (including the URSP rule 1 and the URSP rule 2). Because the SEALDD traffic descriptor 1 in the URSP rule 1 can match the SEALDD data traffic 1, the UE OS or network adapter queries whether a session corresponding to the pair identifier, the RSN 1, and the (DNN, S-NSSAI) combination 1 in the URSP rule 1 has been established. If the session has been established, the UE OS or network adapter maps the SEALDD data traffic 1 to the established session. If the session has not been established, the UE OS or network adapter initiates the session establishment request message 1 requesting to establish the session. Step 1111a is described by using an example in which the session is not established.

Step 1111b: The UE OS sends a session establishment request message 2 to the SMF according to the URSP rule 2, where the session establishment request message 2 includes the pair identifier, the RSN 2, and the (DNN, S-NSSAI) combination 2.

A specific implementation of step 1111b is similar to the specific implementation of step 1111a. For details, refer to the foregoing descriptions.

Step 1112: The SMF establishes a session based on the session establishment request message 1, and establishes the other session based on the session establishment request message 2, where the two sessions are redundant sessions for each other.

Step 1113: The SEALDD client sends a notification message 1 to the SEALDD server, where the notification message 1 includes the identification information of the SEALDD client and/or the identification information of the SEALDD data traffic 1.

Because the SEALDD client sends the notification message 1 to the SEALDD server by using a session 1, the SEALDD server may learn of address information of the session 1. In addition, because the notification message 1 includes the identification information of the SEALDD client and/or the identification information of the SEALDD data traffic 1, the SEALDD server may learn of a correspondence between the SEALDD data traffic 1 and identification information of the session 1, and/or learn of a correspondence between the identification information of the SEALDD data traffic 1 and the address information of the session 1.

Step 1114: The SEALDD client sends a notification message 2 to the SEALDD server by using a session 2, where the notification message 2 includes the identification information of the SEALDD client and/or the identification information of the SEALDD data traffic 2.

Because the SEALDD client sends the notification message 2 to the SEALDD server by using the session 2, the SEALDD server may learn of address information of the session 2. In addition, because the notification message 2 includes the identification information of the SEALDD client and/or the identification information of the SEALDD data traffic 2, the SEALDD server may learn of a correspondence between the SEALDD data traffic 2 and identification information of the session 2, and/or learn of a correspondence between the identification information of the SEALDD data traffic 2 and the address information of the session 2.

It should be noted that, the foregoing step 1113 and step 1114 are optional steps. When the SEALDD data traffic 1 and the SEALDD data traffic 2 are obtained by modifying the packet header of the data packet of the application data traffic in step 1110, step 1113 and step 1114 may be performed. A reason is as follows: Because the packet header does not carry the identification information of the SEALDD client, the identification information of the SEALDD data traffic 1, or the identification information of the SEALDD data traffic 2, the SEALDD server cannot learn of a specific SEALDD client or specific UE from which a data packet of the SEALDD data traffic 1 and a data packet of the SEALDD data traffic 2 come. Therefore, step 1113 and step 1114 may be performed. In this way, the SEALDD server senses identification information of a session corresponding to the data packet of the SEALDD data traffic 1 and identification information of a session corresponding to the SEALDD data traffic 2, so that the SEALDD server senses the specific SEALDD client or UE from which the SEALDD data traffic 1 and the SEALDD data traffic 2 come.

In an alternative manner of step 1113 and step 1114, step 1113 and step 1114 may not be performed, but the following is performed: The SEALDD client sends a request message to the SEALDD server, where the request message includes the address information of the session 1 and the address information of the session 2, and further includes one or more of the identification information of the SEALDD client, the identification information of the SEALDD data traffic 1, the identification information of the SEALDD data traffic 2, and the VAL service information 3. The address information of the session 1 may be carried in a SEALDD traffic descriptor 3, and the SEALDD traffic descriptor 3 may further include the address information 1 of the SEALDD server. The address information of the session 2 may be carried in a SEALDD traffic descriptor 4, and the SEALDD traffic descriptor 4 may further include the address information 2 of the SEALDD server. The SEALDD server may learn of a correspondence between the SEALDD data traffic 1 and the session 1 and a correspondence between the SEALDD data traffic 2 and the session 2 based on the request message, and may further establish a correspondence between the SEALDD data traffic 1, the SEALDD data traffic 2, and the VAL server based on the VAL service information 1 and the VAL service information 3.

Step 1115: The SEALDD server establishes, for the SEALDD client or the VAL client, a connection between the SEALDD server and the VAL server, where the connection is used for sending application data traffic corresponding to the SEALDD data traffic 1 and the SEALDD data traffic 2.

The SEALDD server allocates an address of the SEALDD server used for communication between the SEALDD server and the VAL server. The address is different from an address indicated by the address information 1 of the SEALDD server, and is also different from an address indicated by the address information 2 of the SEALDD server.

When the SEALDD server receives the SEALDD data traffic 1 and the SEALDD data traffic 2, the SEALDD server deduplicates the SEALDD data traffic 1 and the SEALDD data traffic 2, generates application data traffic after the deduplication, and then sends the application data traffic to the VAL server. A source address in the application data traffic is the address that is allocated by the SEALDD server and that is of the SEALDD server used for communication between the SEALDD server and the VAL server.

Subsequently, redundant transmission of the application data traffic between the VAL client and the VAL server may be implemented through the SEALDD client and the SEALDD server. For example, in an uplink direction, the VAL client sends application data traffic to the SEALDD client, maps the application data traffic to two pieces of SEALDD data traffic based on the SEALDD traffic descriptor 1 and the SEALDD traffic descriptor 2 that correspond to the application data traffic, or based on the address information 1 of the SEALDD server and the address information 2 of the SEALDD server that correspond to the application data traffic, sends the SEALDD data traffic 1 to the SEALDD server by using the session 1, and sends the SEALDD data traffic 2 to the SEALDD server by using the session 2, where the session 1 and the session 2 are redundant sessions for each other. Then, the SEALDD server deduplicates and reorders the data packets based on a sequence number in the data packet of the SEALDD data traffic 1 and a sequence number in the data packet of the SEALDD data traffic 2, to obtain a deduplicated SEALDD data traffic, and maps the SEALDD data traffic to the application data traffic. Then, the SEALDD server determines an address of the VAL server based on a SEALDD traffic descriptor locally stored in the SEALDD server; or determines an address of the VAL server based on the address information 1 of the SEALDD server and a correspondence between the address information 2 of the SEALDD server and the VAL server. Optionally, the SEALDD server determines, based on the SEALDD traffic descriptor locally stored in the SEALDD server or based on the address information of the session 1 and the address information of the session 2, to send the application data traffic on the connection established in step 1114. Then, the application data traffic is sent to the VAL server. In an implementation method, that the SEALDD server restores the SEALDD data traffic to the application data traffic may be: deleting a packet header added by the SEALDD client to the data packet of the SEALDD data traffic, where the packet header includes information such as the address information 1 of the SEALDD server (or the address information 2 of the SEALDD server), the SEALDD transport protocol, and the sequence number of the data packet. In another implementation method, that the SEALDD server restores the SEALDD data traffic to the application data traffic may be: The SEALDD server replaces a destination address (or a destination address and a destination port number) in the data packet of the SEALDD data traffic from the address information 1 of the SEALDD server (or the address information 2 of the SEALDD server) to the address information of the VAL server. Processing in a downlink direction is opposite to that in the uplink direction, and is not described herein again.

In the foregoing solution, a SEALDD server initiates a request, and allocates a URSP rule used for establishing a redundant session to specified UE or a specified UE group. After determining to use an end-to-end redundant transmission function, a SEALDD client of the UE establishes a connection to the SEALDD server, and negotiates configuration information of SEALDD data traffic. The UE establishes two redundant sessions according to the URSP rule to transmit redundant data between the SEALDD client and the SEALDD server. This solution defines behavior of the SEALDD server and the SEALDD client, so that an end-to-end redundant session may be established in a manner of establishing the redundant sessions by using the URSP rule.

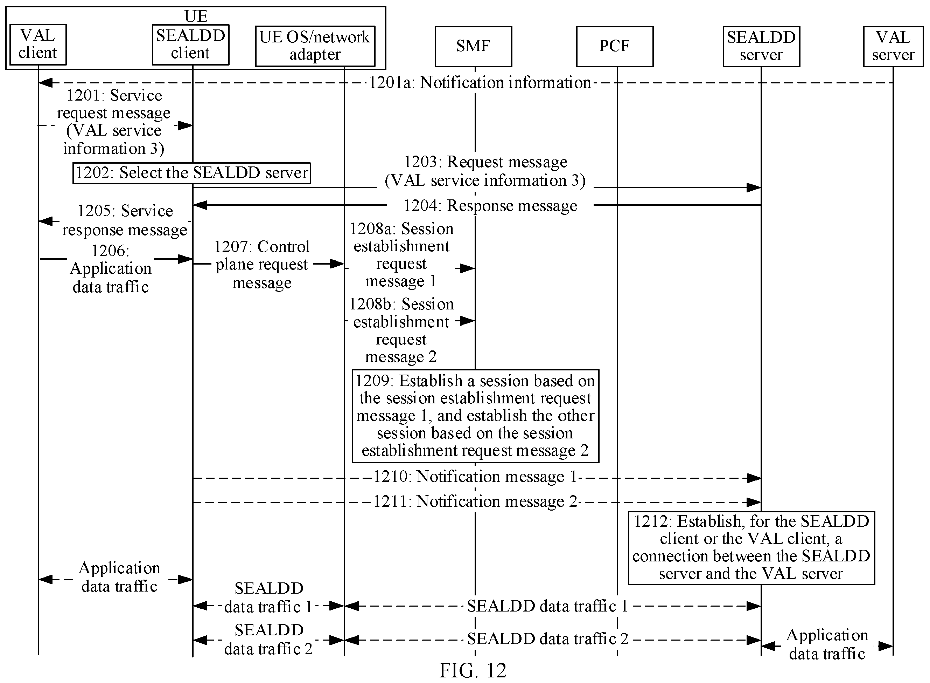

FIG. 12 is a schematic flowchart of a communication method according to an embodiment of this application. The method includes the following steps.

Step 1201a is the same as step 1104a.

Step 1201 to step 1206 are the same as step 1104 to step 1109.

Step 1205 is an optional step.

Step 1207: The SEALDD client sends a control plane request message to the UE OS or network adapter.

The control plane request message includes a SEALDD traffic descriptor 1, a (DNN, S-NSSAI) combination 1 corresponding to the SEALDD traffic descriptor 1, a SEALDD traffic descriptor 2, and a (DNN, S-NSSAI) combination 2 corresponding to the SEALDD traffic descriptor 2. Specifically, the SEALDD client matches application data traffic from the VAL client based on a VAL traffic descriptor, so as to determine the SEALDD traffic descriptor 1 and the SEALDD traffic descriptor 2 that correspond to the VAL traffic descriptor, and further determine the (DNN, S-NSSAI) combination 1 corresponding to the SEALDD traffic descriptor 1 and the (DNN, S-NSSAI) combination 2 corresponding to the SEALDD traffic descriptor 2.

The (DNN, S-NSSAI) combination 1 and the (DNN, S-NSSAI) combination 2 may be the same or different. "Different" herein means that the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

Optionally, the control plane request message further includes a pair identifier, an RSN 1 corresponding to the SEALDD traffic descriptor 1, and an RSN 2 corresponding to the SEALDD traffic descriptor 2. The RSN 1 is different from the RSN 2.

Optionally, the control plane request further includes indication information, where the indication information indicates that SEALDD data traffic respectively corresponding to the SEALDD traffic descriptor 1 and the SEALDD traffic descriptor 2 are redundant data traffic for each other.

Step 1208a: The UE OS or network adapter sends a session establishment request message 1 to an SMF, where the session establishment request message 1 includes the pair identifier, the RSN 1, and the (DNN, S-NSSAI) combination 1.

The UE OS or network adapter performs matching on the received SEALDD data traffic based on the SEALDD traffic descriptor 1 and the SEALDD traffic descriptor 2. Because the SEALDD traffic descriptor 1 can match the SEALDD data traffic 1, the UE OS or network adapter queries whether a session corresponding to the pair identifier, the RSN 1 corresponding to the SEALDD data traffic 1, and the (DNN, S-NSSAI) combination 1 corresponding to the SEALDD data traffic 1 has been established. If the session has been established, the UE OS or network adapter maps the SEALDD data traffic 1 to the established session. If the session is not established, the UE OS or network adapter initiates the session establishment request message 1 requesting to establish the session. Step 1208a is described by using an example in which the session is not established. The pair identifier and the RSN 1 may be from the control plane request message, or may be generated by the UE OS or network adapter of the UE.

Step 1208b: The UE OS or network adapter sends a session establishment request message 2 to the SMF, where the session establishment request message 2 includes the pair identifier, the RSN 2, and the (DNN, S-NSSAI) combination 2.

A specific implementation of step 1208b is similar to the specific implementation of step 1208a. For details, refer to the foregoing descriptions.

Step 1209: The SMF establishes a session based on the session establishment request message 1, and establishes the other session based on the session establishment request message 2, where the two sessions are redundant sessions for each other.

For a data transmission process after the two sessions that are redundant for each other are established, refer to the descriptions in the embodiment of FIG. 11. Details are not described herein again.

Step 1210 and step 1211 are the same as step 1113 and step 1114.

Step 1210 and step 1211 are optional steps. For details, refer to the descriptions in the embodiment of FIG. 11.

In an alternative manner of step 1210 and step 1211, step 1210 and step 1211 may not be performed, but the following is performed: The SEALDD client sends a request message to the SEALDD server, where the request message includes the address information of the session 1 and the address information of the session 2, and further includes one or more of the identification information of the SEALDD client, the identification information of the SEALDD data traffic 1, the identification information of the SEALDD data traffic 2, and the VAL service information 3. The address information of the session 1 may be carried in a SEALDD traffic descriptor 3, and the SEALDD traffic descriptor 3 may further include the address information 1 of the SEALDD server. The address information of the session 2 may be carried in a SEALDD traffic descriptor 4, and the SEALDD traffic descriptor 4 may further include the address information 2 of the SEALDD server. The SEALDD server may learn of a correspondence between the SEALDD data traffic 1 and the session 1 and a correspondence between the SEALDD data traffic 2 and the session 2 based on the request message, and may further establish a correspondence between the SEALDD data traffic 1, the SEALDD data traffic 2, and the VAL server based on the VAL service information 1 and the VAL service information 3.

Step 1212: The SEALDD server establishes, for the SEALDD client or the VAL client, a connection between the SEALDD server and the VAL server, where the connection is used for sending application data traffic corresponding to the SEALDD data traffic 1 and the SEALDD data traffic 2.

The SEALDD server allocates an address of the SEALDD server used for communication between the SEALDD server and the VAL server. The address is different from an address indicated by the address information 1 of the SEALDD server, and is also different from an address indicated by the address information 2 of the SEALDD server.

When the SEALDD server receives the SEALDD data traffic 1 and the SEALDD data traffic 2, the SEALDD server deduplicates the SEALDD data traffic 1 and the SEALDD data traffic 2, generates application data traffic after the deduplication, and then sends the application data traffic to the VAL server. A source address in the application data traffic is the address that is allocated by the SEALDD server and that is of the SEALDD server used for communication between the SEALDD server and the VAL server.

For a specific implementation process of redundant transmission of the application data traffic after step 1212, refer to the descriptions in the embodiment of FIG. 11.

In the foregoing solution, after determining to use an end-to-end redundant transmission function, the SEALDD client of the UE establishes a connection to the SEALDD server, and negotiates configuration information of SEALDD data traffic. In addition, functions of the SEALDD client and the UE OS/network adapter are enhanced, so that the UE actively initiates establishment of two redundant sessions, which are used for transmitting redundant data between the SEALDD client and the SEALDD server.

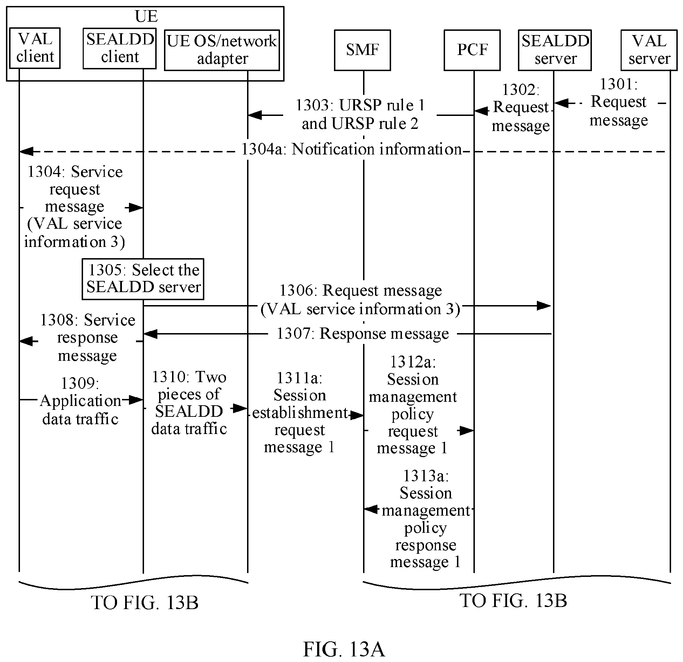

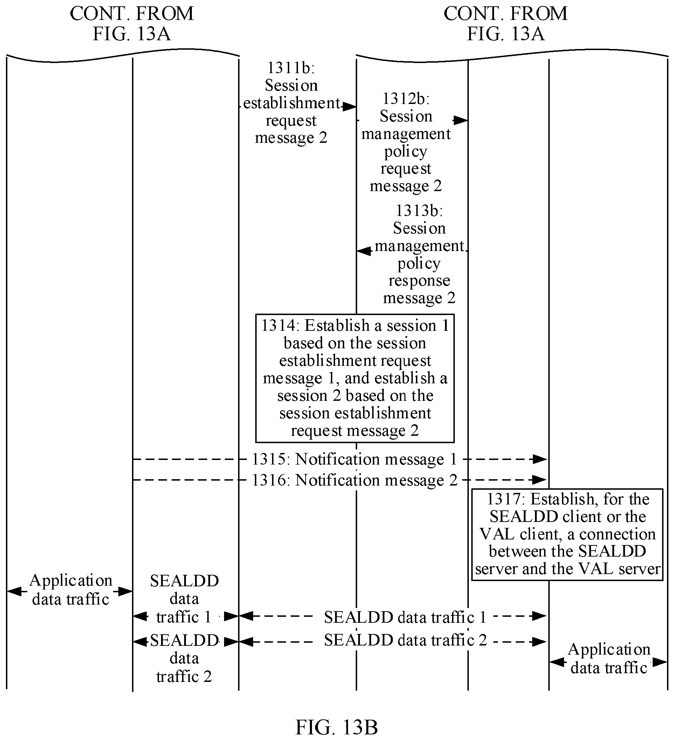

FIG. 13A and FIG. 13B are a schematic flowchart of a communication method according to an embodiment of this application. The method includes the following steps.

Step 1301: A VAL server sends a request message to a SEALDD server, where the request message includes identification information of UE, and the request message requests redundant transmission of the UE.

The VAL server requests, from the SEALDD server by using this message, to use a SEALDD service. Optionally, the request message may be a request message requesting redundant transmission, and the request message may include information such as a QoS requirement of application data traffic, such as a packet loss rate and a delay.

Optionally, the request message further includes VAL service information 1. The VAL service information 1 includes one or more of identification information of the VAL server, address information of the VAL server, or identification information of a VAL service provided by the VAL server. The VAL service information 1 may also be referred to as identification information of the application data traffic, configuration information of the application data traffic, or information about the application data traffic.

Step 1302: The SEALDD server sends a request message to a PCF through an NEF/UDR.

The request message may also be referred to as an AF request (AF request) message.

The request message includes the identification information of the UE, a (DNN, S-NSSAI) combination 1, a (DNN, S-NSSAI) combination 2, and indication information, where the indication information indicates that SEALDD data traffic respectively corresponding to the (DNN, S-NSSAI) combination 1 and the (DNN, S-NSSAI) combination 2 are redundant data traffic for each other.

The (DNN, S-NSSAI) combination 1 is different from the (DNN, S-NSSAI) combination 2. For example, the DNN in the (DNN, S-NSSAI) combination 1 is different from the DNN in the (DNN, S-NSSAI) combination 2, and/or the S-NSSAI in the (DNN, S-NSSAI) combination 1 is different from the S-NSSAI in the (DNN, S-NSSAI) combination 2.

In an implementation method, if the request message in step 1301 requests redundant transmission, the SEALDD server may determine, based on the request message sent by the VAL server, to configure a redundant transmission path for the UE. In another implementation method, if the request message in step 1301 carries the QoS requirement of the application data traffic, the SEALDD server may determine, based on the QoS requirement, to configure a redundant transmission path for the UE. In this implementation method, the SEALDD server may further send, to the VAL server, a feedback notification message for the request message in step 1301, to notify the VAL server that redundant transmission needs to be performed for the UE.

Step 1303: The PCF sends a URSP rule 1 and a URSP rule 2 to the UE.

Optionally, a UE OS may obtain the URSP rule 1 and the URSP rule 2.

The URSP rule 1 includes the (DNN, S-NSSAI) combination 1, and the URSP rule 2 includes the (DNN, S-NSSAI) combination 2.

Step 1304a is the same as step 1104a.

Step 1304 to step 1310 are the same as step 1104 to step 1110.

Step 1311a: The UE OS or a network adapter sends a session establishment request message 1 to an SMF, where the session establishment request message 1 includes the (DNN, S-NSSAI) combination 1.

The UE OS or network adapter of the UE performs matching on the received SEALDD data traffic based on a SEALDD traffic descriptor 1 and a SEALDD traffic descriptor 2. Because the SEALDD traffic descriptor 1 can match SEALDD data traffic 1, the UE OS queries whether a session corresponding to the (DNN, S-NSSAI) combination 1 has been established. If the session has been established, the UE OS maps the SEALDD data traffic 1 to the established session. If the session has not been established, the UE OS initiates the session establishment request message 1 requesting to establish the session. Step 1311a is described by using an example in which the session is not established.

Step 1312a: The SMF sends a session management policy request (SM policy request) message 1 to the PCF, where the session management policy request message 1 includes the (DNN, S-NSSAI) combination 1.

Step 1313a: The PCF sends a session management policy response (SM policy response) message 1 to the SMF, where the session management policy response message 1 includes indication information, and optionally, the session management policy response message 1 further includes a pair identifier.

The indication information (also referred to as a redundant session indication) indicates that the session corresponding to the (DNN, S-NSSAI) combination 1 and the session corresponding to the (DNN, S-NSSAI) combination 2 are redundant sessions for each other.

Step 1311b: The UE OS sends a session establishment request message 2 to the SMF, where the session establishment request message 2 includes the (DNN, S-NSSAI) combination 2.

The UE OS (which may alternatively be a SIM card of the UE) performs matching on the received SEALDD data traffic based on the SEALDD traffic descriptor 1 and the SEALDD traffic descriptor 2. Because the SEALDD traffic descriptor 2 can match SEALDD data traffic 2, the UE OS queries whether a session corresponding to the (DNN, S-NSSAI) combination 2 has been established. If the session has been established, the UE OS maps the SEALDD data traffic 2 to the established session. If the session has not been established, the UE OS initiates the session establishment request message 2 requesting to establish the session. Step 1311b is described by using an example in which the session is not established.

Step 1312b: The SMF sends a session management policy request (SM policy request) message 2 to the PCF, where the session management policy request message 2 includes the (DNN, S-NSSAI) combination 2.

Step 1313b: The PCF sends a session management policy response (SM policy response) message 2 to the SMF, where the session management policy response message 2 includes indication information, and optionally, the session management policy response message further includes a pair identifier.

The indication information (also referred to as a redundant session indication) indicates that the session corresponding to the (DNN, S-NSSAI) combination 1 and the session corresponding to the (DNN, S-NSSAI) combination 2 are redundant sessions for each other.

If both step 1313a and step 1313b carry the pair identifier, the two pair identifiers are the same.

There is no sequence between step 1311a to step 1313a and step 1311b to step 1313b.

Step 1314: The SMF establishes a session 1 based on the session establishment request message 1, and establishes a session 2 based on the session establishment request message 2.

In addition, the SMF determines, based on the indication information, a pair identifier and an RSN 1 that correspond to the session 1, and a pair identifier and an RSN 2 that correspond to the session 2. The pair identifier may be from the PCF, or may be generated by the SMF. The RSN 1 and the RSN 2 are generated by the SMF.

Step 1315 and step 1316 are the same as step 1113 and step 1114.

Step 1315 and step 1316 are optional steps. For details, refer to the descriptions in the embodiment of FIG. 11.

In an alternative manner of step 1315 and step 1316, step 1315 and step 1316 may not be performed, but the following is performed: The SEALDD client sends a request message to the SEALDD server, where the request message includes the address information of the session 1 and the address information of the session 2, and further includes one or more of the identification information of the SEALDD client, the identification information of the SEALDD data traffic 1, the identification information of the SEALDD data traffic 2, and the VAL service information 3. The address information of the session 1 may be carried in a SEALDD traffic descriptor 3, and the SEALDD traffic descriptor 3 may further include the address information 1 of the SEALDD server. The address information of the session 2 may be carried in a SEALDD traffic descriptor 4, and the SEALDD traffic descriptor 4 may further include the address information 2 of the SEALDD server. The SEALDD server may learn of a correspondence between the SEALDD data traffic 1 and the session 1 and a correspondence between the SEALDD data traffic 2 and the session 2 based on the request message, and may further establish a correspondence between the SEALDD data traffic 1, the SEALDD data traffic 2, and the VAL server based on the VAL service information 1 and the VAL service information 3.

Step 1317: The SEALDD server establishes, for the SEALDD client or the VAL client, a connection between the SEALDD server and the VAL server, where the connection is used for sending application data traffic corresponding to the SEALDD data traffic 1 and the SEALDD data traffic 2.

The SEALDD server allocates an address of the SEALDD server used for communication between the SEALDD server and the VAL server. The address is different from an address indicated by the address information 1 of the SEALDD server, and is also different from an address indicated by the address information 2 of the SEALDD server.

When the SEALDD server receives the SEALDD data traffic 1 and the SEALDD data traffic 2, the SEALDD server deduplicates the SEALDD data traffic 1 and the SEALDD data traffic 2, generates application data traffic after the deduplication, and then sends the application data traffic to the VAL server. A source address in the application data traffic is the address that is allocated by the SEALDD server and that is of the SEALDD server used for communication between the SEALDD server and the VAL server.

For a specific implementation process of redundant transmission of the application data traffic after step 1317, refer to the descriptions in the embodiment of FIG. 11.

In the foregoing solution, a SEALDD client establishes two different sessions by using two different (DNN S-NSSAI) combinations, and the SEALDD server notifies the PCF of the two sessions that are redundant sessions for each other. In this solution, no special URSP rule needs to be pre-configured, and no enhancement needs to be performed on the UE OS or network adapter. However, different (DNN S-NSSAI) combinations need to be allocated to two data traffic of the SEALDD server. Therefore, a high requirement is imposed on deployment of the SEALDD server, but a small change is made to the UE.

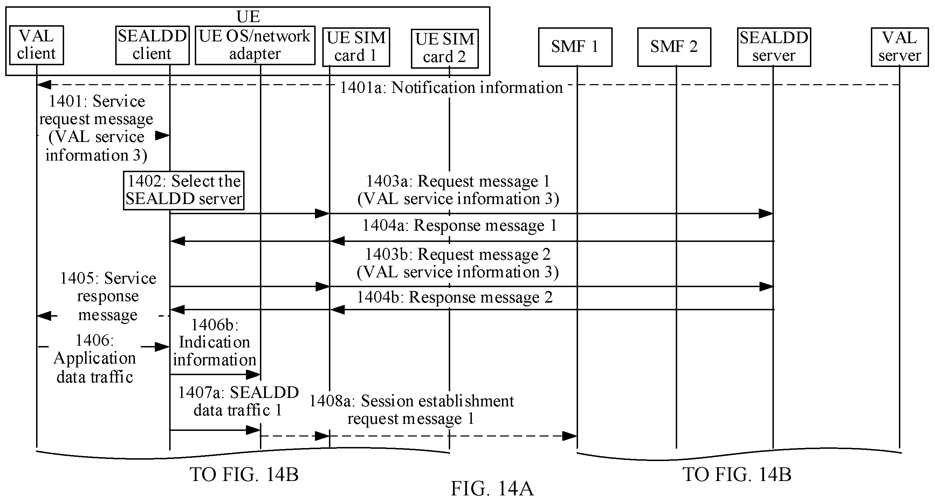

FIG. 14A and FIG. 14B are a schematic flowchart of a communication method according to an embodiment of this application. The method includes the following steps.

Step 1401a is the same as step 1104a.

Step 1401a is an optional step.

Step 1401 and step 1402 are the same as step 1104 and step 1105.

Step 1403a: The SEALDD client sends a request message 1 to the SEALDD server by using a session of a SIM card 1 of the UE, where the request message 1 includes VAL service information 3. The SIM card 1 belongs to a PLMN 1.

The request message 1 is for requesting to establish a SEALDD data transmission connection, and the connection is used for transmitting a VAL service corresponding to the VAL service information 3. Optionally, the request message 1 further requests end-to-end redundant transmission.

Optionally, the request message 1 further includes address information of a session of a SIM card 2 of the UE.

Optionally, the request message 1 further includes identification information of the SEALDD client and/or identification information of SEALDD data traffic 1. The identification information of the SEALDD client identifies the SEALDD client, and the identification information of the SEALDD data traffic 1 identifies SEALDD data traffic corresponding to the VAL service information 3.

Step 1404a: The SEALDD server sends a response message 1 to the SEALDD client, where the response message 1 includes address information 1 of the SEALDD server, and optionally, the response message 1 further includes the VAL service information 3.

The response message 1 may be a connection establishment response message.

In an implementation method, the SEALDD server determines, based on the VAL service information 3 and VAL service information 1, the address information 1 that is of the SEALDD server and that is allocated to the VAL service. The VAL service information 3 and the VAL service information 1 correspond to the same VAL service.

In an implementation method, the address information 1 of the SEALDD server is included in a SEALDD traffic descriptor 1; in other words, the response message 1 includes the SEALDD traffic descriptor 1, where the SEALDD traffic descriptor 1 includes the address information 1 of the SEALDD server.

Step 1403b: The SEALDD client sends a request message 2 to the SEALDD server by using the session of the SIM card 2 of the UE, where the request message 2 includes the VAL service information 3. The SIM card 2 belongs to a PLMN 2.

The request message 2 is for requesting to establish a SEALDD data transmission connection, and the connection is used for transmitting the VAL service corresponding to the VAL service information 3. Optionally, the request message 2 further requests end-to-end redundant transmission.

Optionally, the request message 2 further includes address information of the session of the SIM card 1 of the UE.

Optionally, the request message 2 further includes the identification information of the SEALDD client and/or identification information of SEALDD data traffic 2. The identification information of the SEALDD client identifies the SEALDD client, and the identification information of the SEALDD data traffic 2 identifies SEALDD data traffic corresponding to the VAL service information 3.

Step 1404b: The SEALDD server sends a response message 2 to the SEALDD client, where the response message 2 includes address information 2 of the SEALDD server, and optionally, the response message 2 further includes the VAL service information 3.

The response message 2 may be a connection establishment response message.

In an implementation method, the SEALDD server determines, based on the VAL service information 3 and the VAL service information 1, the address information 2 that is of the SEALDD server and that is allocated to the VAL service. The VAL service information 3 and the VAL service information 1 correspond to the same VAL service.

In an implementation method, the address information 2 of the SEALDD server is included in a SEALDD traffic descriptor 2; in other words, the response message 2 includes the SEALDD traffic descriptor 2, where the SEALDD traffic descriptor 2 includes the address information 2 of the SEALDD server.

There is no sequence between step 1403a and step 1404a and step 1403b and step 1404b.

Step 1405: The SEALDD client sends a service response message to the VAL client.

Step 1405 is an optional step.

Step 1406: The VAL client sends application data traffic to the SEALDD client.

The application data traffic includes one or more data packets. Each data packet includes a packet header and data. The packet header includes a source address (namely, an IP address of the VAL client), a source port number (namely, a port number of the VAL client), a destination address (namely, an IP address of the VAL server), a destination port number (namely, a port number of the VAL server), and a VAL transport protocol.

The IP address of the VAL client may be an IP address of the SIM card 1 of the UE, an IP address of the SIM card 2 of the UE, or another IP address. The port number of the VAL client may be a port number of the SIM card 1 of the UE, a port number of the SIM card 2 of the UE, or another port number.

Step 1406b: The SEALDD client sends indication information to a UE OS or a network adapter, where the indication information indicates that the SEALDD data traffic 1 and the SEALDD data traffic 2 are respectively sent through the SIM card 1 and the SIM card 2.

The SIM card 1 and the SIM card 2 correspond to different PLMNs, that is, the PLMN 1 is different from the PLMN 2.

Step 1407a: The SEALDD client sends the SEALDD data traffic 1 to the UE OS.

The SEALDD client determines the VAL service information 3 based on application data traffic from the VAL client; then determines the SEALDD address information 1 based on the VAL service information 3; then maps the application data traffic to the SEALDD data traffic 1, where a destination address of the SEALDD data traffic 1 corresponds to the SEALDD address information 1; and then sends the SEALDD data traffic 1 to the UE OS.

In an implementation method, the SEALDD client adds a packet header to the data packet of the application data traffic, to obtain the SEALDD data traffic 1. For example, the newly added packet header in the data packet of the application data traffic carries the address information 1 of the SEALDD server, a SEALDD transport protocol, a sequence number of the data packet, and further carries the identification information of the SEALDD client and/or the identification information of the SEALDD data traffic 1, to obtain the SEALDD data traffic 1. The address information 1 of the SEALDD server in the newly added packet header is used as a destination address; or is used as a destination address and a destination port number. The sequence number in the newly added packet header indicates a sending sequence of the data packet in the SEALDD data traffic 1, and different data packets in the SEALDD data traffic 1 have different sequence numbers. The identification information of the SEALDD client in the newly added packet header identifies that the SEALDD data traffic 1 is sent through the SEALDD client indicated by the identification information of the SEALDD client. The identification information of the SEALDD data traffic 1 in the newly added packet header indicates the SEALDD data traffic 1.

In another implementation method, the SEALDD client modifies the packet header of the data packet of the application data traffic, to obtain the SEALDD data traffic 1. For example, the destination address (or the destination address and the destination port number) in the packet header of the data packet of the application data traffic is replaced from the address information of the VAL server to the address information 1 of the SEALDD server, a transport protocol in the packet header of the data packet of the application data traffic is replaced from the VAL transport protocol to the SEALDD transport protocol, the identification information of the SEALDD client and/or the identification information of the SEALDD data traffic 1 are/is added to the packet header, and optionally, a sequence number is further newly added to the packet header, so as to obtain the SEALDD data traffic 1.

Step 1408a: The UE OS sends a session establishment request message 1 to an SMF 1 through the SIM card 1 of the UE, where the session establishment request message 1 includes a (DNN, S-NSSAI) combination 1.

The UE OS performs matching on the received SEALDD data traffic. Because the SEALDD traffic descriptor 1 can match the SEALDD data traffic 1, the SIM card 1 of the UE queries whether a session corresponding to the (DNN, S-NSSAI) combination 1 in a URSP rule 1 has been established. If the session has been established, the SIM card 1 of the UE maps the SEALDD data traffic 1 to the established session. If the session has not been established, the SIM card 1 of the UE initiates the session establishment request message 1 requesting to establish the session. Step 1408a is described by using an example in which the session is not established. The URSP rule 1 is from a PCF.

Step 1409a: The SMF 1 establishes a session 1 based on the session establishment request message 1.

Step 1407b: The SEALDD client sends the SEALDD data traffic 2 to the UE OS.

The SEALDD client determines the VAL service information 3 based on application data traffic from the VAL client; then determines the SEALDD address information 2 based on the VAL service information 3; then maps the application data traffic to the SEALDD data traffic 2, where a destination address of the SEALDD data traffic 2 corresponds to the SEALDD address information 2; and then sends the SEALDD data traffic 2 to the UE OS.

In an implementation method, the SEALDD client adds a packet header to the data packet of the application data traffic, to obtain the SEALDD data traffic 2. For example, the newly added packet header in the data packet of the application data traffic carries the address information 2 of the SEALDD server, a SEALDD transport protocol, a sequence number of the data packet, and further carries the identification information of the SEALDD client and/or the identification information of the SEALDD data traffic 2, to obtain the SEALDD data traffic 2. The address information 2 of the SEALDD server in the newly added packet header is used as a destination address; or is used as a destination address and a destination port number. The sequence number in the newly added packet header indicates a sending sequence of the data packet in the SEALDD data traffic 2, and different data packets in the SEALDD data traffic 2 have different sequence numbers. The identification information of the SEALDD client in the newly added packet header identifies that the SEALDD data traffic 2 is sent through the SEALDD client indicated by the identification information of the SEALDD client. The identification information of the SEALDD data traffic 2 in the newly added packet header indicates the SEALDD data traffic 2.

In another implementation method, the SEALDD client modifies the packet header of the data packet of the application data traffic, to obtain the SEALDD data traffic 2. For example, the destination address (or the destination address and the destination port number) in the packet header of the data packet of the application data traffic is replaced from the address information of the VAL server to the address information 2 of the SEALDD server, the transport protocol in the packet header of the data packet of the application data traffic is replaced from the VAL transport protocol to the SEALDD transport protocol, the identification information of the SEALDD client and/or the identification information of the SEALDD data traffic 2 are/is added to the packet header, and optionally, a sequence number is further newly added to the packet header, so as to obtain the SEALDD data traffic 2.

Step 1408b: The UE OS sends a session establishment request message 2 to an SMF 2 through the SIM card 2 of the UE, where the session establishment request message 2 includes a (DNN, S-NSSAI) combination 2.

The UE OS performs matching on the received SEALDD data traffic. Because the SEALDD traffic descriptor 2 can match the SEALDD data traffic 2, the SIM card 2 of the UE queries whether a session corresponding to the (DNN, S-NSSAI) combination 2 in a URSP rule 2 has been established. If the session has been established, the SIM card 2 of the UE maps the SEALDD data traffic 2 to the established session. If the session has not been established, the SIM card 2 of the UE initiates the session establishment request message 2 requesting to establish the session. Step 1408b is described by using an example in which the session is not established. The URSP rule 2 is from the PCF.

The (DNN, S-NSSAI) combination 2 in the URSP rule 2 and the (DNN, S-NSSAI) combination 1 in the URSP rule 1 correspond to a same PLMN or different public land mobile networks (public land mobile networks, PLMNs).

Step 1409b: The SMF 2 establishes a session 2 based on the session establishment request message 2.

It should be noted that step 1408a, step 1409a, step 1408b, and step 1409b are all optional steps. For example, the proxy client may transmit the SEALDD data traffic 1 by using the session used in the negotiation process in step 1403a and step 1404a. In this case, a new session may not need to be created for the SEALDD data traffic 1, that is, step 1408a and step 1409a do not need to be performed. Similarly, the proxy client may transmit the SEALDD data traffic 2 by using the session used in the negotiation process in step 1403b and step 1404b. In this case, a new session may not need to be created for the SEALDD data traffic 2, that is, step 1408b and step 1409b do not need to be performed.

Step 1410a is the same as step 1113.

Step 1410b is the same as step 1114.

It should be noted that, the foregoing step 1410a and step 1410b are optional steps. When the SEALDD data traffic 1 is obtained by modifying the packet header of the data packet of the application data traffic in step 1407a, and step 1408a and step 1409a are further performed, step 1410a is performed. Similarly, when the SEALDD data traffic 2 is obtained by modifying the packet header of the data packet of the application data traffic in step 1407b, and step 1408b and step 1409b are further performed, step 1410b is performed.

In an alternative manner of step 1410a and step 1410b, step 1410a and step 1410b may not be performed, but the following is performed: The SEALDD client sends a request message to the SEALDD server, where the request message includes address information of the session 1 and address information of the session 2, and further includes one or more of the identification information of the SEALDD client, the identification information of the SEALDD data traffic 1, the identification information of the SEALDD data traffic 2, and the VAL service information 3. The address information of the session 1 may be carried in a SEALDD traffic descriptor 3, and the SEALDD traffic descriptor 3 may further include the address information 1 of the SEALDD server. The address information of the session 2 may be carried in a SEALDD traffic descriptor 4, and the SEALDD traffic descriptor 4 may further include the address information 2 of the SEALDD server. The SEALDD server may learn of a correspondence between the SEALDD data traffic 1 and the session 1 and a correspondence between the SEALDD data traffic 2 and the session 2 based on the request message, and may further establish a correspondence between the SEALDD data traffic 1, the SEALDD data traffic 2, and the VAL server based on the VAL service information 1 and the VAL service information 3.

Step 1411: The SEALDD server establishes, for the SEALDD client or the VAL client, a connection between the SEALDD server and the VAL server, where the connection is used for sending application data traffic corresponding to the SEALDD data traffic 1 and the SEALDD data traffic 2.

The SEALDD server allocates an address of the SEALDD server used for communication between the SEALDD server and the VAL server. The address is different from an address indicated by the address information 1 of the SEALDD server, and is also different from an address indicated by the address information 2 of the SEALDD server.

When the SEALDD server receives the SEALDD data traffic 1 and the SEALDD data traffic 2, the SEALDD server deduplicates the SEALDD data traffic 1 and the SEALDD data traffic 2, generates application data traffic after the deduplication, and then sends the application data traffic to the VAL server. A source address in the application data traffic is the address that is allocated by the SEALDD server and that is of the SEALDD server used for communication between the SEALDD server and the VAL server.

Subsequently, redundant transmission of the application data traffic between the VAL client and the VAL server may be implemented through the SEALDD client and the SEALDD server. For example, in an uplink direction, the VAL client sends application data traffic to the SEALDD client, the SEALDD client maps the application data traffic to the two pieces of SEALDD data traffic, namely, the SEALDD data traffic 1 and the SEALDD data traffic 2, based on the SEALDD traffic descriptor 1 and the SEALDD traffic descriptor 2 that correspond to the application data traffic, or based on the address information 1 of the SEALDD server and the address information 2 of the SEALDD server that correspond to the application data traffic, where the SEALDD data traffic 1 and the SEALDD data traffic 2 are redundant data traffic for each other. The SEALDD client sends the SEALDD data traffic 1 and the SEALDD data traffic 2 to the UE OS. Then, the UE OS sends the SEALDD data traffic 1 to the SEALDD server by using the session 1 of the SIM card 1, and the UE OS sends the SEALDD data traffic 2 to the SEALDD server by using the session 2 of the SIM card 2, where the session 1 and the session 2 are redundant sessions for each other. Then, the SEALDD server deduplicates and reorders the data packets based on a sequence number in the data packet of the SEALDD data traffic 1 and a sequence number in the data packet of the SEALDD data traffic 2, to obtain a deduplicated SEALDD data traffic, and maps the SEALDD data traffic to the application data traffic. Then, the SEALDD server determines an address of the VAL server based on a SEALDD traffic descriptor locally stored in the SEALDD server; or determines an address of the VAL server based on the address information 1 of the SEALDD server and a correspondence between the address information 2 of the SEALDD server and the VAL server. Optionally, the SEALDD server determines, based on the SEALDD traffic descriptor locally stored in the SEALDD server or based on the address information of the session 1 and the address information of the session 2, to send the application data traffic on the connection established in step 1114. Then, the application data traffic is sent to the VAL server. In an implementation method, that the SEALDD server restores the SEALDD data traffic to the application data traffic may be: deleting a packet header added by the SEALDD client to the data packet of the SEALDD data traffic, where the packet header includes information such as the address information 1 of the SEALDD server (or the address information 2 of the SEALDD server), the SEALDD transport protocol, and the sequence number of the data packet. In another implementation method, that the SEALDD server restores the SEALDD data traffic to the application data traffic may be: The SEALDD server replaces a destination address (or a destination address and a destination port number) in the data packet of the SEALDD data traffic from the address information 1 of the SEALDD server (or the address information 2 of the SEALDD server) to the address information of the VAL server. Processing in a downlink direction is opposite to that in the uplink direction, and is not described herein again.

In the foregoing solution, the UE uses the two independent SIM cards to separately establish the sessions, but uses the same SEALDD client and the same SEALDD server. The UE performs dual session transmission through connections of the two PLMNs, and does not need to perform additional modification on a function and a network function of the UE, provided that the SEALDD client and the SEALDD server can maintain an association relationship between the sessions of the two PLMNs.

In embodiments of this application, a SEALDD traffic descriptor (SEALDD traffic descriptor) is also referred to as identification information of SEALDD traffic (identifiers of the SEALDD traffic), or referred to as a packet filter of the SEALDD traffic (packet filter of the SEALDD traffic), or has another name. This is not limited in this application.

In embodiments of this application, a traffic descriptor (traffic descriptor) is also referred to as identification information of traffic (identifiers of the traffic), or is referred to as a packet filter of the traffic (packet filter of the traffic), or has another name. This is not limited in this application.

It may be understood that, to implement functions in the foregoing embodiments, the proxy client, the proxy server, or the policy control network element includes a corresponding hardware structure and/or software module for performing each function. A person skilled in the art should be easily aware that, in combination with the units and the method steps in the examples described in the embodiments disclosed in this application, this application can be implemented by using hardware or a combination of hardware and computer software. Whether a function is performed by using hardware or hardware driven by computer software depends on particular application scenarios and design constraints of the technical solutions.

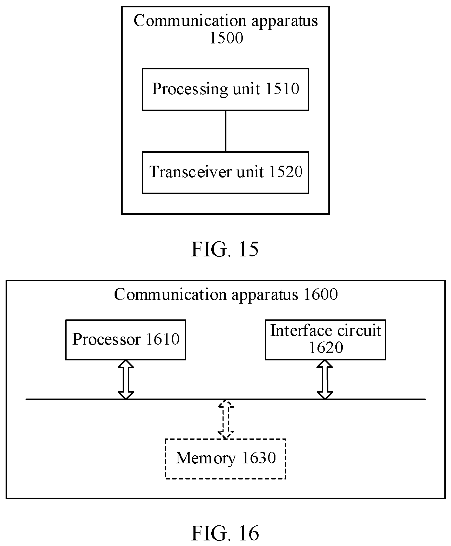

FIG. 15 and FIG. 16 are schematic diagrams of structures of possible communication apparatuses according to embodiments of this application. The communication apparatuses may be configured to implement the functions of the proxy client, the proxy server, or the policy control network element in the foregoing method embodiments, and therefore can also be achieve beneficial effects of the foregoing method embodiments. In embodiments of this application, the communication apparatus may be a proxy client, a proxy server, or a policy control network element, or may be a module (for example, a chip) used in the proxy client, a module (for example, a chip) used in the proxy server, or a module (for example, a chip) used in the policy control network element.

As shown in FIG. 15, the communication apparatus 1500 includes a processing unit 1510 and a transceiver unit 1520. The communication apparatus 1500 is configured to implement the functions of the proxy client, the proxy server, or the policy control network element in the foregoing method embodiments.

When the communication apparatus 1500 is configured to implement the function of the proxy client in the foregoing method embodiments, the transceiver unit 1520 is configured to receive application data traffic from an application client of a terminal device; the processing unit 1510 is configured to determine first data traffic and second data traffic based on the application data traffic, where the first data traffic and the second data traffic are redundant data traffic for each other, and the first data traffic, the second data traffic, and the application data traffic include same data; and the transceiver unit 1520 is configured to: send the first data traffic to a proxy server by using a first session, and send the second data traffic to the proxy server by using a second session, where the first session and the second session are redundant sessions for each other.

In a possible implementation method, the processing unit 1510 is configured to: determine the first data traffic based on a first traffic descriptor and the application data traffic, where the first traffic descriptor includes first address information of the proxy server, a destination address of the first data traffic matches the first address information, and the first traffic descriptor indicates a data feature of the first data traffic; and determine the second data traffic based on a second traffic descriptor and the application data traffic, where the second traffic descriptor includes second address information of the proxy server, a destination address of the second data traffic matches the second address information, and the second traffic descriptor indicates a data feature of the second data traffic.

In a possible implementation method, the transceiver unit 1520 is configured to send a request message to the proxy server, where the request message includes an application traffic descriptor, the application traffic descriptor includes address information of an application server, the application server is configured to receive the application data traffic, and the application traffic descriptor indicates a data feature of the application data traffic.

In a possible implementation method, the request message further includes the first traffic descriptor and the second traffic descriptor; or the transceiver unit 1520 is configured to receive the first traffic descriptor and the second traffic descriptor from the proxy server.

In a possible implementation method, the request message further includes identification information of the proxy client; and/or the request message further includes identification information of the first data traffic and identification information of the second data traffic.

In a possible implementation method, the transceiver unit 1520 is configured to: send the identification information of the proxy client and/or the identification information of the first data traffic to the proxy server by using the first session; and send the identification information of the proxy client and/or the identification information of the second data traffic to the proxy server by using the second session.

In a possible implementation method, the transceiver unit 1520 is configured to send the first data traffic and the second data traffic to an operating system or a network adapter of the terminal device; the operating system or the network adapter of the terminal device sends a first session establishment request message to a first session management network element, where the first session establishment request message is for requesting to establish the first session used for transmitting the first data traffic; and the operating system or the network adapter of the terminal device sends a second session establishment request message to a second session management network element, where the second session establishment request message is for requesting to establish the second session used for transmitting the second data traffic, and the second session management network element and the first session management network element are located in different public land mobile networks PLMNs.

In a possible implementation method, the proxy client is a client that supports a vertical industry application in distributing, storing, and transmitting application layer content or data, and the proxy server is a server configured to support a vertical industry application in distributing, storing, and transmitting application layer content or data.

In a possible implementation method, the transceiver unit 1520 is configured to send the first data traffic and the second data traffic to the operating system or the network adapter; the operating system or the network adapter sends a first session establishment request message to a first session management network element, where the first session establishment request message is for requesting to establish the first session used for transmitting the first data traffic; and the operating system or the network adapter sends a second session establishment request message to a second session management network element, where the second session establishment request message is for requesting to establish the second session used for transmitting the second data traffic.

In a possible implementation method, the operating system or the network adapter receives a first route selection policy and a second route selection policy from a policy control network element, where the first route selection policy includes the first traffic descriptor and a first (DNN, S-NSSAI) combination, the first traffic descriptor identifies the first data traffic, the second route selection policy includes the second traffic descriptor and a second (DNN, S-NSSAI) combination, and the second traffic descriptor identifies the second data traffic; if determining that the first route selection policy matches the first data traffic, the operating system or the network adapter sends the first session establishment request message to the first session management network element, where the first session establishment request message includes the first (DNN, S-NSSAI) combination; and if determining that the second route selection policy matches the second data traffic, the operating system or the network adapter sends the second session establishment request message to the second session management network element, where the second session establishment request message includes the second (DNN, S-NSSAI) combination.

In a possible implementation method, the first route selection policy further includes a pair identifier and a first redundancy sequence number, and the first session establishment request message further includes the pair identifier and the first redundancy sequence number; and the second route selection policy further includes the pair identifier and a second redundancy sequence number, and the second session establishment request message further includes the pair identifier and the second redundancy sequence number.

When the communication apparatus 1500 is configured to implement the function of the proxy server in the foregoing method embodiments, the transceiver unit 1520 is configured to receive a request message from a proxy client of a terminal device, where the request message includes an application traffic descriptor, the application traffic descriptor includes address information of an application server, the application server is configured to receive application data traffic, and the application traffic descriptor indicates a data feature of the application data traffic; and the processing unit 1510 is configured to establish a correspondence between the application traffic descriptor, a first traffic descriptor, and a second traffic descriptor, where the first traffic descriptor indicates a data feature of first data traffic, the second traffic descriptor indicates a data feature of second data traffic, the first data traffic and the second data traffic are redundant data traffic for each other, and the first data traffic, the second data traffic, and the application data traffic include same data.

In a possible implementation method, the request message further includes the first traffic descriptor and the second traffic descriptor; or the transceiver unit 1520 is configured to send the first traffic descriptor and the second traffic descriptor to the proxy client.

In a possible implementation method, the request message further includes identification information of the proxy client; and/or the request message further includes identification information of the first data traffic and identification information of the second data traffic.

In a possible implementation method, the transceiver unit 1520 is configured to: receive the identification information of the proxy client and/or the identification information of the first data traffic from the proxy client by using a first session, where the first session is used for transmitting the first data traffic; and receive the identification information of the proxy client and/or the identification information of the second data traffic from the proxy client by using a second session, where the second session is used for transmitting the second data traffic, and the first session and the second session are redundant sessions for each other.

In a possible implementation method, the transceiver unit 1520 is configured to send a request message to a policy control network element, where the request message includes the first traffic descriptor and the second traffic descriptor.

In a possible implementation method, the request message further includes indication information, and the indication information indicates that the first data traffic corresponding to the first traffic descriptor and the second data traffic corresponding to the second traffic descriptor are redundant data traffic for each other.

In a possible implementation method, the request message further includes a first (DNN, S-NSSAI) combination corresponding to the first traffic descriptor and a second (DNN, S-NSSAI) combination corresponding to the second traffic descriptor, and the first (DNN, S-NSSAI) combination is different from the second (DNN, S-NSSAI) combination.

In a possible implementation method, the request message requests the policy control network element to generate a user equipment route selection policy rule corresponding to the first traffic descriptor and a user equipment route selection policy rule corresponding to the second traffic descriptor.

In a possible implementation method, the transceiver unit 1520 is configured to receive the first data traffic and the second data traffic from the proxy client; the processing unit 1510 is configured to: deduplicate, based on the correspondence between the first traffic descriptor and the second traffic descriptor, the first data traffic that matches the first traffic descriptor and the second data traffic that matches the second traffic descriptor, to obtain deduplicated data traffic; and determine the application data traffic based on the deduplicated data traffic and the correspondence between the application traffic descriptor, the first traffic descriptor, and the second traffic descriptor; and the transceiver unit 1520 is configured to send the application data traffic to the application server corresponding to the application traffic descriptor.

When the communication apparatus 1500 is configured to implement the function of the proxy server in the foregoing method embodiments, the transceiver unit 1520 is configured to: receive a first request message from a proxy client of a terminal device, where the first request message includes an application traffic descriptor and address information of a first session of the terminal device, the application traffic descriptor includes address information of an application server, the application server is configured to receive application data traffic, and the application traffic descriptor indicates a data feature of the application data traffic; and receive a second request message from the proxy client, where the second request message includes the application traffic descriptor and address information of a second session of the terminal device; and the processing unit 1510 is configured to establish a correspondence between the application traffic descriptor, a first traffic descriptor, and a second traffic descriptor, where the first traffic descriptor indicates a data feature of first data traffic, the first traffic descriptor includes the address information of the second session, the second traffic descriptor indicates a data feature of second data traffic, the second traffic descriptor includes the address information of the first session, the first data traffic and the second data traffic are redundant data traffic for each other, and the first data traffic, the second data traffic, and the application data traffic include same data.

In a possible implementation method, the first request message further includes the first traffic descriptor; or the proxy server sends the first traffic descriptor to the terminal device.

In a possible implementation method, the second request message further includes the second traffic descriptor; or the transceiver unit 1520 is configured to send the second traffic descriptor to the proxy client.

In a possible implementation method, the first request message further includes identification information of the proxy client and/or identification information of the first data traffic; and the second request message further includes the identification information of the proxy client and/or identification information of the second data traffic.

In a possible implementation method, the transceiver unit 1520 is configured to: receive the identification information of the proxy client and/or the identification information of the first data traffic from the proxy client by using the first session, where the first session is used for transmitting the first data traffic; and receive the identification information of the proxy client and/or the identification information of the second data traffic from the proxy client by using the second session, where the second session is used for transmitting the second data traffic, and the first session and the second session are redundant sessions for each other.

In a possible implementation method, the transceiver unit 1520 is configured to receive the first data traffic and the second data traffic from the proxy client; the processing unit 1510 is configured to: deduplicate, based on the correspondence between the first traffic descriptor and the second traffic descriptor, the first data traffic that matches the first traffic descriptor and the second data traffic that matches the second traffic descriptor, to obtain deduplicated data traffic; and determine the application data traffic based on the deduplicated data traffic and the correspondence between the application traffic descriptor, the first traffic descriptor, and the second traffic descriptor; and the transceiver unit 1520 is configured to send the application data traffic to the application server corresponding to the application traffic descriptor.

When the communication apparatus 1500 is configured to implement the function of the policy control network element in the foregoing method embodiments, the transceiver unit 1520 is configured to: receive a first request message from a session management network element, where the first request message includes a first (DNN, S-NSSAI) combination; send first indication information to the session management network element, where the first indication information indicates that a session corresponding to the first (DNN, S-NSSAI) combination and a session corresponding to a second (DNN, S-NSSAI) combination are redundant sessions for each other, and the first (DNN, S-NSSAI) combination is different from the second (DNN, S-NSSAI) combination; receive a second request message from the session management network element, where the second request message includes the second (DNN, S-NSSAI) combination; and send the first indication information to the session management network element.

In a possible implementation method, the transceiver unit 1520 is configured to: before receiving the first request message from the session management network element, receive second indication information, the first (DNN, S-NSSAI) combination, and the second (DNN, S-NSSAI) combination from a proxy server, where the second indication information indicates that the first (DNN, S-NSSAI) combination and the second (DNN, S-NSSAI) combination are used for redundant transmission of same data.

When the communication apparatus 1500 is configured to implement the function of the proxy client in the foregoing method embodiments, the transceiver unit 1520 is configured to: send a request message to a proxy server, where the request message includes application service information, and includes identification information of an application client or identification information of the proxy client, the application service information includes one or more of identification information of an application server, address information of the application server, or identification information of an application service provided by the application server, the application server is configured to send and receive data traffic of the application service, and the request message is for requesting to establish, for the application client, a redundant transmission connection from the proxy client to the proxy server; and receive a response message from the application server, where the response message includes first address information of the proxy server and second address information of the proxy server, and the first address information and the second address information are used for providing redundant transmission for the data traffic of the application service.

In a possible implementation method, the request message further includes identification information of first data traffic and identification information of second data traffic, the first data traffic and the second data traffic are redundant data traffic for each other, and the first data traffic, the second data traffic, and the data traffic of the application service include same data.

In a possible implementation method, the first address information matches the first data traffic, and the second address information matches the second data traffic.

In a possible implementation method, that the response message includes first address information of the proxy server and second address information of the proxy server is specifically: The response message includes a first traffic descriptor and a second traffic descriptor, the first traffic descriptor includes the first address information, and the second traffic descriptor includes the second address information.

In a possible implementation method, the first traffic descriptor further includes a data transport protocol of the first data traffic, the second traffic descriptor further includes a data transport protocol of the second data traffic, and the data transport protocol of the first data traffic is the same as the data transport protocol of the second data traffic.

In a possible implementation method, the processing unit 1510 is configured to: trigger establishment of a first session based on the first traffic descriptor, where the first session is used for transmitting the first data traffic; and the terminal device triggers establishment of a second session based on the second traffic descriptor, where the second session is used for transmitting the second data traffic, and the first session and the second session are redundant sessions for each other.

In a possible implementation method, the processing unit 1510 is configured to: trigger establishment of a first session based on the first address information, where the first session is used for transmitting the first data traffic; and the terminal device triggers establishment of a second session based on the second address information, where the second session is used for transmitting the second data traffic, and the first session and the second session are redundant sessions for each other.

In a possible implementation method, the transceiver unit 1520 is configured to send a first message to the proxy server, where the first message includes address information of the first session and address information of the second session.

In a possible implementation method, that the first message includes address information of the first session and address information of the second session is specifically: The first message includes a third traffic descriptor and a fourth traffic descriptor, the third traffic descriptor includes the address information of the first session, and the fourth traffic descriptor includes the address information of the second session.

In a possible implementation method, the first message further includes the identification information of the application client and/or the identification information of the proxy client, where both the first session and the second session are associated with the application client and/or the proxy client.

In a possible implementation method, the first message further includes the identification information of the first data traffic and the identification information of the second data traffic; the first data traffic and the second data traffic are redundant data traffic for each other; and the first data traffic, the second data traffic, and the data traffic of the application service include same data, where the first session is associated with the first data traffic, and the second session is associated with the second data traffic.

When the communication apparatus 1500 is configured to implement the function of the proxy client in the foregoing method embodiments, the transceiver unit 1520 is configured to receive first application data traffic from an application client of a terminal device; the processing unit 1510 is configured to determine first data traffic and second data traffic based on the first application data traffic, where the first data traffic and the second data traffic are redundant data traffic for each other, and the first data traffic, the second data traffic, and the first application data traffic include same data; and the transceiver unit 1520 is configured to: send the first data traffic to a proxy server by using a first session, and send the second data traffic to the proxy server by using a second session, where the first session and the second session are redundant sessions for each other, where the first data traffic and the first session correspond to first address information of the proxy server, and the second data traffic and the second session correspond to second address information of the proxy server.

In a possible implementation method, the processing unit 1510 is specifically configured to: determine the first data traffic based on the first address information and the first application data traffic; and determine the second data traffic based on the second address information and the first application data traffic.

In a possible implementation method, the processing unit 1510 is specifically configured to determine the first data traffic based on a fifth traffic descriptor and the first application data traffic, where the fifth traffic descriptor includes the first address information and address information of the first session, and the fifth traffic descriptor indicates a data feature of the first data traffic; and the proxy client determines the second data traffic based on a sixth traffic descriptor and the first application data traffic, where the sixth traffic descriptor includes the second address information and address information of the second session, and the sixth traffic descriptor indicates a data feature of the second data traffic.

In a possible implementation method, the processing unit 1510 is further configured to: generate the fifth traffic descriptor based on the first address information and the address information of the first session; and the proxy client generates the sixth traffic descriptor based on the second address information and the address information of the second session.

When the communication apparatus 1500 is configured to implement the function of the proxy client in the foregoing method embodiments, the transceiver unit 1520 is configured to: receive third data traffic from a proxy server by using a first session, and receive fourth data traffic from the proxy server by using a second session, where the third data traffic and the fourth data traffic are redundant data traffic for each other, the third data traffic corresponds to first address information of the proxy server, the fourth data traffic corresponds to second address information of the proxy server, and the first session and the second session are redundant sessions for each other; the processing unit 1510 is configured to determine second application data traffic based on the third data traffic and the fourth data traffic, where the third data traffic, the fourth data traffic, and the second application data traffic include same data; and the transceiver unit 1520 is configured to send the second application data traffic to an application client of a terminal device.

In a possible implementation method, the processing unit 1510 is specifically configured to deduplicate and reorder the third data traffic and the fourth data traffic to obtain the second application data traffic.

In a possible implementation method, that the proxy client determines second application data traffic based on the third data traffic and the fourth data traffic includes: The proxy client determines the second application data traffic based on the first address information, the second address information, the third data traffic, and the fourth data traffic.

In a possible implementation method, the processing unit 1510 is specifically configured to determine the second application data traffic based on a fifth traffic descriptor, a sixth traffic descriptor, the third data traffic, and the fourth data traffic, where the fifth traffic descriptor includes the first address information and address information of the first session, the fifth traffic descriptor indicates a data feature of first data traffic, the sixth traffic descriptor includes the second address information and address information of the second session, and the sixth traffic descriptor indicates a data feature of second data traffic.

In a possible implementation method, the processing unit 1510 is further configured to: generate the fifth traffic descriptor based on the first address information and the address information of the first session; and the proxy client generates the sixth traffic descriptor based on the second address information and the address information of the second session.

When the communication apparatus 1500 is configured to implement the function of the proxy server in the foregoing method embodiments, the transceiver unit 1520 is configured to: receive a request message from a proxy client of a terminal device, where the request message includes first application service information and includes identification information of an application client or identification information of the proxy client, the first application service information includes one or more of identification information of an application server, address information of the application server, or identification information of an application service provided by the application server, the application server is configured to send and receive data traffic of the application service, and the request message is for requesting to establish, for the application client, a redundant transmission connection from the proxy client to the proxy server; and send a response message to the proxy client, where the response message includes first address information of the proxy server and second address information of the proxy server, and the first address information and the second address information are used for providing redundant transmission for the data traffic of the application service.

In a possible implementation method, the transceiver unit 1520 is further configured to receive second application service information from the application server, where the second application service information includes one or more of the identification information of the application server, the address information of the application server, or the identification information of the application service provided by the application server; and the proxy server allocates the first address information and the second address information based on the second application service information.

In a possible implementation method, the request message further includes identification information of first data traffic and identification information of second data traffic, the first data traffic and the second data traffic are redundant data traffic for each other, and the first data traffic, the second data traffic, and the data traffic of the application service include same data.

In a possible implementation method, the first address information matches the first data traffic, and the second address information matches the second data traffic.

In a possible implementation method, that the response message includes first address information of the proxy server and second address information of the proxy server is specifically: The response message includes a first traffic descriptor and a second traffic descriptor, the first traffic descriptor includes the first address information, and the second traffic descriptor includes the second address information.

In a possible implementation method, the first traffic descriptor further includes a data transport protocol of the first data traffic, the second traffic descriptor further includes a data transport protocol of the second data traffic, and the data transport protocol of the first data traffic is the same as the data transport protocol of the second data traffic.

In a possible implementation method, the transceiver unit 1520 is further configured to send a first message to the proxy server, where the first message includes address information of a first session and address information of a second session, where the first session is used for transmitting the first data traffic, the second session is used for transmitting the second data traffic, and the first session and the second session are redundant sessions for each other.

In a possible implementation method, that the first message includes address information of a first session and address information of a second session is specifically: The first message includes a third traffic descriptor and a fourth traffic descriptor, the third traffic descriptor includes the address information of the first session, and the fourth traffic descriptor includes the address information of the second session.

In a possible implementation method, the first message further includes the identification information of the application client and/or the identification information of the proxy client, where both the first session and the second session are associated with the application client and/or the proxy client.

In a possible implementation method, the first message further includes the identification information of the first data traffic and the identification information of the second data traffic; the first data traffic and the second data traffic are redundant data traffic for each other; and the first data traffic, the second data traffic, and the data traffic of the application service include same data, where the first session is associated with the first data traffic, and the second session is associated with the second data traffic.

In a possible implementation method, the processing unit 1510 is configured to establish a connection between the proxy server and the application server, where the connection is associated with the application client and/or the proxy client.

In a possible implementation method, the processing unit 1510 is configured to establish a connection between the proxy server and the application server, where the connection is associated with the first data traffic and the second data traffic.

When the communication apparatus 1500 is configured to implement the function of the proxy server in the foregoing method embodiments, the transceiver unit 1520 is configured to receive first data traffic and second data traffic from a proxy client, where the first data traffic and the second data traffic are redundant data traffic for each other, the first data traffic, the second data traffic, and first application data traffic include same data, and the first application data traffic comes from an application client of a terminal device; the processing unit 1510 is configured to determine third application data traffic based on the first data traffic and the second data traffic, where the third application data traffic and the first application data traffic include same data; and the transceiver unit 1520, configured to send the third application data traffic to an application server.

In a possible implementation method, the processing unit 1510 is configured to deduplicate and reorder the first data traffic and the second data traffic to obtain the third application data traffic.

In a possible implementation method, the processing unit 1510 is configured to determine the third application data traffic based on first address information of the proxy server, second address information of the proxy server, the first data traffic, and the second data traffic, where the first data traffic corresponds to the first address information, and the second data traffic corresponds to the second address information.

In a possible implementation method, the processing unit 1510 is configured to determine the third application data traffic based on a fifth traffic descriptor, a sixth traffic descriptor, the first data traffic, and the second data traffic, where the fifth traffic descriptor includes the first address information of the proxy server and address information of a first session of the terminal device, the fifth traffic descriptor indicates a data feature of the first data traffic, the sixth traffic descriptor includes the second address information of the proxy server and address information of a second session of the terminal device, the sixth traffic descriptor indicates a data feature of the second data traffic, the first session and the second session are redundant sessions for each other, the first session corresponds to the first data traffic, and the second session corresponds to the second data traffic.

In a possible implementation method, the processing unit 1510 is configured to generate the fifth traffic descriptor based on the first address information and the address information of the first session; and the proxy server generates the sixth traffic descriptor based on the second address information and the address information of the second session.

In a possible implementation method, the transceiver unit 1520 is configured to receive the fifth traffic descriptor and the sixth traffic descriptor from the proxy client.

In a possible implementation method, the processing unit 1510 is configured to determine a target connection between the proxy server and the application server, where the target connection is associated with the proxy client, or is associated with the first data traffic and the second data traffic; and the transceiver unit 1520 is configured to send, for the application client, the third application data traffic to the application server on the target connection.

When the communication apparatus 1500 is configured to implement the function of the proxy server in the foregoing method embodiments, the transceiver unit 1520 is configured to receive fourth application data traffic from an application server; the processing unit 1510 is configured to determine third data traffic and fourth data traffic based on the fourth application data traffic, where the third data traffic and the fourth data traffic are redundant data traffic for each other, and the third data traffic, the fourth data traffic, and the fourth application data traffic include same data; and the transceiver unit 1520 is configured to: send the third data traffic to a proxy client of a terminal device, and send the fourth data traffic to the proxy client, where the third data traffic corresponds to first address information of the proxy server and address information of a first session of the terminal device, the fourth data traffic corresponds to second address information of the proxy server and address information of a second session of the terminal device, and the first session and the second session are redundant sessions for each other.

In a possible implementation method, the processing unit 1510 is configured to determine the third data traffic based on the first address information, the address information of the first session, and the fourth application data traffic; and the proxy server determines the fourth data traffic based on the second address information, the address information of the second session, and the fourth application data traffic.

In a possible implementation method, the processing unit 1510 is configured to determine the third data traffic based on a fifth traffic descriptor and the fourth application data traffic, where the fifth traffic descriptor includes the first address information and the address information of the first session, and the fifth traffic descriptor indicates a data feature of the third data traffic; and the proxy server determines the fourth data traffic based on a sixth traffic descriptor and the fourth application data traffic, where the sixth traffic descriptor includes the second address information and the address information of the second session, and the sixth traffic descriptor indicates a data feature of the fourth data traffic.

In a possible implementation method, the processing unit 1510 is configured to generate the fifth traffic descriptor based on the first address information and the address information of the first session; and the proxy server generates the sixth traffic descriptor based on the second address information and the address information of the second session.

In a possible implementation method, the transceiver unit 1520 is configured to receive the fifth traffic descriptor and the sixth traffic descriptor from the proxy client.

In a possible implementation method, that the transceiver unit 1520 is configured to receive a fourth application data traffic from an application server includes: The proxy server receives, on a target connection, the fourth application data traffic from the application server, where the target connection is associated with the proxy client, or is associated with the third data traffic and the fourth data traffic.

For more detailed descriptions about the processing unit 1510 and the transceiver unit 1520, directly refer to the related descriptions in the method embodiments. Details are not described herein again.

As shown in FIG. 16, the communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to store instructions executed by the processor 1610, or input data required by the processor 1610 to run the instructions, or data generated after the processor 1610 runs the instructions.

When the communication apparatus 1600 is configured to implement the method in the method embodiments, the processor 1610 is configured to implement the function of the processing unit 1510, and the interface circuit 1620 is configured to implement the function of the transceiver unit 1520.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a special-purpose computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes.

## Claims

1. A communication method, comprising:
receiving (601a), by a proxy client of a terminal device, first application data traffic from an application client of the terminal device;
determining (602a), by the proxy client, first data traffic and second data traffic based on the first application data traffic, wherein the first data traffic and the second data traffic are redundant data traffic for each other, and the first data traffic, the second data traffic, and the first application data traffic comprise same data; and wherein the first data traffic corresponds to first address information of a proxy server, and the second data traffic corresponds to second address information of the proxy server;
sending (601d), by the proxy client, a request message to the proxy server, wherein the request message comprises application service information, and comprises identification information of an application client or identification information of the proxy client, the application service information comprises one or more of identification information of an application server, address information of the application server, or identification information of an application service provided by the application server, and the request message is for requesting to establish, for the application client, a redundant transmission connection from the proxy client to the proxy server; and
receiving, by the proxy client, a response message from the proxy server, wherein the response message comprises the first address information of the proxy server and the second address information of the proxy server, and the first address information and the second address information are used for providing redundant transmission for the data traffic of the application service;
wherein the request message further comprises identification information of the first data traffic and identification information of the second data traffic.

2. The method according to claim 1, wherein the first address information matches the first data traffic, and the second address information matches the second data traffic.

3. The method according to any one of claims 1 or 2, wherein that the response message comprises first address information of the proxy server and second address information of the proxy server is specifically:
the response message comprises a first traffic descriptor and a second traffic descriptor, the first traffic descriptor comprises the first address information, and the second traffic descriptor comprises the second address information.

4. The method according to any one of claims 1 to 3, wherein the method further comprises:
triggering, by the terminal device, establishment of a first session based on the first address information, wherein the first session is used for transmitting the first data traffic; and
triggering, by the terminal device, establishment of a second session based on the second address information, wherein the second session is used for transmitting the second data traffic, wherein
the first session and the second session are redundant sessions for each other.

5. A communication method, comprising:
receiving, by a proxy server, a request message from a proxy client of a terminal device, wherein the request message comprises first application service information and comprises identification information of an application client or identification information of the proxy client, the first application service information comprises one or more of identification information of an application server, address information of the application server, or identification information of an application service provided by the application server, and the request message is for requesting to establish, for the application client, a redundant transmission connection from the proxy client to the proxy server; and
sending, by the proxy server, a response message to the proxy client, wherein the response message comprises first address information of the proxy server and second address information of the proxy server, and the first address information and the second address information are used for providing redundant transmission for the data traffic of the application service;
wherein the request message further comprises identification information of first data traffic and identification information of second data traffic, the first data traffic and the second data traffic are redundant data traffic for each other, and the first data traffic, the second data traffic, and the data traffic of the application service comprise same data.

6. The method according to claim 5, wherein the method further comprises:
receiving, by the proxy server, second application service information from the application server, wherein the second application service information comprises one or more of the identification information of the application server, the address information of the application server, or the identification information of the application service provided by the application server; and
allocating, by the proxy server, the first address information and the second address information based on the second application service information.

7. The method according to claim 5 or 6, wherein the method further comprises:
receiving, by the proxy server, a first message from the proxy client, wherein the first message comprises address information of a first session and address information of a second session, wherein
the first session is used for transmitting the first data traffic, the second session is used for transmitting the second data traffic, and the first session and the second session are redundant sessions for each other.

8. The method according to any one of claims 5 to 7, wherein the method further comprises:
receiving (603e), by the proxy server, first data traffic and second data traffic from the proxy client, wherein the first data traffic and the second data traffic are redundant data traffic for each other, the first data traffic, the second data traffic, and first application data traffic comprise same data, and the first application data traffic comes from an application client of a terminal device;
determining (605e), by the proxy server, third application data traffic based on the first data traffic and the second data traffic, wherein the third application data traffic and the first application data traffic comprise same data; and
sending (606e), by the proxy server, the third application data traffic to the application server.

9. The method according to claim 8, wherein the determining (605e), by the proxy server, third application data traffic based on the first data traffic and the second data traffic comprises:
deduplicating and reordering, by the proxy server, the first data traffic and the second data traffic to obtain the third application data traffic.

10. The method according to claim 8 or 9, wherein the determining (605e), by the proxy server, third application data traffic based on the first data traffic and the second data traffic comprises:
determining, by the proxy server, the third application data traffic based on first address information of the proxy server, second address information of the proxy server, the first data traffic, and the second data traffic, wherein the first data traffic corresponds to the first address information, and the second data traffic corresponds to the second address information.

11. The method according to claim 8 or 9, wherein the determining, by the proxy server, third application data traffic based on the first data traffic and the second data traffic comprises:
determining, by the proxy server, the third application data traffic based on a fifth traffic descriptor, a sixth traffic descriptor, the first data traffic, and the second data traffic, wherein
the fifth traffic descriptor comprises first address information of the proxy server and address information of a first session of the terminal device, the fifth traffic descriptor indicates a data feature of the first data traffic, the sixth traffic descriptor comprises second address information of the proxy server and address information of a second session of the terminal device, the sixth traffic descriptor indicates a data feature of the second data traffic, the first session and the second session are redundant sessions for each other, the first session corresponds to the first data traffic, and the second session corresponds to the second data traffic.

12. A communication apparatus (1600), comprising:
a memory (1630), configured to store a computer program; and
a processor (1610), configured to invoke the computer program from the memory (1630) and run the computer program, to perform the method according to any one of claims 1 to 4 or to perform the method according to any one of claims 5 to 11.

## Patentansprüche

1. Kommunikationsverfahren, umfassend:
Empfangen (601a), durch einen Proxy-Client eines Endgerätes, eines ersten Anwendungsdatenverkehrs von einem Anwendungs-Client des Endgerätes;
Bestimmen (602a), durch den Proxy-Client, eines ersten Datenverkehrs und eines zweiten Datenverkehrs basierend auf dem ersten Anwendungsdatenverkehr, wobei der erste Datenverkehr und der zweite Datenverkehr zueinander redundanter Datenverkehr sind und der erste Datenverkehr, der zweite Datenverkehr und der erste Anwendungsdatenverkehr dieselben Daten umfassen; und wobei der erste Datenverkehr ersten Adressinformationen eines Proxy-Servers entspricht und der zweite Datenverkehr zweiten Adressinformationen des Proxy-Servers entspricht;
Senden (601d), durch den Proxy-Client, einer Anforderungsnachricht an den Proxy-Server, wobei die Anforderungsnachricht Anwendungsdienstinformationen umfasst und Identifikationsinformationen eines Anwendungs-Clients oder Identifikationsinformationen des Proxy-Clients umfasst, die Anwendungsdienstinformationen eines oder mehrere von Identifikationsinformationen eines Anwendungsservers, Adressinformationen des Anwendungsservers oder Identifikationsinformationen eines durch den Anwendungsserver bereitgestellten Anwendungsdienstes umfasst und die Anforderungsnachricht zum Anfordern, für den Anwendungs-Client eine redundante Übertragungsverbindung von dem Proxy-Client zu dem Proxy-Server herzustellen, dient; und
Empfangen, durch den Proxy-Client, einer Antwortnachricht von dem Proxy-Server, wobei die Antwortnachricht die ersten Adressinformationen des Proxy-Servers und die zweiten Adressinformationen des Proxy-Servers umfasst und die ersten Adressinformationen und die zweiten Adressinformationen zum Bereitstellen von redundanter Übertragung für den Datenverkehr des Anwendungsdienstes verwendet werden;
wobei die Anforderungsnachricht ferner Identifikationsinformationen des ersten Datenverkehrs und Identifikationsinformationen des zweiten Datenverkehrs umfasst.

2. Verfahren nach Anspruch 1, wobei die ersten Adressinformationen dem ersten Datenverkehr entsprechen und die zweiten Adressinformationen dem zweiten Datenverkehr entsprechen.

3. Verfahren nach einem der Ansprüche 1 oder 2, wobei der Umstand, dass die Antwortnachricht erste Adressinformationen des Proxy-Servers und zweite Adressinformationen des Proxy-Servers umfasst, speziell Folgendes ist:
die Antwortnachricht umfasst einen ersten Verkehrsdeskriptor und einen zweiten Verkehrsdeskriptor, wobei der erste Verkehrsdeskriptor die ersten Adressinformationen umfasst und der zweite Verkehrsdeskriptor die zweiten Adressinformationen umfasst.

4. Verfahren nach einem der Ansprüche 1 bis 3, wobei das Verfahren ferner Folgendes umfasst:
Auslösen, durch das Endgerät, der Herstellung einer ersten Sitzung basierend auf den ersten Adressinformationen, wobei die erste Sitzung zum Übertragen des ersten Datenverkehrs verwendet wird; und
Auslösen, durch das Endgerät, der Herstellung einer zweiten Sitzung basierend auf den zweiten Adressinformationen, wobei die zweite Sitzung zum Übertragen des zweiten Datenverkehrs verwendet wird, wobei
die erste Sitzung und die zweite Sitzung zueinander redundante Sitzungen sind.

5. Kommunikationsverfahren, umfassend:
Empfangen, durch einen Proxy-Server, einer Anforderungsnachricht von einem Proxy-Client eines Endgerätes, wobei die Anforderungsnachricht erste Anwendungsdienstinformationen umfasst und Identifikationsinformationen eines Anwendungs-Clients oder Identifikationsinformationen des Proxy-Clients umfasst, die ersten Anwendungsdienstinformationen eines oder mehrere von Identifikationsinformationen eines Anwendungsservers, Adressinformationen des Anwendungsservers oder Identifikationsinformationen eines durch den Anwendungsserver bereitgestellten Anwendungsdienstes umfasst und die Anforderungsnachricht zum Anfordern, für den Anwendungs-Client eine redundante Übertragungsverbindung von dem Proxy-Client zu dem Proxy-Server herzustellen, dient; und
Senden, durch den Proxy-Server, einer Antwortnachricht an den Proxy-Client, wobei die Antwortnachricht erste Adressinformationen des Proxy-Servers und zweite Adressinformationen des Proxy-Servers umfasst und die ersten Adressinformationen und die zweiten Adressinformationen zum Bereitstellen von redundanter Übertragung für den Datenverkehr des Anwendungsdienstes verwendet werden;
wobei die Anforderungsnachricht ferner Identifikationsinformationen eines ersten Datenverkehrs und Identifikationsinformationen eines zweiten Datenverkehrs umfasst, der erste Datenverkehr und der zweite Datenverkehr zueinander redundanter Datenverkehr sind und der erste Datenverkehr, der zweite Datenverkehr und der Datenverkehr des Anwendungsdienstes dieselben Daten umfassen.

6. Verfahren nach Anspruch 5, wobei das Verfahren ferner Folgendes umfasst:
Empfangen, durch den Proxy-Server, von zweiten Anwendungsdienstinformationen von dem Anwendungsserver, wobei die zweiten Anwendungsdienstinformationen eines oder mehrere der Identifikationsinformationen des Anwendungsservers, der Adressinformationen des Anwendungsservers oder der Identifikationsinformationen des durch den Anwendungsserver bereitgestellten Anwendungsdienstes umfassen; und
Zuweisen, durch den Proxy-Server, der ersten Adressinformationen und der zweiten Adressinformationen basierend auf den zweiten Anwendungsdienstinformationen.

7. Verfahren nach Anspruch 5 oder 6, wobei das Verfahren ferner Folgendes umfasst:
Empfangen, durch den Proxy-Server, einer ersten Nachricht von dem Proxy-Client, wobei die erste Nachricht Adressinformationen einer ersten Sitzung und Adressinformationen einer zweiten Sitzung umfasst, wobei
die erste Sitzung zum Übertragen des ersten Datenverkehrs verwendet wird, die zweite Sitzung zum Übertragen des zweiten Datenverkehrs verwendet wird und die erste Sitzung und die zweite Sitzung zueinander redundante Sitzungen sind.

8. Verfahren nach einem der Ansprüche 5 bis 7, wobei das Verfahren ferner Folgendes umfasst:
Empfangen (603e), durch den Proxy-Server, eines ersten Datenverkehrs und eines zweiten Datenverkehrs von dem Proxy-Client, wobei der erste Datenverkehr und der zweite Datenverkehr zueinander redundanter Datenverkehr sind, der erste Datenverkehr, der zweite Datenverkehr und der erste Anwendungsdatenverkehr dieselben Daten umfassen und der erste Anwendungsdatenverkehr von einem Anwendungs-Client eines Endgerätes stammt;
Bestimmen (605e), durch den Proxy-Server, eines dritten Anwendungsdatenverkehrs basierend auf dem ersten Datenverkehr und dem zweiten Datenverkehr, wobei der dritte Anwendungsdatenverkehr und der erste Anwendungsdatenverkehr dieselben Daten umfassen; und
Senden (606e), durch den Proxy-Server, des dritten Anwendungsdatenverkehrs an den Anwendungsserver.

9. Verfahren nach Anspruch 8, wobei das Bestimmen (605e), durch den Proxy-Server, des dritten Anwendungsdatenverkehrs basierend auf dem ersten Datenverkehr und dem zweiten Datenverkehr Folgendes umfasst:
Deduplizieren und Neuordnen, durch den Proxy-Server, des ersten Datenverkehrs und des zweiten Datenverkehrs, um den dritten Anwendungsdatenverkehr zu erlangen.

10. Verfahren nach Anspruch 8 oder 9, wobei das Bestimmen (605e), durch den Proxy-Server, des dritten Anwendungsdatenverkehrs basierend auf dem ersten Datenverkehr und dem zweiten Datenverkehr Folgendes umfasst:
Bestimmen, durch den Proxy-Server, des dritten Anwendungsdatenverkehrs basierend auf den ersten Adressinformationen des Proxy-Servers, den zweiten Adressinformationen des Proxy-Servers, dem ersten Datenverkehr und dem zweiten Datenverkehr, wobei der erste Datenverkehr den ersten Adressinformationen entspricht und der zweite Datenverkehr den zweiten Adressinformationen entspricht.

11. Verfahren nach Anspruch 8 oder 9, wobei das Bestimmen, durch den Proxy-Server, des dritten Anwendungsdatenverkehrs basierend auf dem ersten Datenverkehr und dem zweiten Datenverkehr Folgendes umfasst:
Bestimmen, durch den Proxy-Server, des dritten Anwendungsdatenverkehrs basierend auf einem fünften Verkehrsdeskriptor, einem sechsten Verkehrsdeskriptor, dem ersten Datenverkehr und dem zweiten Datenverkehr, wobei
der fünfte Verkehrsdeskriptor erste Adressinformationen des Proxy-Servers und Adressinformationen einer ersten Sitzung des Endgerätes umfasst, der fünfte Verkehrsdeskriptor ein Datenmerkmal des ersten Datenverkehrs angibt, der sechste Verkehrsdeskriptor zweite Adressinformationen des Proxy-Servers und Adressinformationen einer zweiten Sitzung des Endgerätes umfasst, der sechste Verkehrsdeskriptor ein Datenmerkmal des zweiten Datenverkehrs angibt, die erste Sitzung und die zweite Sitzung zueinander redundante Sitzungen sind, die erste Sitzung dem ersten Datenverkehr entspricht und die zweite Sitzung dem zweiten Datenverkehr entspricht.

12. Kommunikationsvorrichtung (1600), umfassend:
einen Speicher (1630), der dazu konfiguriert ist, ein Computerprogramm zu speichern; und
einen Prozessor (1610), der dazu konfiguriert ist, das Computerprogramm aus dem Speicher (1630) aufzurufen und das Computerprogramm auszuführen, um das Verfahren nach einem der Ansprüche 1 bis 4 durchzuführen oder das Verfahren nach einem der Ansprüche 5 bis 11 durchzuführen.

## Revendications

1. Procédé de communication, comprenant :
la réception (601a), par un client proxy d'un dispositif terminal, du premier trafic de données d'application à partir d'un client d'application du dispositif terminal ;
la détermination (602a), par le client proxy, du premier trafic de données et du deuxième trafic de données sur la base du premier trafic de données d'application, dans lequel le premier trafic de données et le deuxième trafic de données sont des trafics de données redondants l'un pour l'autre, et le premier trafic de données, le deuxième trafic de données, et le premier trafic de données d'application comprennent les mêmes données ;
et dans lequel le premier trafic de données correspond à de premières informations d'adresse d'un serveur proxy, et le deuxième trafic de données correspond à de secondes informations d'adresse du serveur proxy ;
l'envoi (601d), par le client proxy, d'un message de demande au serveur proxy, dans lequel le message de demande comprend des informations de service d'application, et comprend des informations d'identification d'un client d'application ou des informations d'identification du client proxy, les informations de service d'application comprennent l'une ou plusieurs d'informations d'identification d'un serveur d'application, d'informations d'adresse du serveur d'application, ou d'informations d'identification d'un service d'application fourni par le serveur d'application, et le message de demande vise à demander l'établissement, pour le client d'application, d'une connexion de transmission redondante du client proxy au serveur proxy ; et
la réception, par le client proxy, d'un message de réponse à partir du serveur proxy, dans lequel le message de réponse comprend les premières informations d'adresse du serveur proxy et les secondes informations d'adresse du serveur proxy, et les premières informations d'adresse et les secondes informations d'adresse sont utilisées pour fournir une transmission redondante pour le trafic de données du service d'application ;
dans lequel le message de demande comprend en outre des informations d'identification du premier trafic de données et des informations d'identification du deuxième trafic de données.

2. Procédé selon la revendication 1, dans lequel les premières informations d'adresse correspondent au premier trafic de données, et les secondes informations d'adresse correspondent au deuxième trafic de données.

3. Procédé selon l'une quelconque des revendications 1 ou 2, dans lequel le fait que le message de réponse comprend une première information d'adresse du serveur proxy et une seconde information d'adresse du serveur proxy est spécifiquement :
le message de réponse comprend un premier descripteur de trafic et un second descripteur de trafic, le premier descripteur de trafic comprend les premières informations d'adresse, et le second descripteur de trafic comprend les secondes informations d'adresse.

4. Procédé selon l'une quelconque des revendications 1 à 3, dans lequel le procédé comprend en outre :
le déclenchement, par le dispositif terminal, de l'établissement d'une première session sur la base des premières informations d'adresse, dans lequel la première session est utilisée pour la transmission du premier trafic de données ; et
le déclenchement, par le dispositif terminal, de l'établissement d'une seconde session sur la base des secondes informations d'adresse, dans lequel la seconde session est utilisée pour la transmission du deuxième trafic de données, dans lequel
la première session et la seconde session sont des sessions redondantes l'une pour l'autre.

5. Procédé de communication, comprenant :
la réception, par un serveur proxy, d'un message de demande à partir d'un client proxy d'un dispositif terminal, dans lequel le message de demande comprend des informations de service d'application et comprend des informations d'identification d'un client d'application ou des informations d'identification du client proxy, les premières informations de service d'application comprennent l'une ou plusieurs d'informations d'identification d'un serveur d'application, d'informations d'adresse du serveur d'application, ou d'informations d'identification d'un service d'application fourni par le serveur d'application, et le message de demande vise à demander l'établissement, pour le client d'application, d'une connexion de transmission redondante du client proxy au serveur proxy ; et
l'envoi, par le serveur proxy, d'un message de réponse au client proxy, dans lequel le message de réponse comprend de premières informations d'adresse du serveur proxy et de secondes informations d'adresse du serveur proxy, et les premières informations d'adresse et les secondes informations d'adresse sont utilisées pour fournir une transmission redondante pour le trafic de données du service d'application ;
dans lequel le message de demande comprend en outre des informations d'identification du premier trafic de données et des informations d'identification du deuxième trafic de données, le premier trafic de données et le deuxième trafic de données sont des trafics de données redondants l'un pour l'autre, et le premier trafic de données, le deuxième trafic de données, et le trafic de données du service d'application comprennent les mêmes données.

6. Procédé selon la revendication 5, dans lequel le procédé comprend en outre :
la réception, par le serveur proxy, de secondes informations de service d'application à partir du serveur d'application, dans lequel les secondes informations de service d'application comprennent l'une ou plusieurs d'informations d'identification du serveur d'application, d'informations d'adresse du serveur d'application, ou d'informations d'identification du service d'application fourni par le serveur d'application ; et
l'attribution, par le serveur proxy, de premières informations d'adresse et de secondes informations d'adresse sur la base des secondes informations de service d'application.

7. Procédé selon la revendication 5 ou 6, dans lequel le procédé comprend en outre :
la réception, par le serveur proxy, d'un premier message à partir du client proxy, dans lequel le premier message comprend des informations d'adresse d'une première session et des informations d'adresse d'une seconde session, dans lequel
la première session est utilisée pour transmettre le premier trafic de données, la seconde session est utilisée pour transmettre le deuxième trafic de données, et la première session et la seconde session sont des sessions redondantes l'une pour l'autre.

8. Procédé selon l'une quelconque des revendications 5 à 7, dans lequel le procédé comprend en outre :
la réception (603e), par le serveur proxy, de premier trafic de données et de deuxième trafic de données à partir du client proxy, dans lequel le premier trafic de données et le deuxième trafic de données sont des trafics de données redondants l'un pour l'autre, le premier trafic de données, le deuxième trafic de données, et le premier trafic de données d'application comprennent les mêmes données, et le premier trafic de données d'application provient d'un client d'application d'un dispositif terminal ;
la détermination (605e), par le serveur proxy, de troisième trafic de données d'application sur la base du premier trafic de données et du deuxième trafic de données, dans lequel le troisième trafic de données d'application et le premier trafic de données d'application comprennent les mêmes données ; et
l'envoi (606e), par le serveur proxy, du troisième trafic de données d'application au serveur d'application.

9. Procédé selon la revendication 8, dans lequel la détermination (605e), par le serveur proxy, de troisième trafic de données d'application sur la base du premier trafic de données et du deuxième trafic de données comprend :
la déduplication et la réorganisation, par le serveur proxy, du premier trafic de données et du deuxième trafic de données pour obtenir le troisième trafic de données d'application.

10. Procédé selon la revendication 8 ou 9, dans lequel la détermination (605e), par le serveur proxy, de troisième trafic de données d'application sur la base du premier trafic de données et du deuxième trafic de données comprend :
la détermination, par le serveur proxy, du troisième trafic de données d'application sur la base de premières informations d'adresse du serveur proxy, de secondes informations d'adresse du serveur proxy, de premier trafic de données, et du deuxième trafic de données, dans lequel le premier trafic de données correspond aux premières informations d'adresse, et le deuxième trafic de données correspond aux secondes informations d'adresse.

11. Procédé selon la revendication 8 ou 9, dans lequel la détermination, par le serveur proxy, de troisième trafic de données d'application sur la base du premier trafic de données et du deuxième trafic de données comprend :
la détermination, par le serveur proxy, de troisième trafic de données d'application sur la base d'un cinquième descripteur de trafic, d'un sixième descripteur de trafic, du premier trafic de données, et du deuxième trafic de données, dans lequel
le cinquième descripteur de trafic comprend les informations d'adresse du serveur proxy et les informations d'adresse d'une première session du dispositif terminal, le cinquième descripteur de trafic indique une caractéristique de données du premier trafic de données, le sixième descripteur de trafic comprend de secondes informations d'adresse du serveur proxy et des informations d'adresse d'une seconde session du dispositif terminal, le sixième descripteur de trafic indique une caractéristique de données du deuxième trafic de données, la première session et la seconde session sont des sessions redondantes l'une pour l'autre, la première session correspond au premier trafic de données, et la seconde session correspond au deuxième trafic de données.

12. Appareil de communication (1600), comprenant :
une mémoire (1630), configurée pour stocker un programme informatique ; et
un processeur (1610) configuré pour invoquer le programme informatique à partir de la mémoire (1630) et exécuter le programme informatique, pour réaliser le procédé selon l'une quelconque des revendications 1 à 4 ou pour réaliser le procédé selon l'une quelconque des revendications 5 à 11.
